# EUROPEAN PATENT APPLICATION

(11) **EP 4 783 649 A1**
(43) Date of publication of application: **29.07.2026**
(21) Application number: 24870582.4
(22) Date of filing: 19.09.2024
(51) Int. Cl.: H04W 24/08

(54) **SENSING COMMUNICATION METHOD AND APPARATUS**

(30) Priority: 28.09.2023 CN 202311293529
(71) Applicant: HUAWEI TECHNOLOGIES CO., LTD., Shenzhen 518129 (CN)
(72) Inventor: DU, Rui, Shenzhen, Guangdong 518129 (CN); HUANG, Lei, Shenzhen, Guangdong 518129 (CN); NAREN, Gerile, Shenzhen, Guangdong 518129 (CN); HAN, Xiao, Shenzhen, Guangdong 518129 (CN)
(74) Representative: Pfenning, Meinig & Partner mbB
(86) International application number: PCT/CN2024/119867
(87) International publication number: WO 2025/067038

(57) **Abstract**

A sensing communication method and apparatus are provided and are applied to the field of communication technologies. This application may be applied to a wireless local area network system supporting a next-generation Wi-Fi protocol of IEEE 802.11ax (for example, 802.11be, Wi-Fi 7, or EHT), a next-generation Wi-Fi protocol of IEEE 802.11be (for example, Wi-Fi 8 or UHR), Wi-Fi AI, millimeter wave (mmWave), ultra-wideband (UWB), or sensing (sensing). The method includes: A MAP sensing measurement initiator sends a first request frame, where the first request frame includes a MAP measurement session ID; and receives a first response frame, where the first response frame includes the MAP measurement session ID. After receiving the first request frame, a MAP sensing measurement responder may send the first response frame. This effectively improves flexibility of managing a MAP sensing measurement session.

## Description

This application claims priority to Chinese Patent Application No. 202311293529.2, filed with the China National Intellectual Property Administration on September 28, 2023, and entitled "SENSING COMMUNICATION METHOD AND APPARATUS", which is incorporated herein by reference in its entirety.

### TECHNICAL FIELD

This application relates to the field of communication technologies, and in particular, to a sensing communication method and apparatus.

### BACKGROUND

Institute of electrical and electronics engineers (institute of electrical and electronics engineers, IEEE) 802.11bf is a next-generation wireless standard that focuses on sensing of passive objects (for example, a target does not carry any device). In the 802.11bf standard, a Wi-Fi device may perform corresponding parameter (for example, a speed, a distance, and an angle) estimation and subsequent action/behavior identification on a target based on a signal received by the Wi-Fi device. The 802.11bf standard includes two major standards: a low frequency standard (for example, lower than 7 gigahertz (sub-7 GHz), and implemented mainly according to 802.11ac, 802.11ax, 802.11be, 802.11bn, and a next-generation standard) and a high frequency standard (for example, higher than or equal to 60 GHz, and implemented mainly according to 802.11ad, 802.11ay, and a next-generation standard).

When sensing a target in an overlapping basic service set (overlapping basic service set, OBSS), an access point (access point, AP) may be subject to interference from another device in space, for example, co-channel or adjacent-channel interference, and have poor sensing performance because the sensed target is on an edge of a basic service set (basic service set, BSS). As a result, a measurement result has a large error. However, in a time window used for sensing measurement, the AP keeps performing sensing measurement as long as a communication link is not interrupted. The AP can learn, only after obtaining a sensing measurement report and performing signal processing according to a specific algorithm, that the sensing measurement result has a large error, and can only discard the measurement result, resulting in a sensing task failure. Therefore, the AP may request a plurality of other APs to perform sensing measurement on behalf of the AP. For example, the plurality of APs collaborate with each other. When a sensing result of an AP is unavailable, a sensing result of another AP may be used.

How to improve flexibility of managing multi-AP coordination is a problem being studied by a person skilled in the art.

### SUMMARY

Embodiments of this application provide a sensing communication method and apparatus, to effectively improve flexibility of managing multi-AP (multi-AP, MAP) coordination.

According to a first aspect, an embodiment of this application provides a sensing communication method. The method may be applied to a MAP sensing measurement initiator. The MAP sensing measurement initiator may be a sensing device, or a chip, a functional module, or the like disposed in a sensing device. The method includes:
sending a first request frame, where the first request frame is used to request to initiate a MAP sensing measurement session, the first request frame includes a MAP measurement session identifier (identifier, ID), and the MAP measurement session ID identifies the MAP sensing measurement session initiated by the MAP sensing measurement initiator; and receiving a first response frame that responds to the first request frame, where the first response frame includes the MAP measurement session identifier.

In this embodiment of this application, the first request frame sent by the MAP sensing measurement initiator to a MAP sensing measurement responder carries the MAP measurement session ID, and APs participating in multi-AP coordination can effectively identify a MAP sensing measurement session based on the MAP measurement session ID. Therefore, different MAP measurement session IDs may represent different MAP sensing measurement sessions, thereby effectively improving flexibility of managing the MAP sensing measurement sessions.

According to a second aspect, an embodiment of this application provides a sensing communication method. The method may be applied to a MAP sensing measurement responder. The MAP sensing measurement initiator may be a sensing device, or a chip, a functional module, or the like disposed in a sensing device. The method includes:
receiving a first request frame, where the first request frame is used to request to initiate a MAP sensing measurement session, the first request frame includes a MAP measurement session ID, and the MAP measurement session ID identifies the MAP sensing measurement session initiated by a MAP sensing measurement initiator; and sending a first response frame that responds to the first request frame, where the first response frame includes the MAP measurement session identifier.

With reference to the first aspect or the second aspect, in a possible implementation, the first request frame further includes a parameter that is for the MAP sensing measurement responder to perform a sensing measurement session of the MAP sensing measurement session and that is recommended by the MAP sensing measurement initiator.

With reference to the first aspect or the second aspect, in a possible implementation, the parameter that is used by the MAP sensing measurement responder for the sensing measurement session corresponding to the MAP sensing measurement and that is recommended by the MAP sensing measurement initiator is carried in at least one of the following: a MAP sensing measurement parameters element (MAP sensing measurement parameters elements), a sensing measurement parameters element (sensing measurement parameters element), and an availability window element (availability window element).

In this embodiment of this application, the MAP sensing measurement parameters element may be used to carry a related parameter that is used when the MAP sensing measurement responder establishes a sensing measurement session with a sensing measurement responder corresponding to the MAP sensing measurement responder and that is recommended or required by the MAP sensing measurement initiator to the MAP sensing measurement responder.

With reference to the first aspect or the second aspect, in a possible implementation, the MAP sensing measurement parameters element includes at least one of the following: an element identifier (element ID), a length (length), an element identifier extension (element ID extension), sensing responder addresses (sensing responder addresses), sensing responder identifiers (sensing responder IDs), a MAP request (MAP request), a MAP procedure expiry exponent (MAP procedure expiry exponent), a multi-AP transmission model (MAP transmission model), a sounding phase model (sounding phase model), a number of sensing responders (number of sensing responder), a mandatory number of sensing responders (mandatory number of responder), a preferred responder list (preferred responder list), a number of preferred responders (number of preferred responders), a mandatory number of preferred responders (mandatory preferred responder), and a sensing responder to sensing responder (sensing responder to sensing responder, SR2SR) sounding request (SR2SR sounding request).

With reference to the first aspect or the second aspect, in a possible implementation, the sensing measurement parameters element may include at least one of the following: a bandwidth (bandwidth, BW), a maximum (Max) transmit (transmit, TX) spatial stream (spatial stream, SS) and maximum receive (receive, RX) SS, a maximum transmit space time stream (space time stream, STS) and maximum receive STS, a number of receive antennas (Number of RX Antennas), a number of receive links, a number of transmit antennas, and a number of transmit links.

With reference to the first aspect or the second aspect, in a possible implementation, the first response frame further includes a status code field, and the status code field includes at least one of the following fields: success (success), rejected_with_suggested_changes (rejected_with_suggested_changes), and request_declined (request_declined).

With reference to the first aspect or the second aspect, in a possible implementation, when the status code field carries the rejected_with_suggested_changes field, the first response frame further includes at least one of the MAP sensing measurement parameters element and the sensing measurement parameters element.

In this embodiment of this application, the MAP sensing measurement parameters element and the sensing measurement parameters element in the first response frame may be parameters that are used when the MAP sensing measurement responder establishes a sensing measurement session corresponding to the MAP sensing measurement session and that are recommended by the MAP sensing measurement responder to the MAP sensing measurement initiator.

With reference to the first aspect or the second aspect, in a possible implementation, the first response frame further includes a decline duration field, and the decline duration field is used by the MAP sensing measurement responder to indicate the MAP sensing measurement initiator not to initiate a MAP sensing measurement session (or not to send a request frame of a MAP sensing measurement session) within duration indicated by the decline duration field.

In this embodiment of this application, when the status code field carries the request_declined field, the first response frame may further include the decline duration field. The MAP sensing measurement initiator may learn, based on the decline duration field, that the MAP sensing measurement responder does not want to receive the request frame (for example, the first request frame) of the MAP sensing measurement session again within the duration indicated by the field, thereby improving efficiency of interaction between the MAP sensing measurement initiator and the MAP sensing measurement responder.

The sensing communication methods shown in the first aspect and the second aspect may also be referred to as a method for establishing a MAP sensing measurement session or an establishment method for a MAP sensing measurement session.

According to a third aspect, an embodiment of this application provides a sensing communication method. The method may be applied to a first communication apparatus. The first communication apparatus may include a MAP sensing measurement initiator or a MAP sensing measurement responder. The method includes:

The first communication apparatus generates a termination frame, and the first communication apparatus sends a termination frame to a second communication apparatus, where the termination frame includes one or more MAP measurement session IDs.

In this embodiment of this application, the first communication apparatus may be a MAP sensing measurement initiator, and the second communication apparatus may be a MAP sensing measurement responder; or the first communication apparatus may be a MAP sensing measurement responder, and the second communication apparatus may be a MAP sensing measurement initiator.

In this embodiment of this application, the termination frame indicates a terminated MAP sensing measurement session by including the one or more MAP measurement session IDs, so that the second communication apparatus can clearly learn of a MAP sensing measurement session that is between the second communication apparatus and the first communication apparatus and that needs to be terminated, and flexibility of indicating the terminated MAP sensing measurement session is higher.

According to a fourth aspect, an embodiment of this application provides a sensing communication method. The method may be applied to a second communication apparatus. The second communication apparatus may include a MAP sensing measurement initiator or a MAP sensing measurement responder. The method includes:

The second communication apparatus receives a termination frame, and parses the termination frame, where the termination frame includes one or more MAP measurement session IDs.

With reference to the third aspect or the fourth aspect, in a possible implementation, the termination frame further includes a terminate all MAP measurement sessions field, a value of the terminate all MAP measurement sessions field being a first value indicates to terminate all MAP sensing measurement sessions between the first communication apparatus and the second communication apparatus, and the value of the terminate all MAP measurement sessions field being a second value indicates to terminate a MAP sensing measurement session that is identified by the MAP measurement session ID and that is between the first communication apparatus and the second communication apparatus.

In this embodiment of this application, the terminate all MAP measurement sessions field and the MAP measurement session ID are used to indicate to terminate one MAP sensing measurement session or all the MAP sensing measurement sessions between the first communication apparatus and the second communication apparatus, thereby effectively reducing signaling overheads.

With reference to the third aspect or the fourth aspect, in a possible implementation, the termination frame further includes a MAP measurement session error status (MAP measurement session error status) field, and the MAP measurement session error status field indicates a reason for terminating the MAP sensing measurement session.

With reference to the third aspect or the fourth aspect, in a possible implementation, when a value of the MAP measurement session error status field is a first value, the termination frame further includes at least one of a MAP sensing measurement parameters element and a sensing measurement parameters element.

In this embodiment of this application, the first value may be 1.

The sensing communication methods shown in the third aspect and the fourth aspect may also be referred to as a method for terminating a MAP sensing measurement session or a termination method for a MAP sensing measurement session.

According to a fifth aspect, an embodiment of this application provides a sensing communication method. The method may be applied to a MAP sensing by proxy (sensing by proxy, SBP) initiator. The MAP SBP initiator may be a sensing device, or a chip, a functional module, or the like disposed in a sensing device. The method includes:

The MAP SBP initiator sends a second request frame to a MAP SBP responder, where the second request frame is used to request the MAP SBP responder to initiate a MAP sensing measurement session; and the MAP SBP initiator receives a second response frame that responds to the second request frame, where the second response frame includes a MAP measurement session ID of the MAP sensing measurement session.

In this embodiment of this application, the MAP SBP responder includes the MAP measurement session ID in the second response frame, so that the MAP SBP initiator can effectively learn of an identifier of a MAP sensing measurement session corresponding to an MSP SBP procedure initiated by the MAP SBP responder based on the second request frame, and the MAP SBP initiator can effectively identify the MAP SBP procedure initiated by the MAP SBP responder.

According to a sixth aspect, an embodiment of this application provides a sensing communication method. The method may be applied to a MAP SBP responder. The MAP SBP responder may be a sensing device, or a chip, a functional module, or the like disposed in a sensing device. The method includes:

The MAP SBP responder receives a second request frame from a MAP SBP initiator, where the second request frame is used to request the MAP SBP responder to initiate a MAP sensing measurement session; and the MAP SBP responder sends a second response frame that responds to the second request frame, where the second response frame includes a MAP measurement session ID of the MAP sensing measurement session.

With reference to the sixth aspect, in a possible implementation, the method further includes: The MAP SBP responder sends a first request frame to a MAP sensing measurement responder as a MAP sensing measurement initiator, where the first request frame includes the MAP measurement session ID; and receives a first response frame of the first request frame, where the first response frame includes the MAP measurement session ID.

In this embodiment of this application, the MAP SBP responder may serve as the MAP sensing measurement initiator to initiate a MAP sensing measurement session corresponding to a MAP SBP procedure. Alternatively, the MAP SBP responder may not serve as the MAP sensing measurement initiator. In this case, the MAP sensing measurement initiator may be determined based on a predetermined AP address field (for example, a 1^{st} AP address field) in the second request frame, or may be determined based on a predetermined AP identifier field (for example, a 1^{st} AP identifier field) in the second request frame.

In this embodiment of this application, the MAP sensing measurement initiator may generate the first request frame based on the second request frame, for example, generate the first request frame based on a parameter recommended by the MAP SBP initiator to the MAP sensing measurement initiator.

With reference to the fifth aspect or the sixth aspect, in a possible implementation, the second request frame includes at least one of the following: a MAP SBP parameters element, one or more MAP sensing measurement parameters elements, and a sensing measurement parameters element.

In this embodiment of this application, the MAP SBP parameters element in the second request frame may carry a related parameter that is for the MAP sensing measurement session corresponding to (or triggered by) the MAP SBP procedure initiated by the MAP SBP responder/the MAP sensing measurement initiator and that is recommended by the MAP SBP initiator. For example, the MAP SBP parameters element is used to carry a number of APs participating in the MAP sensing measurement session, addresses of the APs, identifiers of the APs, and the like. The MAP sensing measurement parameters element in the second request frame may carry a related parameter that is recommended by the MAP SBP responder/the MAP sensing measurement initiator to the MAP sensing measurement responder to perform a sensing measurement session (a sensing measurement session corresponding to the MAP sensing measurement session corresponding to the MAP SBP procedure) and that is recommended by the MAP SBP initiator. The sensing measurement parameters element may carry a sensing parameter that is recommended by the MAP SBP responder/the MAP sensing measurement initiator to the MAP sensing measurement responder to perform a sensing measurement session and that is recommended by the MAP SBP initiator.

With reference to the fifth aspect or the sixth aspect, in a possible implementation, the MAP SBP parameters element includes at least one of the following: a MAP SBP request, a MAP SBP procedure expiry exponent, whether a MAP SBP initiator serves as a sensing measurement responder, a number of APs, a mandatory number of APs, a preferred AP list, a number of preferred APs, and a mandatory number of preferred APs.

With reference to the fifth aspect or the sixth aspect, in a possible implementation, the second response frame further includes a status code field, and the status code field includes at least one of the following fields: success, rejected_with_suggested_changes, and request_declined.

With reference to the fifth aspect or the sixth aspect, in a possible implementation, when the status code field carries the rejected_with_suggested_changes field, the second response frame further includes at least one of the following: a MAP SBP parameters element, a MAP sensing measurement parameters element, and a sensing measurement parameters element.

In this embodiment of this application, the MAP SBP parameters element, the MAP sensing measurement parameters element, and the sensing measurement parameters element in the second response frame may be related parameters recommended by the MAP SBP responder. Based on the foregoing elements in the second response frame, the MAP SBP initiator may reinitiate a request frame (for example, the second request frame) of the MAP SBP procedure based on the parameter recommended by the MAP SBP responder.

With reference to the fifth aspect or the sixth aspect, in a possible implementation, the second response frame further includes a decline duration field, and the decline duration field is used by the MAP SBP responder to indicate the MAP SBP initiator not to initiate a MAP SBP procedure (or not to send a request frame of a MAP SBP procedure) within duration indicated by the decline duration field.

In this embodiment of this application, when the status code field carries the request_declined field, the second response frame may further include the decline duration field. The MAP SBP initiator may learn, based on the decline duration field, that the MAP SBP responder does not want to receive the request frame (for example, the second request frame) of the MAP SBP procedure again within the duration indicated by the field, thereby improving efficiency of interaction between the MAP SBP initiator and the MAP SBP responder.

The sensing communication methods shown in the fifth aspect and the sixth aspect may also be referred to as a method for establishing a MAP SBP procedure or an establishment method for a MAP SBP procedure.

According to a seventh aspect, an embodiment of this application provides a sensing communication method. The method may be applied to a third communication apparatus. The third communication apparatus may include a MAP SBP initiator or a MAP SBP responder. The method includes:

The third communication apparatus generates a termination frame, and the third communication apparatus sends the termination frame to a fourth communication apparatus, where the termination frame includes one or more MAP measurement session IDs.

In this embodiment of this application, the termination frame indicates a MAP SBP procedure corresponding to a terminated MAP sensing measurement session by including one or more MAP measurement session ID indication fields, so that the fourth communication apparatus can clearly learn of a MAP SBP procedure corresponding to a MAP sensing measurement session that is between the fourth communication apparatus and the third communication apparatus and that needs to be terminated, and flexibility of indicating the MAP SBP procedure corresponding to the terminated MAP sensing measurement session is higher.

According to an eighth aspect, an embodiment of this application provides a sensing communication method. The method may be applied to a fourth communication apparatus. The method includes:

The fourth communication apparatus receives a termination frame, and the fourth communication apparatus parses the termination frame, where the termination frame includes one or more MAP measurement session IDs.

In this embodiment of this application, the third communication apparatus may include a MAP SBP initiator, and the fourth communication apparatus may include a MAP SBP responder; or the third communication apparatus may include a MAP SBP responder, and the fourth communication apparatus may include a MAP SBP initiator. For example, the MAP SBP responder may serve as a MAP sensing measurement initiator to initiate a MAP sensing measurement session corresponding to a MAP SBP procedure.

With reference to the seventh aspect or the eighth aspect, in a possible implementation, the termination frame further includes a terminate all MAP sensing by proxy SBP procedures field, a value of the terminate all MAP SBP procedures field being a first value indicates to terminate all MAP SBP procedures between the third communication apparatus and the fourth communication apparatus, and the value of the terminate all MAP SBP procedures field being a second value indicates to terminate a MAP SBP procedure corresponding to a MAP sensing measurement session identified by the MAP measurement session ID.

In this embodiment of this application, a MAP SBP termination control field and the MAP measurement session ID indication field are used to indicate to terminate one MAP SBP procedure or all MAP SBP procedures between the two communication parties, thereby effectively reducing signaling overheads.

With reference to the seventh aspect or the eighth aspect, in a possible implementation, the termination frame further includes a MAP SBP error status (MAP SBP error status) field, and the MAP SBP error status field indicates a reason for terminating the MAP SBP procedure.

With reference to the seventh aspect or the eighth aspect, in a possible implementation, when a value of the MAP SBP error status field is a first value, the termination frame further includes at least one of a MAP SBP parameters element, a MAP sensing measurement parameters element, and a sensing measurement parameters element.

In this embodiment of this application, the first value may be 1.

The sensing communication methods shown in the seventh aspect and the eighth aspect may also be referred to as a method for terminating a MAP SBP procedure or a termination method for a MAP SBP procedure.

According to a ninth aspect, an embodiment of this application provides a sensing communication method. The method may be applied to a sensing measurement initiator. The sensing measurement initiator may be a sensing device, or a chip, a functional module, or the like disposed in a sensing device. The method includes:

The sensing measurement initiator sends a third request frame, and the sensing measurement initiator receives a third response frame that responds to the third request frame, where the third request frame is used to request to establish a sensing measurement session.

The third request frame includes an AID or a USID of a MAP SBP initiator; or
the third request frame includes a measurement session ID of the sensing measurement session and a medium access control MAC address of a MAP sensing measurement initiator of a MAP sensing measurement session corresponding to the sensing measurement session; or
the third request frame includes a number of APs participating in a MAP sensing measurement session corresponding to the sensing measurement session, a MAC address of each AP participating in the MAP sensing measurement session, and a measurement session ID of the sensing measurement session initiated by the sensing measurement initiator.

In this embodiment of this application, the MAP sensing measurement initiator may serve as the sensing measurement initiator to establish a sensing measurement session with a sensing measurement responder corresponding to the sensing measurement initiator. A MAP sensing measurement responder may also serve as the sensing measurement initiator to establish a sensing measurement session with a sensing measurement responder corresponding to the sensing measurement initiator. Whether the MAP sensing measurement initiator serves as the sensing measurement initiator to participate in the sensing measurement session may be determined based on a field indicating whether a MAP sensing measurement initiator serves as a sensing measurement initiator (for example, the field may occupy one bit) in a first request frame. The MAP SBP initiator may serve as the sensing measurement responder to participate in the sensing measurement session, or may not serve as the sensing measurement responder. Whether the MAP SBP initiator serves as the sensing measurement responder may be determined based on a field indicating whether a MAP SBP initiator serves as a sensing measurement responder (for example, the field may occupy one bit) in a second request frame.

In this embodiment of this application, the third request frame includes the foregoing fields, so that the sensing responder can effectively learn of sensing measurement sessions that belong to a same MAP SBP procedure or a same MAP sensing measurement session.

According to a tenth aspect, an embodiment of this application provides a sensing communication method. The method may be applied to a sensing measurement responder. The sensing measurement initiator may be a sensing device, or a chip, a functional module, or the like disposed in a sensing device. The method includes:

The sensing measurement responder receives a third request frame, and sends a third response frame that responds to the third request frame, where the third request frame is used to request to establish a sensing measurement session.

The third request frame includes an AID or a USID of a MAP SBP initiator; or
the third request frame includes a measurement session ID of the sensing measurement session and a medium access control MAC address of a MAP sensing measurement initiator of a MAP sensing measurement session corresponding to the sensing measurement session; or
the third request frame includes a number of APs participating in a MAP sensing measurement session corresponding to the sensing measurement session, a MAC address of each AP participating in the MAP sensing measurement session, and a measurement session ID of a sensing measurement session initiated by a sensing measurement initiator.

With reference to the ninth aspect or the tenth aspect, in a possible implementation, when the MAP sensing measurement initiator serves as the sensing measurement initiator to participate in the sensing measurement session, the MAC address of the MAP sensing measurement initiator is located in a predetermined field in the MAC address of each AP participating in the MAP sensing measurement session.

The sensing communication methods shown in the ninth aspect and the tenth aspect may also be referred to as a method for establishing a sensing measurement session or an establishment method for a sensing measurement session.

According to an eleventh aspect, an embodiment of this application provides a sensing communication method. The method may be applied to a fifth communication apparatus. The fifth communication apparatus may include a sensing measurement initiator or a sensing measurement responder. The method includes:

The fifth communication apparatus generates a termination frame, and sends the termination frame to a sixth communication apparatus, where the termination frame includes a measurement session ID field and a MAP field, a value of the MAP field being a first value indicates to terminate a MAP sensing measurement session corresponding to a sensing measurement session identified by the measurement session ID field, and the value of the MAP field being a second value indicates to terminate the sensing measurement session identified by the measurement session ID field; or the termination frame includes a terminate all measurement sessions field and a MAP field, a value of the terminate all measurement sessions field being a first value and a value of the MAP field being a first value indicate to terminate a MAP sensing measurement session corresponding to all sensing measurement sessions between a MAP sensing measurement initiator and the sensing measurement responder, and the value of the terminate all measurement sessions field being the first value and the value of the MAP field being a second value indicate to terminate all the sensing measurement sessions between the MAP sensing measurement initiator and the sensing measurement responder.

In this embodiment of this application, the fifth communication apparatus may include a sensing measurement initiator, and the sixth communication apparatus may include a sensing measurement responder; or the fifth communication apparatus may include a sensing measurement responder, and the sixth communication apparatus may include a sensing measurement initiator.

In this embodiment of this application, the sensing measurement session or the MAP sensing measurement session can be effectively terminated by using the termination frame, thereby improving flexibility of termination.

According to a twelfth aspect, an embodiment of this application provides a sensing communication method. The method may be applied to a sixth communication apparatus. The method includes:
A fifth communication apparatus generates a termination frame, and sends the termination frame to the sixth communication apparatus, where the termination frame includes a measurement session ID field and a MAP field, a value of the MAP field being a first value indicates to terminate a MAP sensing measurement session corresponding to a sensing measurement session identified by the measurement session ID field, and the value of the MAP field being a second value indicates to terminate the sensing measurement session identified by the measurement session ID field; or the termination frame includes a terminate all measurement sessions field and a MAP field, a value of the terminate all measurement sessions field being a first value and a value of the MAP field being a first value indicate to terminate a MAP sensing measurement session corresponding to all sensing measurement sessions between a MAP sensing measurement initiator and the sensing measurement responder, and the value of the terminate all measurement sessions field being the first value and the value of the MAP field being a second value indicate to terminate all the sensing measurement sessions between the MAP sensing measurement initiator and the sensing measurement responder.

The sensing communication methods shown in the eleventh aspect and the twelfth aspect may also be referred to as a method for terminating a sensing measurement session or a termination method for a sensing measurement session.

According to a thirteenth aspect, an embodiment of this application provides a sensing communication method. The method may be applied to a fifth communication apparatus. The method includes:
The fifth communication apparatus generates a control frame, and the fifth communication apparatus sends the control frame, where the control frame includes a MAC address of a MAP sensing measurement initiator of a MAP sensing measurement session corresponding to a sensing measurement session between the fifth communication apparatus and a sixth communication apparatus, a termination field, a MAP measurement session ID field, and a MAC address of a MAP sensing measurement responder of the MAP sensing measurement session, and a value of the termination field being a first value indicates to terminate a sensing measurement session that is of the MAP sensing measurement responder and that is in a MAP sensing measurement session identified by the MAP measurement session ID field and initiated by the MAP sensing measurement initiator.

In this embodiment of this application, the fifth communication apparatus may indicate, to the sixth communication apparatus by using the control frame, a MAP sensing measurement responder of which a sensing measurement session has been terminated. Therefore, the sixth communication apparatus can release a resource in time, thereby saving resources.

According to a fourteenth aspect, an embodiment of this application provides a sensing communication method. The method may be applied to a sixth communication apparatus. The method includes: The sixth communication apparatus receives a control frame, and the sixth communication apparatus parses the control frame, where the control frame includes a MAC address of a MAP sensing measurement initiator of a MAP sensing measurement session corresponding to a sensing measurement session between a fifth communication apparatus and the sixth communication apparatus, a termination field, a MAP measurement session ID field, and a MAC address of a MAP sensing measurement responder of the MAP sensing measurement session, and a value of the termination field being a first value indicates to terminate a sensing measurement session that is of the MAP sensing measurement responder and that is in a MAP sensing measurement session identified by the MAP measurement session ID field and initiated by the MAP sensing measurement initiator.

In this embodiment of this application, for descriptions of the fifth communication apparatus and the sixth communication apparatus, refer to the descriptions in the eleventh aspect. Details are not described herein again.

According to a fifteenth aspect, an embodiment of this application provides a communication apparatus, configured to perform the method according to any one of the foregoing aspects or the possible implementations. The communication apparatus includes a module that has the method according to any one of the foregoing aspects or the possible implementations.

According to a sixteenth aspect, an embodiment of this application provides a communication apparatus. The communication apparatus includes a processor, configured to perform the method according to any one of the foregoing aspects or the possible implementations. The processor is configured to execute a program stored in the memory. When the program is executed, the method according to any one of the foregoing aspects or the possible implementations is performed.

In a possible implementation, the memory is located outside the communication apparatus.

In a possible implementation, the memory is located inside the communication apparatus.

In this embodiment of this application, the processor and the memory may alternatively be integrated into one component, that is, the processor and the memory may alternatively be integrated together. For example, the communication apparatus may be a chip.

In a possible implementation, the communication apparatus further includes a transceiver. The transceiver is configured to receive information or send information.

According to a seventeenth aspect, an embodiment of this application provides a communication apparatus. The first communication apparatus includes a logic circuit and an interface, the logic circuit is coupled to the interface, the interface is configured to input and/or output information, and the logic circuit is configured to perform the method according to any one of the aspects or the possible implementations.

According to an eighteenth aspect, an embodiment of this application provides a computer-readable storage medium. The computer-readable storage medium is configured to store a computer program. When the computer program is run on a computer, the method according to any one of the foregoing aspects or the possible implementations is performed.

According to a nineteenth aspect, an embodiment of this application provides a computer program product. The computer program product includes a computer program or computer code. When the computer program product runs on a computer, the method according to any one of the foregoing aspects or the possible implementations is performed.

According to a twentieth aspect, an embodiment of this application provides a computer program. When the computer program is run on a computer, the method according to any one of the foregoing aspects or the possible implementations is performed.

According to a twenty-first aspect, an embodiment of this application provides a communication system. The communication system includes a MAP sensing measurement initiator and a MAP sensing measurement responder. The MAP sensing measurement initiator is configured to perform the method according to any one of the first aspect or the possible implementations of the first aspect, and the MAP sensing measurement responder is configured to perform the method according to any one of the second aspect or the possible implementations of the second aspect.

According to a twenty-second aspect, an embodiment of this application provides a communication system. The communication system includes a first communication apparatus and a second communication apparatus. The first communication apparatus is configured to perform the method according to any one of the third aspect or the possible implementations of the third aspect, and the second communication apparatus is configured to perform the method according to any one of the fourth aspect or the possible implementations of the fourth aspect.

According to a twenty-third aspect, an embodiment of this application provides a communication system. The communication system includes a MAP SBP initiator and a MAP SBP responder. The MAP SBP initiator is configured to perform the method according to any one of the fifth aspect or the possible implementations of the fifth aspect, and the MAP SBP responder is configured to perform the method according to any one of the sixth aspect or the possible implementations of the sixth aspect.

According to a twenty-fourth aspect, an embodiment of this application provides a communication system. The communication system includes a third communication apparatus and a fourth communication apparatus. The third communication apparatus is configured to perform the method according to any one of the seventh aspect or the possible implementations of the seventh aspect, and the fourth communication apparatus is configured to perform the method according to any one of the eighth aspect or the possible implementations of the eighth aspect.

According to a twenty-fifth aspect, an embodiment of this application provides a communication system. The communication system includes a sensing measurement initiator and a sensing measurement responder. The sensing measurement initiator is configured to perform the method according to any one of the ninth aspect or the possible implementations of the ninth aspect, and the sensing measurement responder is configured to perform the method according to any one of the tenth aspect or the possible implementations of the tenth aspect.

According to a twenty-sixth aspect, an embodiment of this application provides a communication system. The communication system includes a fifth communication apparatus and a sixth communication apparatus. The fifth communication apparatus is configured to perform the method according to any one of the eleventh aspect or the possible implementations of the eleventh aspect, and the sixth communication apparatus is configured to perform the method according to any one of the twelfth aspect or the possible implementations of the twelfth aspect. Alternatively, the fifth communication apparatus is configured to perform the method according to any one of the thirteenth aspect or the possible implementations of the thirteenth aspect, and the sixth communication apparatus is configured to perform the method according to any one of the fourteenth aspect or the possible implementations of the fourteenth aspect.

### BRIEF DESCRIPTION OF DRAWINGS

FIG. 1 is a diagram of an architecture of a communication system according to an embodiment of this application;
FIG. 2 is a diagram of an architecture of another communication system according to an embodiment of this application;
FIG. 3 is a diagram of a method for establishing a MAP sensing measurement session according to an embodiment of this application;
FIG. 4a is a diagram of a procedure for establishing a MAP sensing measurement session according to an embodiment of this application;
FIG. 4b is a diagram of another procedure for establishing a MAP sensing measurement session according to an embodiment of this application;
FIG. 5a is a diagram of a format of a first request frame according to an embodiment of this application;
FIG. 5b is a diagram of a format of another first request frame according to an embodiment of this application;
FIG. 5c is a diagram of a format of a first response frame according to an embodiment of this application;
FIG. 6a is a diagram of a procedure for terminating a MAP sensing measurement session according to an embodiment of this application;
FIG. 6b is a diagram of another procedure for terminating a MAP sensing measurement session according to an embodiment of this application;
FIG. 6c is a diagram of still another procedure for terminating a MAP sensing measurement session according to an embodiment of this application;
FIG. 7a is a diagram of a format of a termination frame according to an embodiment of this application;
FIG. 7b is a diagram of a format of another termination frame according to an embodiment of this application;
FIG. 8 is a diagram of a method for establishing a MAP SBP procedure according to an embodiment of this application;
FIG. 9 is a diagram of a procedure for establishing a MAP SBP procedure according to an embodiment of this application;
FIG. 10a is a diagram of a format of a second request frame according to an embodiment of this application;
FIG. 10b is a diagram of a format of a MAP SBP parameters element according to an embodiment of this application;
FIG. 10c is a diagram of a format of a second response frame according to an embodiment of this application;
FIG. 11a is a diagram of a format of a termination frame according to an embodiment of this application;
FIG. 11b is a diagram of a format of another termination frame according to an embodiment of this application;
FIG. 12 is a diagram of a method for establishing a sensing measurement session according to an embodiment of this application;
FIG. 13a is a diagram of a format of a third request frame according to an embodiment of this application;
FIG. 13b is a diagram of a format of another third request frame according to an embodiment of this application;
FIG. 14a is a diagram of a format of a termination frame according to an embodiment of this application;
FIG. 14b is a diagram of a format of another termination frame according to an embodiment of this application;
FIG. 14c is a diagram of a format of still another termination frame according to an embodiment of this application;
FIG. 14d is a diagram of a format of still another termination frame according to an embodiment of this application;
FIG. 14e is a diagram of a format of still another termination frame according to an embodiment of this application;
FIG. 15 is a schematic flowchart of a sensing communication method according to an embodiment of this application;
FIG. 16 is a diagram of a format of a control frame according to an embodiment of this application;
FIG. 17 is a diagram of a structure of a communication apparatus according to an embodiment of this application;
FIG. 18 is a diagram of a structure of another communication apparatus according to an embodiment of this application; and
FIG. 19 is a diagram of a structure of still another communication apparatus according to an embodiment of this application.

### DESCRIPTION OF EMBODIMENTS

For ease of understanding technical solutions in this application, the following further describes this application with reference to accompanying drawings.

Terms such as "first" and "second" in the specification, claims, and accompanying drawings of this application are merely used to distinguish between different objects, but are not used to describe a specific order. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

An "embodiment" mentioned in this specification means that a particular feature, structure, or characteristic described with reference to this embodiment may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that embodiments described herein may be combined with another embodiment.

In this application, "at least one (item)" means one or more, "a plurality of" means two or more, and "at least two (items)" means two or three or more. "And/or" is used to describe an association relationship between associated objects, and represents that three relationships may exist. For example, "A and/or B" may represent the following three cases: Only A exists, only B exists, and both A and B exist, where A and B may be singular or plural. "Or" represents that two relationships may exist, for example, only A exists, and only B exists. When A and B are mutually exclusive, it may also represent that three relationships exist, for example, only A exists, only B exists, and both A and B exist. A character "/" generally represents an "or" relationship between the associated objects. "At least one of the following items (pieces)" or a similar expression thereof means any combination of these items. For example, at least one of a, b, or c may represent: a, b, c, "a and b", "a and c", "b and c", or "a and b and c".

Embodiments of this application provide a sensing communication method and apparatus, to effectively improve flexibility of managing a MAP sensing measurement session.

The following describes a communication system in embodiments of this application.

The technical solutions provided in embodiments of this application may be applied to a wireless local area network (wireless local area network, WLAN) system, for example, Wi-Fi. For example, the method provided in embodiments of this application is applicable to the IEEE 802.11 series protocols, for example, the 802.11be protocol, the 802.11bn protocol, or a next-generation protocol of the 802.11bn protocol. Examples are not enumerated one by one. The technical solutions provided in embodiments of this application may be further applied to a wireless personal area network (wireless personal area network, WPAN) based on an ultra-wideband (ultra-wideband, UWB) technology. The technical solutions provided in embodiments of this application may be further applied to a millimeter wave (millimeter wave, MMW) technology, including an IMMW. For example, the method provided in embodiments of this application is applicable to the IEEE 802.15 series protocols such as the 802.15.4a protocol, the 802.15.4z protocol, the 802.15.4ab protocol, or a future generation of UWB WPAN protocol. Examples are not enumerated one by one. The technical solutions provided in embodiments of this application may be further applied to the following communication systems, for example, an internet of things (internet of things, IoT) system, a vehicle to X (vehicle to X, V2X) system, a narrowband internet of things (narrowband internet of things, NB-IoT) system, a long term evolution (long term evolution, LTE) system, a 5th-generation (5th-generation, 5G) communication system, and a new communication system emerging in future communication development.

The WLAN system can provide high-rate and low-latency transmission. With continuous evolution of WLAN application scenarios, the WLAN system is to be applied to more scenarios or industries, for example, the internet of things industry, the internet of vehicles industry, the banking industry, enterprise offices, stadiums and exhibition halls, concert halls, hotel rooms, dormitories, hospital wards, classrooms, shopping malls and supermarkets, squares, streets, production workshops, and warehouses. Certainly, a device (for example, an access point or a station) that supports WLAN communication or sensing may be a sensor node (for example, a smart water meter, a smart electricity meter, or a smart air detection node) in a smart city, a smart device (for example, a smart camera, a projector, a display, a television, a speaker, a refrigerator, or a washing machine) in a smart home, a node in the internet of things, an entertainment terminal (for example, a wearable device such as augmented reality (augmented reality, AR) or virtual reality (virtual reality, VR)), a smart device (for example, a printer, a projector, a loudspeaker, or a speaker) in a smart office, an internet of vehicles device in the internet of vehicles, an infrastructure (for example, a vending machine, a self-service navigation console in a shopping mall or supermarket, a self-service cashier, or a self-service ordering machine) in a daily life scenario, a device in a large sports and music venue, or the like.

Although embodiments of this application mainly use a WLAN as an example, especially a network applied to IEEE 802.11 series standards, embodiments of this application may support Wi-Fi 8, which may also be referred to as ultra-high reliability (ultra-high reliability, UHR) or ultra-high reliability and throughput (ultra-high reliability and throughput, UHRT). Examples are not enumerated herein. Various aspects in embodiments of this application may be extended to other networks that use various standards or protocols, for example, Bluetooth (Bluetooth), a high performance radio LAN (high performance radio LAN, HIPERLAN) (a wireless standard similar to the IEEE 802.11 standard, and mainly used in Europe), a wide area network (wide area network, WAN), or other networks known or developed in the future.

In a possible implementation, the method provided in embodiments of this application may be implemented by a communication apparatus in a communication system. For example, the communication apparatus may be an access point (access point, AP) or a station (station, STA).

The access point is an apparatus having a wireless communication function, supports communication or sensing by using a WLAN protocol, has a function of communicating with or sensing another device (for example, a non-AP STA or another access point) in a WLAN, and certainly may further have a function of communicating with or sensing another device. Alternatively, the access point is equivalent to a bridge that connects a wired network and a wireless network, and a main function of the access point is to connect various wireless network clients together and then connect the wireless network to the Ethernet. In the WLAN system, the access point may be referred to as an access point station (AP STA). The apparatus having a wireless communication function may be an entire device, or may be a chip, a processing system, a functional module, or the like installed in an entire device. The device in which the chip, the processing system, or the functional module is installed may implement a method, a function, and the like in embodiments of this application under control of the chip, the processing system, or the functional module. The AP in embodiments of this application is an apparatus that provides a service for the non-AP STA, and may support the 802.11 series protocols or subsequent protocols, or the like. For example, the access point may be an access point for a terminal (for example, a mobile phone) to access a wired (or wireless) network, and is mainly deployed in a home, a building, and a park. A typical coverage radius is tens of meters to 100-odd meters. It is clear that the access point may alternatively be deployed outdoors. For another example, the AP may be a communication entity, for example, a communication server, a router, a switch, or a bridge, or the AP may include various forms of macro base stations, micro base stations, relay stations, and the like. Certainly, the AP may alternatively be a chip, a processing system, or a module in the foregoing devices in various forms, to implement a method and a function in embodiments of this application.

The STA is an apparatus having a wireless communication function, supports communication or sensing by using a WLAN protocol, and has a capability of communicating with or sensing another non-AP STA or access point in a WLAN. In the WLAN system, the station may be referred to as a non-access point station (non-access point station, non-AP STA). For example, the STA is any user communication device that allows a user to communicate with or sense an AP and further communicate with a WLAN. The apparatus having a wireless communication function may be an entire device, or may be a chip, a processing system, or a functional module installed in an entire device. The device in which the chip, the processing system, or the functional module is installed may implement a method and a function in embodiments of this application under control of the chip, the processing system, or the functional module. For example, the STA may be a wireless communication chip, a wireless sensor, or a wireless communication terminal, and may also be referred to as a user. For another example, the STA may be a mobile phone that supports a Wi-Fi communication function, a tablet computer that supports a Wi-Fi communication function, a set-top box that supports a Wi-Fi communication function, a smart television that supports a Wi-Fi communication function, a smart wearable device that supports a Wi-Fi communication function, a vehicle-mounted communication device that supports a Wi-Fi communication function, or a computer that supports a Wi-Fi communication function. Certainly, the STA may alternatively be a chip, a processing system, or a module in the foregoing devices in various forms, to implement a method and a function in embodiments of this application.

For example, a communication system to which the method provided in embodiments of this application may be applied may include an access point and a station. For example, embodiments of this application may be applied to a scenario of communication or sensing between an AP and a STA, between APs, or between STAs in a WLAN. This is not limited in embodiments of this application. Optionally, the AP may communicate with or sense a single STA, or the AP may simultaneously communicate with or sense a plurality of STAs. Specifically, communication or sensing between the AP and the plurality of STAs may be classified into downlink transmission in which the AP simultaneously sends signals to the plurality of STAs and uplink transmission in which the plurality of STAs send signals to the AP. A WLAN communication protocol may be supported between an AP and a STA, between APs, or between STAs. The communication protocol may include the IEEE 802.11 series protocols, for example, the 802.11n/802.11ac/802.11ax/802.11be/802.11bn protocol. Certainly, protocols later than 802.11bn may also be supported.

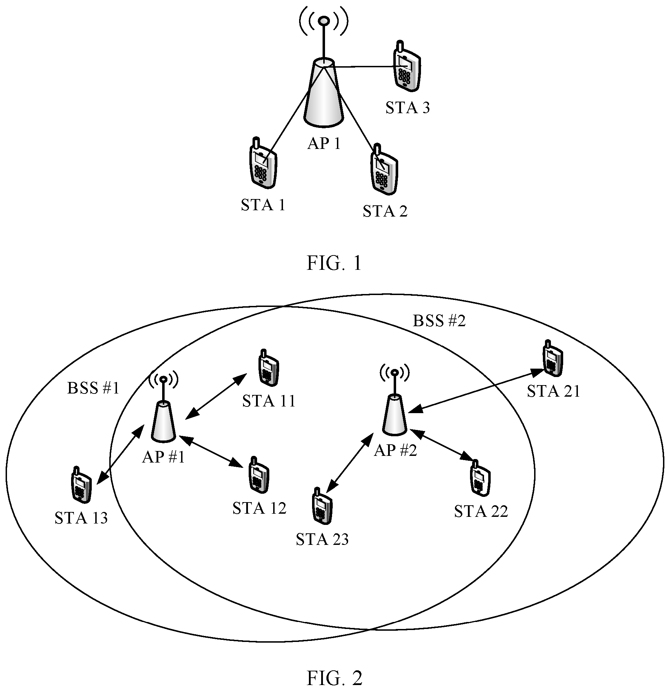

FIG. 1 is a diagram of an architecture of a communication system according to an embodiment of this application. The communication system may include one or more APs and one or more STAs. FIG. 1 shows one access point: an AP 1 and three stations: a STA 1, a STA 2, and a STA 3. For example, the method provided in embodiments of this application may be applied to data communication between one AP and one or more STAs (for example, communication between the AP 1 and the STA 1 or communication between the AP 1 with the STA 1 and the STA 2 shown in FIG. 1), communication between APs (for example, communication between the AP 1 and the AP 2 shown in FIG. 1), or communication between STAs (for example, communication between the STA 2 and the STA 3 shown in FIG. 1). The method provided in embodiments of this application may be applied to but not limited to single-user uplink/downlink transmission, multiuser uplink/downlink transmission, vehicle-to-everything (vehicle-to-everything, V2X, where X may represent everything), and device-to-device (device-to-device, D2D). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, or vehicle-to-network (vehicle-to-network, V2N) communication.

It may be understood that, in FIG. 1, an example in which the STA is a mobile phone and the AP is a router is used. This does not mean that types of the AP and the STA in embodiments of this application are limited. In addition, FIG. 1 shows only one AP and three STAs as an example. There may be more or less APs or STAs. This is not limited in embodiments of this application.

FIG. 2 is a diagram of an architecture of another communication system according to an embodiment of this application. As shown in FIG. 1, one BSS may include one AP and one or more STAs associated with or unassociated with the AP. The communication system may further include a plurality of BSSs. FIG. 2 shows two BSSs as an example, and the two BSSs partially overlap, that is, are an OBSS. A BSS #1 includes an AP #1, a STA 11, a STA 12, and a STA 13, and a BSS #2 includes an AP #2, a STA 21, a STA 22, and a STA 23. The STA 11, the STA 12, the STA 22, and the STA 23 are mutually overlapping parts of the two BSSs. Each BSS includes an AP and a plurality of STAs. In one BSS, data may be transmitted between the AP and each STA. The AP #1 and the AP #2 may also communicate with each other.

The following describes terms used in embodiments of this application.

### 1. Sensing measurement session

A sensing measurement session (sensing measurement session) is a sensing procedure in which an AP and one or more non-AP STAs associated with or unassociated with the AP participate. For example, an AP may serve as a sensing measurement initiator to establish a trigger-based (trigger based, TB) sensing measurement session with one or more STAs. After the sensing measurement session is established completely, the sensing measurement initiator may initiate one or more trigger-based sensing measurement exchanges (sensing measurement exchanges). For another example, a STA may serve as a sensing measurement initiator to establish a non-trigger-based (non-trigger based, non-TB) sensing measurement session with an AP. After the sensing measurement session is established completely, the sensing measurement initiator may initiate one or more non-trigger-based sensing measurement exchanges (Non-TB sensing measurement exchanges). Through the sensing measurement exchange, a sensing device (for example, the AP or the non-AP STA) may learn of a sensing result, for example, related information of a sensed target, such as a speed, an angle, or a distance of the sensed target.

The sensing measurement initiator may also be referred to as a sensing initiator, and a sensing measurement responder may also be referred to as a sensing responder. Names of communication apparatuses are not limited in embodiments of this application. For a specific procedure of the sensing measurement session, refer to a standard. Details are not described herein again.

### 2. Multi-access point (multi-AP, MAP) sensing measurement session

A MAP sensing measurement session is a joint sensing procedure in which a plurality of APs participate. Each of the plurality of APs may perform a sensing measurement session with one or more STAs associated with or unassociated with the AP. When a sensing result of an AP in the plurality of APs is unavailable, the AP may use a sensing result of another AP in the plurality of APs.

In an example, the MAP sensing measurement session is a MAP sensing measurement session established between a plurality of APs. In this example, the MAP sensing measurement session may not include a sensing measurement session performed between each of the plurality of APs and one or more STAs associated with or unassociated with the AP. For example, a procedure for establishing a MAP sensing measurement session may include an interaction procedure of a first request frame and a first response frame shown below. In this example, a frame sent between the APs may use a MAP measurement session ID (the MAP measurement session ID may be present only in the frame sent between the APs), and a frame sent between an AP and a respective STA may use a measurement session ID (the measurement session ID may be present only in the frame sent between the AP and the respective STA).

In another example, the MAP sensing measurement session may not only include a MAP sensing measurement session established between a plurality of APs, but also include a sensing measurement session established between each of the plurality of APs and one or more STAs associated with or unassociated with the AP. For example, a procedure for establishing a MAP sensing measurement session may not only include an interaction procedure of a first request frame and a first response frame shown below, but also include an interaction procedure of a third request frame and a third response frame shown below. In this example, a frame sent between the APs may use a MAP measurement session ID, and a frame sent between an AP and a respective STA may use a measurement session ID+a MAP measurement session ID (for example, the two IDs are respectively carried in two fields).

Whether the procedure for establishing a MAP sensing measurement session includes a procedure for establishing a sensing measurement session between an AP and a STA is not limited in embodiments of this application. For related descriptions of a procedure for terminating a MAP sensing measurement session, refer to the descriptions of the procedure for establishing a MAP sensing measurement session. Details are not described again.

In an example, a MAP sensing measurement initiator may serve as a sensing initiator to establish a sensing measurement session with a STA corresponding to the sensing initiator. In another example, a MAP sensing measurement initiator may not serve as a sensing initiator, and therefore does not participate in a sensing measurement session. In this case, although the MAP sensing measurement initiator does not participate in the sensing measurement session, the MAP sensing measurement initiator can receive a sensing result. For example, a MAP sensing measurement responder may serve as a sensing initiator to establish a sensing measurement session with a STA corresponding to the sensing initiator.

An initiator of a MAP sensing measurement session may be referred to as a MAP sensing measurement initiator, a MAP sensing initiator, a MAP sensing initiator AP, or the like. A responder of a MAP sensing measurement session may be referred to as a MAP sensing measurement responder, a MAP sensing responder, a MAP sensing responder AP, or the like. For a MAP sensing measurement initiator and a MAP sensing measurement responder that participate in a sensing measurement session, the MAP sensing measurement initiator may also be an initiator of the sensing measurement session, and the MAP sensing measurement responder may also be an initiator of the sensing measurement session.

The MAP sensing measurement session may also be referred to as a joint sensing measurement session or the like. A name of the MAP sensing measurement session is not limited in embodiments of this application.

### 3. MAP sensing by proxy (sensing by proxy, SBP) measurement session

A MAP SBP measurement session is a joint sensing procedure initiated by a STA. The STA may request an AP, and the AP initiates a MAP sensing measurement session by proxy, so that the AP can initiate the MAP sensing measurement session. Whether the AP participates in the MAP sensing measurement session is not limited in embodiments of this application. For example, the AP may perform a MAP sensing measurement session with one or more other APs.

In an example, the MAP SBP measurement session may be a measurement session established between a STA and an AP. For example, a procedure for establishing a MAP SBP measurement session may include an interaction procedure of a second request frame and a second response frame shown below.

In another example, the MAP SBP measurement session may include a measurement session established between a STA and an AP, and may also include a MAP sensing measurement session initiated by the AP. For example, a procedure for establishing a MAP SBP measurement session may include an interaction procedure of a second request frame and a second response frame shown below, and may also include an interaction procedure of a first request frame and a first response frame shown below.

In still another example, the MAP SBP measurement session may include a measurement session established between a STA and an AP, may also include a MAP sensing measurement session initiated by the AP, and may further include a sensing measurement session that is between each AP participating in the MAP sensing measurement session initiated by the AP and one or more STAs associated with or unassociated with the AP. For example, a procedure for establishing a MAP SBP measurement session may include an interaction procedure of a second request frame and a second response frame shown below, may also include an interaction procedure of a first request frame and a first response frame shown below, and may further include an interaction procedure of a third request frame and a third response frame shown below.

Whether the procedure for establishing a MAP SBP measurement session includes a procedure for establishing a sensing measurement session between an AP and a STA, and whether the procedure for establishing a MAP SBP measurement session includes a procedure for establishing a MAP sensing measurement session are not limited in embodiments of this application. For related descriptions of a procedure for terminating a MAP SBP measurement session, refer to the descriptions of the procedure for establishing a MAP SBP measurement session. Details are not described herein again.

In an example, a MAP SBP initiator may serve as a sensing responder, and participate in a sensing measurement session corresponding to a MAP SBP procedure initiated by the MAP SBP initiator. In another example, a MAP SBP initiator may not serve as a sensing responder, and does not participate in a sensing measurement session corresponding to a MAP SBP procedure initiated by the MAP SBP initiator. When the MAP SBP initiator does not serve as a sensing responder, the MAP SBP initiator may not participate in a sensing measurement exchange, but may receive a sensing result. In an example, a MAP SBP responder may serve as a MAP sensing measurement initiator, and participate in a MAP sensing measurement session. In another example, a MAP SBP responder may not serve as a MAP sensing measurement initiator, and does not participate in a MAP sensing measurement session.

An initiator of a MAP SBP procedure may be referred to as a MAP SBP initiator, an initiator of a MAP SBP measurement session, or the like. A responder of a MAP SBP procedure may be referred to as a MAP SBP responder, a responder of a MAP SBP measurement session, or the like. For a MAP sensing measurement session, the MAP SBP responder may also be a MAP sensing measurement initiator.

The MAP SBP measurement session may also be referred to as a MAP SBP procedure, a joint sensing by proxy procedure, a joint SBP procedure, or the like. A name of the MAP SBP measurement session is not limited in embodiments of this application.

Generally, one sensing application may correspond to one MAP sensing measurement session. Alternatively, one sensing application may correspond to one MAP SBP measurement session.

For brevity, the AP and the one or more STAs associated with or unassociated with the AP shown above are collectively referred to as the AP and the one or more STAs corresponding to the AP.

The following describes in detail a procedure for establishing a MAP sensing measurement session and a procedure for terminating a MAP sensing measurement session, a procedure for establishing a MAP SBP measurement session and a procedure for terminating a MAP SBP measurement session, a procedure for establishing a sensing measurement session and a procedure for terminating a sensing measurement session, and formats of frames involved in the procedures.

**Some embodiments of this application provide a method for establishing a MAP sensing measurement session.**

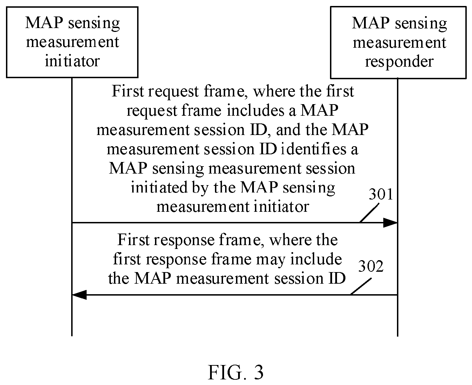

FIG. 3 is a diagram of a method for establishing a MAP sensing measurement session according to an embodiment of this application. As shown in FIG. 3, the method includes the following steps.

301: A MAP sensing measurement initiator sends a first request frame to a MAP sensing measurement responder, and correspondingly, the MAP sensing measurement responder receives the first request frame. The first request frame includes a MAP measurement session ID, and the MAP measurement session ID identifies a MAP sensing measurement session initiated by the MAP sensing measurement initiator.

The first request frame may be used to request to initiate the MAP sensing measurement session. Alternatively, the first request frame may be used to request to establish the MAP sensing measurement session.

In an example, the MAP sensing measurement initiator may be one of a plurality of APs participating in multi-AP coordination, and the MAP sensing measurement initiator may send the first request frame to one or more other APs participating in the multi-AP coordination.

In another example, the MAP sensing measurement initiator may not be an AP in a plurality of APs participating in multi-AP coordination. For example, the MAP sensing measurement initiator may be a MAP SBP responder. Although the MAP SBP responder may initiate a MAP sensing measurement session, for example, the MAP SBP responder may send a first request frame to each of the plurality of APs participating in the multi-AP coordination, the MAP SBP responder does not participate in coordination between the plurality of APs.

For example, a first AP may serve as the MAP sensing measurement initiator to separately send first request frames to N APs. Each of the N APs may be referred to as a MAP sensing measurement responder. For a same sensing application, MAP measurement session IDs in the first request frames separately sent by the first AP to the N different APs are the same. The MAP measurement session ID may identify that sensing measurement sessions between each of the N APs and one or more STAs corresponding to the AP belong to a same MAP sensing measurement session. Therefore, the first AP may use a sensing result corresponding to a sensing measurement session initiated by any one of the N APs based on the MAP measurement session ID. Whether other content in the first request frames sent by the first AP to different APs is the same may be determined based on functions of corresponding fields or elements in the first request frames. N may be a positive integer, or N may be an integer greater than 1. For ease of description, in the following, when a specific example is involved, an example in which the first AP participates in a MAP sensing measurement session is used to describe the method provided in this embodiment of this application.

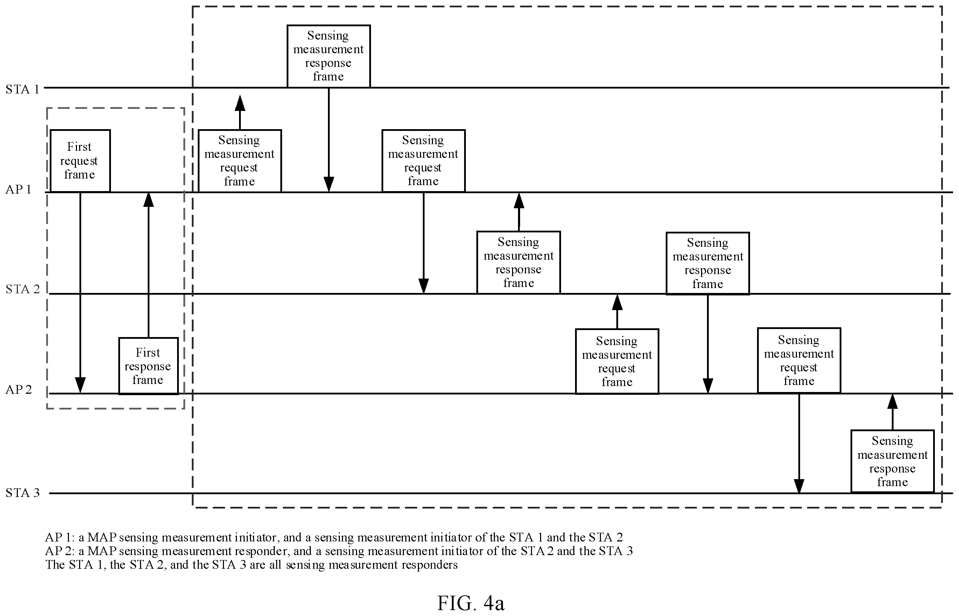

FIG. 4a is a diagram of a procedure for establishing a MAP sensing measurement session according to an embodiment of this application. As shown in FIG. 4a, an AP 1 may send a first request frame to an AP 2 as a MAP sensing measurement initiator.

In an example, after receiving the first request frame, the AP 2 may establish sensing measurement sessions with two STAs (a STA 2 and a STA 3 shown in FIG. 4a) corresponding to the AP 2. In another example, after sending a first response frame, the AP 2 may establish sensing measurement sessions with two STAs corresponding to the AP 2.

In an example, after receiving a first response frame, the AP 1 may establish sensing measurement sessions with two STAs (a STA 1 and a STA 2 shown in FIG. 4a) corresponding to the AP 1. In another example, after sending the first request frame, the AP 1 may establish sensing measurement sessions with two STAs corresponding to the AP 1. In still another example, after establishing a sensing measurement session, the AP 1 may send a request frame (for example, the first request frame) of a MAP sensing measurement session to the AP 2. A time at which or a sequence in which the AP 1 and the AP 2 establish the sensing measurement sessions with the two STAs respectively corresponding to the AP 1 and the AP 2 is not limited in embodiments of this application.

The MAP sensing measurement session is established between the AP 1 and the AP 2, and the AP 1 may share a sensing result of the AP 2, or the AP 1 and the AP 2 may share a sensing result. The AP 1 shown in FIG. 4a may be referred to as a first AP, and the AP 2 may be referred to as a second AP. The second AP may be an AP in the foregoing N APs.

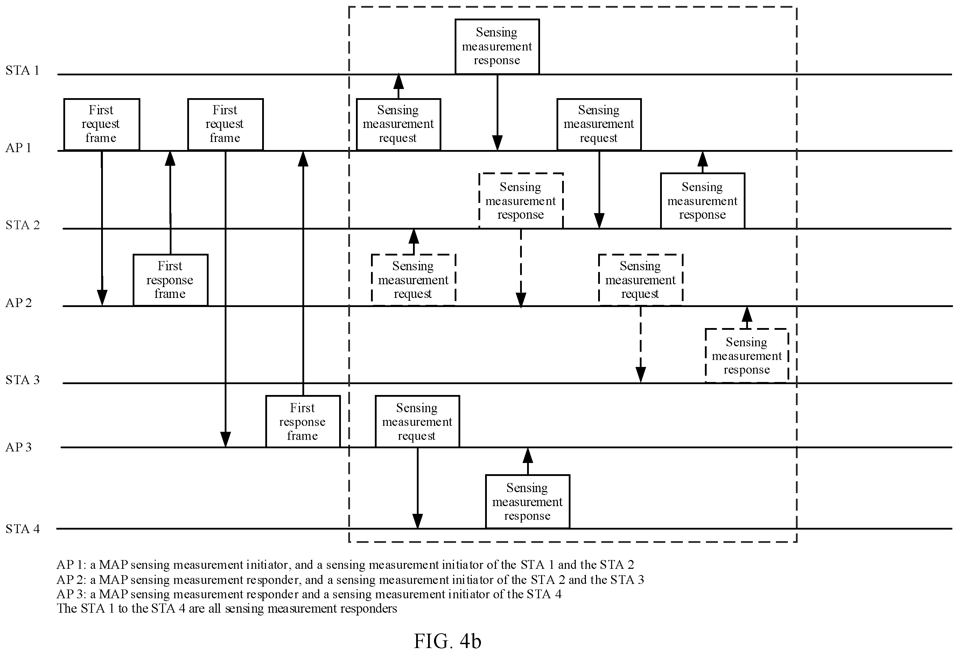

FIG. 4b is a diagram of another procedure for establishing a MAP sensing measurement session according to an embodiment of this application. As shown in FIG. 4b, an AP 1 may separately send first request frames to an AP 2 and an AP 3 as a MAP sensing measurement initiator. After receiving the first request frame, the AP 2 and the AP 3 each may reply with a first response frame. For related descriptions of establishing sensing measurement sessions between the AP 1, the AP 2, and the AP 3 and the STAs respectively corresponding to the AP 1, the AP 2, and the AP 3, refer to FIG. 4a. Details are not described herein again. A STA corresponding to the AP 3 in FIG. 4b may be a STA 4.

In an example, a MAP sensing measurement session is established between the AP 1 and the AP 2, and the AP 1 may share a sensing result of the AP 2. A MAP sensing measurement session is established between the AP 1 and the AP 3, and the AP 1 may share a sensing result of the AP 3. In another example, MAP sensing measurement sessions are separately established between the AP 1, and the AP 2 and the AP 3, and the AP 1, the AP 2, and the AP 3 may share a sensing result. The AP 1 shown in FIG. 4b may be referred to as a first AP, and the AP 2 and the AP 3 may be APs in the foregoing N APs.

Quantities of STAs corresponding to the APs shown in FIG. 4a and FIG. 4b are merely examples, and should not be construed as a limitation on embodiments of this application. Sequences (for example, sending sequences in which or sending times at which) in which the AP 1 shown in FIG. 4a and FIG. 4b sends sensing measurement request frames to the STA 1 and the STA 2 corresponding to the AP 1 are merely examples. Sequences in which the AP 2 shown in FIG. 4a and FIG. 4b sends sensing measurement request frames to the STA 2 and the STA 3 corresponding to the AP 2 are merely examples. A sequence in which the AP 3 shown in FIG. 4b sends a sensing measurement request frame to the STA 4 corresponding to the AP 3 is merely an example. Sequences in which the AP 1, the AP 2, and the AP 3 shown in FIG. 4a and FIG. 4b separately send sensing measurement request frames are merely examples. This should not be construed as a limitation on embodiments of this application. As shown in FIG. 4b, the AP 1 and the AP 2 may alternatively send sensing measurement request frames (a dashed line part in FIG. 4b represents that the AP 2 sends the sensing measurement request frame to the STA corresponding to the AP 2) to the STAs respectively corresponding to the AP 1 and the AP 2 at the same time. Locations of the first response frames shown in FIG. 4a and FIG. 4b are merely examples. For example, the AP 2 may alternatively reply to the AP 1 with the first response frame after completely establishing the sensing measurement session with the STA corresponding to the AP 2, and the AP 3 may alternatively reply to the AP 1 with the first response frame after completely establishing the sensing measurement session with the STA corresponding to the AP 3.

FIG. 4a shows an example of coordination between two APs, and FIG. 4b shows an example of coordination between three APs. During specific implementation, coordination between more APs may be further involved. This is not limited in embodiments of this application.

For brevity, in the following, when a specific example is involved, an example in which the first AP serves as a MAP sensing measurement initiator and the second AP serves as a MAP sensing measurement responder is used for description. For example, one or more different MAP sensing measurement sessions may be established between the first AP and the second AP. A number of MAP sensing measurement sessions established between the APs is not limited in embodiments of this application. When a plurality of different MAP sensing measurement sessions are established between the first AP and the second AP, MAP measurement session IDs of the plurality of MAP sensing measurement sessions may be different from each other.

The following describes in detail the first request frame in this embodiment of this application.

For example, the first request frame may be referred to as a MAP sensing measurement request (MAP sensing measurement request) frame, a protected (protected) MAP sensing measurement request frame, or another frame having a similar function/role. Numbers of bits (or numbers of bytes) and sequences of fields in request frames and response frames provided in the accompanying drawings of embodiments of this application are merely examples, and should not constitute a limitation on frame formats, frame lengths, or sequences of fields of the request frames and the response frames provided in embodiments of this application. Names of the request frame and the response frame and names of fields included in the request frame and the response frame in the accompanying drawings of embodiments of this application are merely examples, and should not constitute a limitation on the request frame and the response frame provided in embodiments of this application. Frames shown in the accompanying drawings of embodiments of this application are all diagrams of formats of action fields (action fields) in the frames.

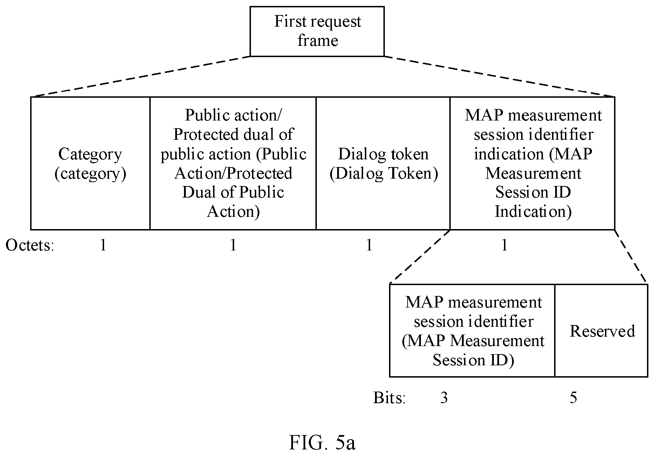

FIG. 5a is a diagram of a format of a first request frame according to an embodiment of this application. As shown in FIG. 5a, the first request frame may include a category (category), a public action/protected dual of public action (public action/protected dual of public action) (or referred to as a public function/protected dual of public function), a dialog token (dialog token), and a MAP measurement session identifier indication (MAP measurement session ID indication). The MAP measurement session ID indication field may be used to carry a MAP measurement session ID. Other content in the first request frame is not limited in embodiments of this application.

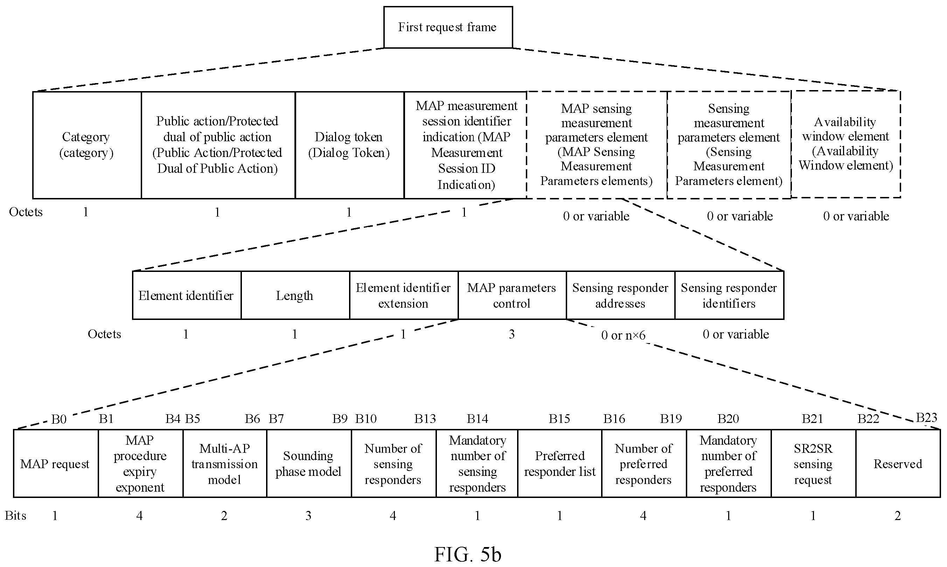

Further, FIG. 5b is a diagram of a format of another first request frame according to an embodiment of this application. As shown in FIG. 5b, the first request frame may further include at least one of the following: a MAP sensing measurement parameters element (MAP sensing measurement parameters elements), a sensing measurement parameters element (sensing measurement parameters element), and an availability window element (availability window element). The MAP sensing measurement parameters element in the first request frame may carry a related parameter that is for a sensing measurement session corresponding to the MAP sensing measurement session and that is recommended by the MAP sensing measurement initiator to the MAP sensing measurement responder, and the sensing measurement parameters element in the first request frame may carry a sensing parameter that is for the sensing measurement session corresponding to the MAP sensing measurement session and that is recommended by the MAP sensing measurement initiator to the MAP sensing measurement responder.
(1) The MAP sensing measurement parameters element is described as follows:
   The MAP sensing measurement parameters element may carry a parameter that is for a sensing measurement session between the MAP sensing measurement responder and a sensing responder corresponding to the MAP sensing measurement responder and that is recommended by the MAP sensing measurement initiator to the MAP sensing measurement responder. For example, the MAP sensing measurement parameters element may carry a parameter that is for a sensing measurement session and that is recommended or required by the first AP to the second AP. For a procedure of the MAP sensing measurement session, the second AP is a MAP sensing measurement responder. For a procedure of the sensing measurement session, the second AP is a sensing measurement initiator.

For example, as shown in FIG. 5b, the MAP sensing measurement parameters element includes at least one of the following: an element identifier (element ID), a length (length), an element identifier extension (element ID extension), MAP parameters control (MAP parameters control) (which may also be referred to as joint sensing parameters control), sensing responder addresses (sensing responder addresses), and sensing responder identifiers (sensing responder IDs). For example, the MAP parameters control field may include at least one of the following: a MAP request (MAP request) (or referred to as a joint sensing request), a MAP procedure expiry exponent (MAP procedure expiry exponent) (or referred to as a joint sensing procedure expiry exponent), a multi-AP transmission model (MAP transmission model), a sounding phase model (sounding phase model), a number of sensing responders (number of sensing responder), a mandatory number of sensing responders (mandatory number of responder) (required or mandatory), a preferred responder list (preferred responder list), a number of preferred responders (number of preferred responders), a mandatory number of preferred responders (mandatory preferred responder), and a sensing responder to sensing responder (sensing responder to sensing responder, SR2SR) sounding request (SR2SR sounding request).

The following illustrates each field in the MAP parameters control field.
1) The MAP request field indicates a frame in which the MAP sensing measurement parameters element is carried. For example, the MAP request field is set to "1", to indicate that the MAP sensing measurement parameters element is carried in the first request frame (for example, a request frame of a MAP sensing measurement session). The MAP request field is set to "0", to indicate that the MAP sensing measurement parameters element is carried in the first response frame (for example, a response frame of a MAP sensing measurement session).
2) The MAP procedure expiry exponent field is used by the MAP sensing measurement responder (for example, the second AP) to determine whether to terminate a MAP sensing measurement session. The MAP procedure expiry exponent field includes an unsigned integer, and may indicate a time length. In a MAP sensing agreement time window, after listening to a frame (for example, a frame related to the MAP sensing measurement session or a frame related to the MAP measurement session ID) on a channel, the second AP starts to count down duration indicated by the field. When the countdown ends, if no frame exchange occurs on the channel, the second AP considers that a current MAP sensing measurement session procedure ends. For example, a value of the field may be 2^{MAP procedure expiry exponent+8} milliseconds, and a value of the parameter MAP procedure expiry exponent is equal to duration indicated by the MAP procedure expiry exponent field.
3) The MAP transmission model field indicates a multi-AP coordinated transmission model, to support coordinated transmission of frames (for example, a control frame or a management frame) in a sensing measurement process by a plurality of APs. For example, the field may indicate different transmission models by using two bits. For example, when the MAP transmission model field is 00, it indicates that the multi-AP coordinated transmission model is coordinated beamforming (coordinated beamforming, CBF), and N APs may send a frame in a sensing measurement process based on the CBF. Embodiments of this application are not limited to CBF. In the future, another value in the MAP transmission model field may be used for indication in a multi-AP coordinated transmission method suitable for embodiments of this application.
4) The sounding phase model field indicates a TB sounding phase model established by the MAP sensing measurement responder (for example, the second AP). For example, the field may indicate different TB sounding phases by using two bits. For example, when the sounding phase model field is 00, the second AP may choose to establish an NDPA sounding phase; when the sounding phase model field is 01, the second AP may choose to establish a TF sounding phase; and when the sounding phase model field is 10, the second AP may randomly select one of the NDPA sounding phase and the TF sounding phase.
5) The number of sensing responders field indicates a number of sensing responders included in a sensing measurement session that needs to be established by the MAP sensing measurement responder (for example, the second AP).
6) The mandatory number of sensing responders field indicates whether the number of sensing responders indicated in the number of sensing responders field is mandatory. For example, the field may perform indicating by using one bit. When the mandatory number of sensing responders field is "0", it represents that a number of STAs indicated in the number of sensing responders field is optional, and the number of STAs may be considered as a reference quantity, provided that the number of STAs is met as much as possible. On the contrary, when the mandatory number of sensing responders field is "1", it represents that a number of STAs indicated in the number of sensing responders field needs to meet a requirement.
7) The preferred responder list field indicates whether to provide a preferred sensing responder list for the MAP sensing measurement responder (for example, the second AP). For example, when the preferred responder list field is "1", it represents that a preferred sensing responder list is provided for the second AP, address information of a preferred sensing responder (for example, carried in a sensing responder addresses field in the MAP sensing measurement parameters element in the first request frame shown in FIG. 5b) is carried in the MAP sensing measurement parameters element in the first request frame, and the second AP needs to search the preferred sensing responder list for a STA to initiate a sensing measurement session; and when the preferred responder list field is "0", it represents that no sensing responder is recommended to the second AP, and the second AP searches for a proper STA in a BSS of the second AP to initiate a sensing request.
8) The number of preferred responders field indicates a number of sensing responders recommended to the MAP sensing measurement responder (for example, the second AP). For example, if the number of preferred responders field is "1", the number of preferred responders field indicates a number of medium access control (medium access control, MAC) addresses of recommended sensing responders included in the sensing responder addresses field. If the number of preferred responders field is "0", the field is reserved. For example, the character may be set to 0 completely, and the second AP does not read the field.
9) The mandatory number of preferred responders field indicates whether the sensing responder recommended to the MAP sensing measurement responder (for example, the second AP) is mandatory. For example, the field may perform indicating by using one bit. When the mandatory number of preferred responders field is "0", it represents that the recommended sensing responder is optional, and the recommended sensing responder may be considered as a reference, and a sensing responder that finally participates in sensing is searched for in the recommended sensing responder as much as possible. On the contrary, when the mandatory number of preferred responders field is "1", it represents that the sensing responder that finally participates in sensing needs to be searched for in the recommended sensing responder.
10) The SR2SR sounding request field indicates whether SR2SR sensing needs to be established. For example, when the SR2SR sounding request field is "0", it represents that the SR2SR sensing is not required, and when the SR2SR sounding request field is "1", it represents that the SR2SR sensing is required.

(2) The sensing measurement parameters element may be described as follows:
The sensing measurement parameters element carries a sensing parameter that is for a sensing measurement session and that is recommended by the MAP sensing measurement initiator to the MAP sensing measurement responder. For example, the sensing measurement parameters element may include at least one of the following: a bandwidth (bandwidth, BW), a maximum (Max) transmit (transmit, TX) spatial stream (spatial stream, SS) and maximum receive (receive, RX) SS, a maximum transmit space time stream (space time stream, STS) and maximum receive STS, a number of receive antennas (Number of RX Antennas), a number of receive links, a number of transmit antennas, and a number of transmit links. The BW field indicates a sensing measurement bandwidth, the maximum TX SS and maximum RX SS field may indicate a maximum spatial stream, the maximum TX STS and maximum RX STS field may indicate a maximum space time stream, and the number of receive antennas field indicates a number of antennas used by a sensing PPDU receive end.

(3) The availability window element may be described as follows:
For example, the element may be used to carry a responding STA (responding STA, RSTA) availability window element. The RSTA availability window element is a specific time and period that are used for the MAP sensing measurement session and that are allocated by the MAP sensing measurement initiator to the MAP sensing measurement responder.

For example, the first request frame (not shown in FIG. 5a and FIG. 5b) may further include a field, and the field may indicate whether the MAP sensing initiator may serve as a sensing measurement initiator to participate in the sensing measurement session. For example, the field may be referred to as a "field indicating whether a MAP sensing measurement initiator serves as a sensing measurement initiator", and the field may occupy 1 bit. If this field is set to 1, it represents that the MAP sensing measurement initiator may serve as the sensing measurement initiator. If this field is set to 0, it represents that the MAP sensing measurement initiator does not serve as the sensing measurement initiator.

302: The MAP sensing measurement responder sends a first response frame to the MAP sensing measurement initiator, and correspondingly, the MAP sensing measurement initiator receives the first response frame. The first response frame may include a MAP measurement session ID.

The first response frame is for responding to the first request frame. The MAP measurement session ID in the first response frame is the same as the MAP measurement session ID in the first request frame, and both identify the MAP sensing measurement session initiated by the MAP sensing measurement initiator (for example, the first AP). For example, the first AP may effectively learn, based on the MAP measurement session ID in the first response frame, that the first response frame is a response to the first request frame, to learn content replied by the second AP to the first request frame.

The following describes in detail the first response frame in this embodiment of this application.

The first response frame may be referred to as a MAP sensing measurement response (MAP sensing measurement response) frame, a protected MAP sensing measurement response frame, or another frame having a similar function/role. For ease of description, in the following, when a specific example is involved, an example in which the first request frame is a MAP sensing measurement request frame and the first response frame is a MAP sensing measurement response frame is used.

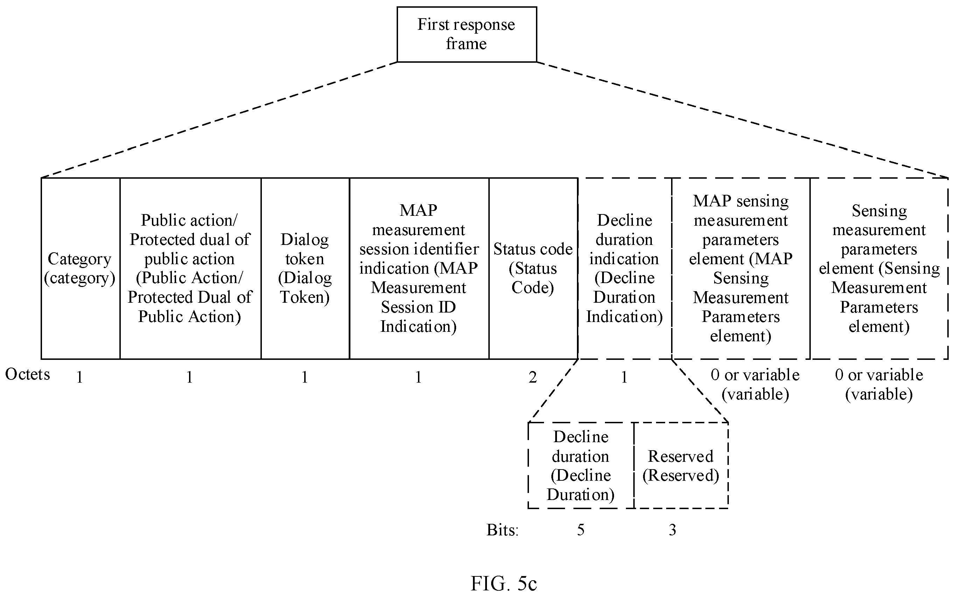

FIG. 5c is a diagram of a format of a first response frame according to an embodiment of this application. As shown in FIG. 5c, the first response frame may include a MAP sensing measurement identifier indication field. For related descriptions of the MAP sensing measurement session identifier indication field, refer to FIG. 5a. Details are not described herein again.

Further, as shown in FIG. 5c, the first response frame may further include a status code (status code) field, and the status code field may indicate a response result of the MAP sensing measurement responder (for example, the second AP). For example, the status code field may indicate at least one of the following: success (success), rejected_with_suggested_changes (rejected_with_suggested_changes), and request_declined (request_declined). For example, "success" represents that the MAP sensing measurement responder (for example, the second AP) agrees to establish the MAP sensing measurement session requested by the first request frame. "Request_declined" represents that the second AP does not agree to establish the MAP sensing measurement session requested by the first request frame. "Rejected_with_suggested_changes" represents that the second AP does not agree to establish the MAP sensing measurement session, but the second AP may provide some suggested parameters for the first AP, and the first AP may initiate a request frame of the MAP sensing measurement session based on the parameters suggested by the second AP. For example, when the status code field indicates "rejected_with_suggested_changes", the first response frame may further include a MAP sensing measurement parameters element and/or a sensing measurement parameters element, and the two elements may be used to carry a suggested parameter provided by the second AP for the first AP. For example, the MAP sensing measurement parameters element and the sensing measurement parameters element may be related parameters that are used when the second AP establishes a sensing measurement session corresponding to the MAP sensing measurement session and that are recommended by the second AP to the first AP. For specific descriptions of the two elements, refer to FIG. 5b. Details are not described herein again.

Further, as shown in FIG. 5c, the first response frame may further include a decline duration indication (decline duration indication) field. The decline duration indication field may include a decline duration (decline duration) field. The decline duration field may be used by the MAP sensing measurement responder (for example, the second AP) to indicate the MAP sensing measurement initiator (the first AP) not to initiate a MAP sensing measurement session (or not to send a request frame of a MAP sensing measurement session) within duration indicated by the decline duration field. Alternatively, the decline duration field may be used by the MAP sensing measurement responder (for example, the second AP) to indicate to the MAP sensing measurement initiator (for example, the first AP) that the MAP sensing measurement responder does not want to receive the request frame of the MAP sensing measurement session within duration indicated by the decline duration field. For example, when the status code field indicates "request_declined", the first response frame may include the decline duration indication field, and the decline duration indication field may represent duration within which the second AP requires the first AP not to send the first request frame again after the first request frame is declined.

For example, after receiving the first response frame, the first AP may learn, from the MAP measurement session ID indication field in the first response frame, that the first response frame is a response frame for the first request frame, and learn, from the status code field in the first response frame, a response result of the second AP. In an example, when the status code field indicates "success", the first AP and the second AP may establish the MAP sensing measurement session based on content in the first request frame. The second AP may establish a sensing measurement session with a STA corresponding to the second AP based on the content recommended in the first request frame. In another example, when the status code field indicates "request_declined", the first AP may learn, based on the decline duration indication field, that the second AP does not want to receive the first request frame again within the duration indicated by the field. After the duration indicated by the field, the first AP may send the first request frame to the second AP again. In still another example, when the status code field indicates "rejected_with_suggested_changes", the first AP may initiate a request frame of a MAP sensing measurement session again based on a parameter recommended by the second AP in the first response frame (for example, related content in the first request frame sent by the first AP again may be determined based on a related parameter in the first response frame).

In this embodiment of this application, the first request frame sent by the MAP sensing measurement initiator to the MAP sensing measurement responder carries the MAP measurement session ID, and APs participating in multi-AP coordination can effectively identify the MAP sensing measurement session based on the MAP measurement session ID. Therefore, different MAP measurement session IDs represent different MAP sensing measurement sessions, thereby effectively improving flexibility of managing the MAP sensing measurement session. For example, the MAP sensing measurement initiator allocates MAP measurement session IDs to different MAP sensing measurement sessions, so that each AP participating in the MAP sensing measurement session can learn, based on the MAP measurement session ID, sensing measurement sessions that correspond to a same MAP sensing measurement session. For example, the MAP sensing measurement initiator allocates MAP measurement session IDs to different MAP sensing measurement sessions, so that when the MAP sensing measurement initiator or the MAP sensing measurement responder needs to terminate a MAP sensing measurement session, the MAP sensing measurement initiator or the MAP sensing measurement responder can effectively identify the MAP sensing measurement session based on the MAP measurement session ID.

**Some other embodiments of this application provide a method for terminating a MAP sensing measurement session.**

For related descriptions of a first AP, a second AP, and the like in the method, refer to FIG. 3. Details are not described herein again. The method for terminating a MAP sensing measurement session is shown as follows:
In a possible scenario, after the MAP sensing measurement session is established completely, each AP may perform sensing measurement with a STA corresponding to the AP. When sensing measurement does not need to be continued, the MAP sensing measurement session may be terminated. The MAP sensing measurement initiator or the MAP sensing measurement responder may initiate a termination frame. For example, the first AP may send the termination frame. For another example, the second AP may send the termination frame.

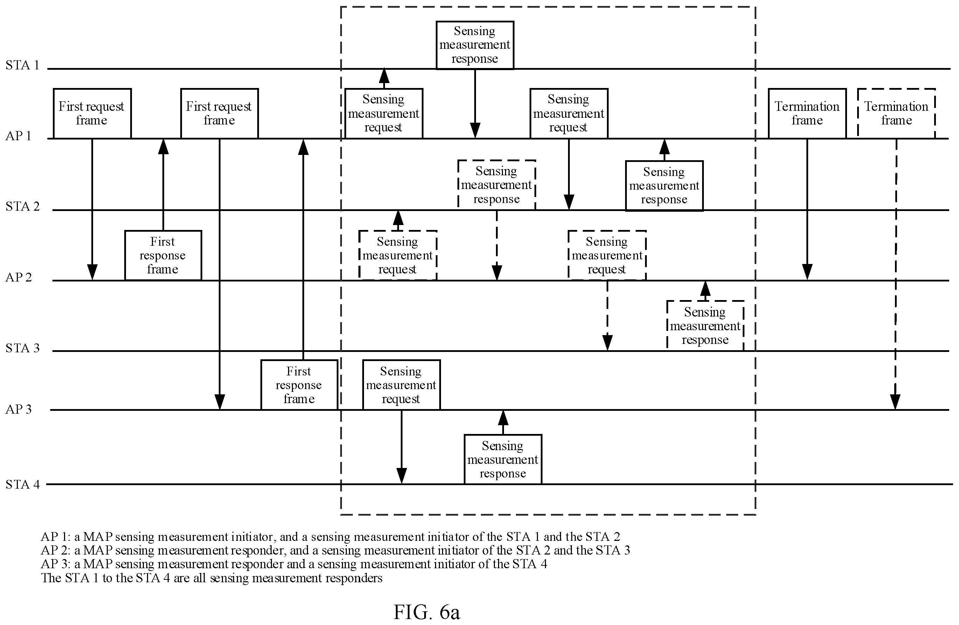

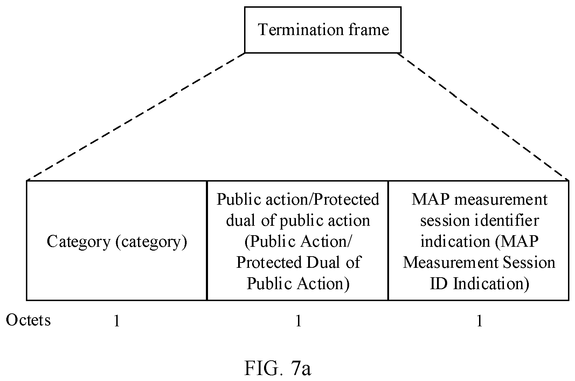

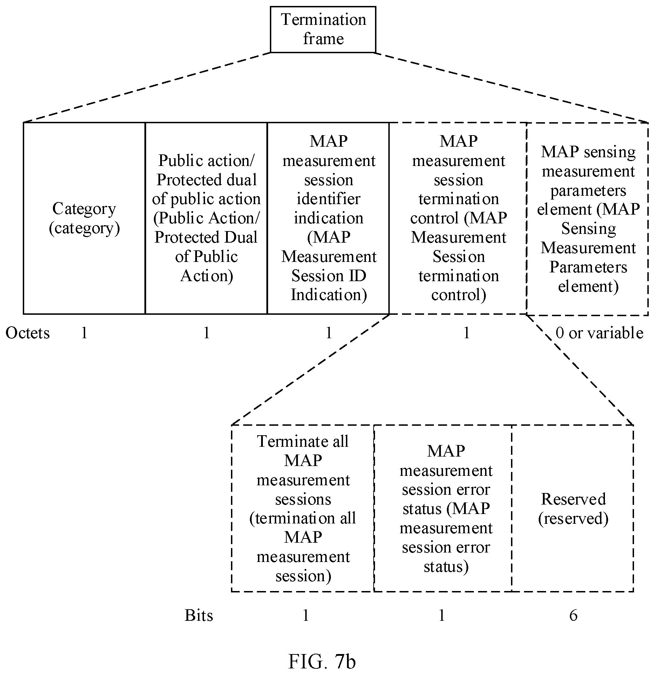

The procedure shown in FIG. 4b is used as an example. In an example, as shown by a termination frame in a solid line part in FIG. 6a, an AP 1 may send the termination frame to an AP 2, to terminate one or more MAP sensing measurement sessions between the AP 1 and the AP 2 by using the termination frame. In another example, as shown by termination frames in the solid line part and a dashed line part in FIG. 6a, the AP 1 may separately send termination frames to the AP 2 and an AP 3, and the AP 1 may separately terminate one or more MAP sensing measurement sessions between the AP 1 and the AP 2 and one or more MAP sensing measurement sessions between the AP 1 and the AP 3 by using the termination frames. Herein, an example in which the AP 1 initiates the termination frame is used for description. During specific implementation, the AP 2 or the AP 3 may alternatively initiate the termination frame. Details are not described herein again. For specific descriptions of the termination frame, refer to FIG. 7a and FIG. 7b below. Details are not described herein.

In another possible scenario, in a MAP sensing session establishment phase, the MAP sensing measurement responder receives the first request frame, and may agree to (for example, set the status code field in the first response frame to "success") the first request frame of the MAP sensing measurement initiator based on information (for example, information when the first response frame is replied) of the MAP sensing measurement responder at that time. Then, in a process in which the MAP sensing measurement responder establishes a sensing measurement session with a STA corresponding to the MAP sensing measurement responder, it is found that the sensing measurement session cannot be established according to a requirement of the first request frame. In this case, the MAP sensing measurement responder may send a termination frame to terminate the MAP sensing measurement session that has been agreed with the MAP sensing measurement initiator. In this scenario, the MAP sensing measurement responder may send the termination frame. For example, the second AP sends the termination frame to another AP (for example, the first AP) participating in coordination.

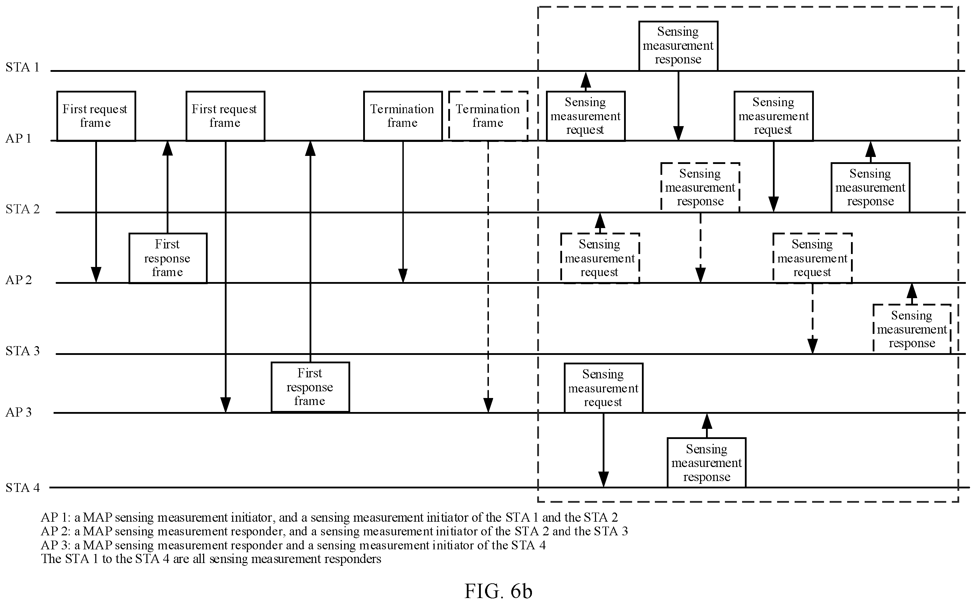

The procedure shown in FIG. 4b is used as an example. In an example, as shown by a termination frame in a solid line part in FIG. 6b, an AP 1 may send the termination frame to an AP 2, to terminate one or more MAP sensing measurement sessions between the AP 1 and the AP 2 by using the termination frame. Because the MAP sensing measurement session between the AP 1 and the AP 2 is to be terminated, a MAP sensing measurement session between the AP 1 and an AP 3 still continues to be performed, and the AP 1 may share a sensing result of the AP 3, or the AP 1 and the AP 3 may share a sensing result. When a MAP sensing measurement session initiated by the AP 1 is also established between the AP 2 and the AP 3, the MAP sensing measurement session between the AP 2 and the AP 3 also continues to be performed, and the AP 2 or the AP 3 may share a sensing result of the other party, or the AP 3 and the AP 2 may share a sensing result. In another example, as shown by termination frames in the solid line part and a dashed line part in FIG. 6b, the AP 1 may separately send termination frames to the AP 2 and the AP 3, to terminate the MAP sensing measurement session between the AP 1 and the AP 2 and the MAP sensing measurement session between the AP 1 and the AP 3 by using the termination frames. When the MAP sensing measurement session initiated by the AP 1 is also established between the AP 2 and the AP 3, the MAP sensing measurement session between the AP 2 and the AP 3 still continues to be performed, and the AP 2 or the AP 3 may share a sensing result of the other party, or the AP 3 and the AP 2 may share a sensing result. Herein, an example in which the AP 1 initiates the termination frame is used for description. During specific implementation, the AP 2 or the AP 3 may alternatively initiate the termination frame. Details are not described herein again. For specific descriptions of the termination frame, refer to FIG. 7a and FIG. 7b below. Details are not described herein.

Terminating a MAP sensing measurement session shown in embodiments of this application may also be referred to as closing a MAP sensing measurement session. The termination frame may also be referred to as a MAP sensing measurement session termination frame, a MAP sensing measurement session closing frame, a protected MAP sensing measurement session termination frame, or another frame having a similar function/role. Examples are not enumerated herein.

FIG. 7a is a diagram of a format of a termination frame according to an embodiment of this application. The termination frame may include at least one of the following: a category (category), a public action/protected dual of public action, and a MAP measurement session identifier indication. The MAP sensing session identifier indication field may identify a MAP sensing measurement session. A receive end of the termination frame may terminate, by using the MAP sensing session ID indication field, the MAP sensing measurement session indicated by the MAP sensing session identifier indication field. For related descriptions of the MAP measurement session ID indication field, refer to FIG. 5a, FIG. 5b, and the like. Details are not described herein again.

For the termination frame shown in FIG. 7a, the termination frame may be used to terminate a MAP sensing measurement session that is indicated by the MAP measurement session ID indication field and that is between two communication parties. The termination frame may include one or more MAP measurement session ID indication fields, and each MAP measurement session ID indication field may identify one MAP sensing measurement session. FIG. 7a illustrates one MAP measurement session ID indication field. This should not be construed as a limitation on embodiments of this application. The two communication parties shown in embodiments of this application may be an AP that sends a termination frame and an AP that receives the termination frame. For example, the two communication parties may be a MAP sensing measurement initiator and a MAP sensing measurement responder, or the two communication parties may be two MAP sensing measurement responders.

In this embodiment of this application, the termination frame indicates a terminated MAP sensing measurement session by including one or more MAP measurement session ID indication fields, so that an AP that receives the termination frame can clearly learn of a MAP sensing measurement session that is between the AP and an AP that sends the termination frame and that needs to be terminated, and flexibility of indicating the terminated MAP sensing measurement session is higher.

Further, as shown in FIG. 7b, the termination frame may further include MAP measurement session termination control (MAP measurement session termination control). For example, the MAP measurement session termination control field may include at least one of the following: terminate all MAP measurement sessions (termination all MAP measurement session) and a MAP measurement session error status (MAP measurement session error status).

The following describes the MAP measurement session termination control field.
(1) The terminate all MAP measurement sessions field may indicate whether to terminate all MAP sensing measurement sessions between two communication parties.

In an example, a value of the terminate all MAP measurement sessions field being a first value may indicate to terminate all MAP sensing measurement sessions between the AP that sends the termination frame and the AP that receives the termination frame. In this case, the MAP measurement session ID indication field may be set to reserved. The foregoing all sensing measurement sessions include a MAP sensing measurement session that has been established, and may also include a MAP sensing measurement session that has not been established completely. The termination frame sent by the AP 1 to the AP 2 shown in FIG. 6a is used as an example. When a value of the terminate all MAP measurement sessions field in the termination frame is a first value, it may indicate to terminate all MAP sensing measurement sessions established between the AP 1 and the AP 2. The termination frame sent by the AP 2 to the AP 1 shown in FIG. 6b is used as an example. When a value of the terminate all MAP measurement sessions field in the termination frame is a first value, it may indicate to terminate a MAP sensing measurement session that has not been established completely and that the AP 2 has been agreed with the AP 1.

In another example, the value of the terminate all MAP measurement sessions field being a second value may indicate to terminate a MAP sensing measurement session that is identified by the MAP measurement session ID indication field and that is between the two communication parties. The termination frame sent by the AP 1 to the AP 2 shown in FIG. 6a is used as an example. When the value of the terminate all MAP measurement sessions field in the termination frame is the second value, it may indicate to terminate a MAP sensing measurement session that is identified by the MAP measurement session ID indication field and that is between the AP 1 and the AP 2. The termination frame sent by the AP 2 to the AP 1 shown in FIG. 6b is used as an example. When the value of the terminate all MAP measurement sessions field in the termination frame is the second value, it may indicate to terminate a MAP sensing measurement session that is identified by the MAP measurement session ID indication field, that has not been established completely, and that the AP 2 has been agreed with the AP 1.

For example, the terminate all MAP measurement sessions field may occupy 1 bit. For example, the first value may be 1, and the second value may be 0. Certainly, the terminate all MAP measurement sessions field may further occupy more bits. Examples are not enumerated herein.

(2) The MAP measurement session error status field may indicate a reason for terminating a MAP sensing measurement session. For example, when the MAP measurement session error status field is 1, it may represent that the reason for terminating a MAP sensing measurement session is that a corresponding sensing measurement session cannot be established as required. In this case, the termination frame may carry at least one of a MAP sensing measurement parameters element (as shown in FIG. 7b) and a sensing measurement parameters element (not shown in FIG. 7b). For example, the AP that sends the termination frame may indicate, by using the two elements, a recommended parameter to the AP that receives the termination frame, so that when the AP that receives the termination frame (for example, a MAP sensing measurement initiator) needs to initiate a MAP sensing measurement session again, the AP that receives the termination frame may initiate the MAP sensing measurement session based on the parameter recommended by the AP that sends the termination frame. For related descriptions of the MAP sensing measurement parameters element and the sensing measurement parameters element, refer to FIG. 5b and the like. Details are not described herein again. For example, when the value of the terminate all MAP measurement sessions field is the first value, a value of the MAP measurement session error status field may be 0. The value of the MAP measurement session error status field is 0, and the AP that sends the termination frame may be a MAP sensing measurement initiator, or may be a MAP sensing measurement responder.

In this embodiment of this application, the MAP measurement session termination control field and the MAP measurement session ID indication field are used to indicate to terminate one MAP sensing measurement session or all MAP sensing measurement sessions between the two communication parties, thereby effectively reducing signaling overheads.

With reference to the one or more MAP measurement session ID indication fields shown in FIG. 7a and the MAP measurement session termination control field shown in FIG. 7b, the termination frame may also include one or more MAP measurement session ID indication fields and a MAP measurement session termination control field. In this case, one MAP sensing measurement session, a plurality of MAP sensing measurement sessions, or all MAP sensing measurement sessions between the two communication parties may be terminated by using the termination frame. For this implementation, refer to the related descriptions in FIG. 7a and FIG. 7b. Details are not described herein again.

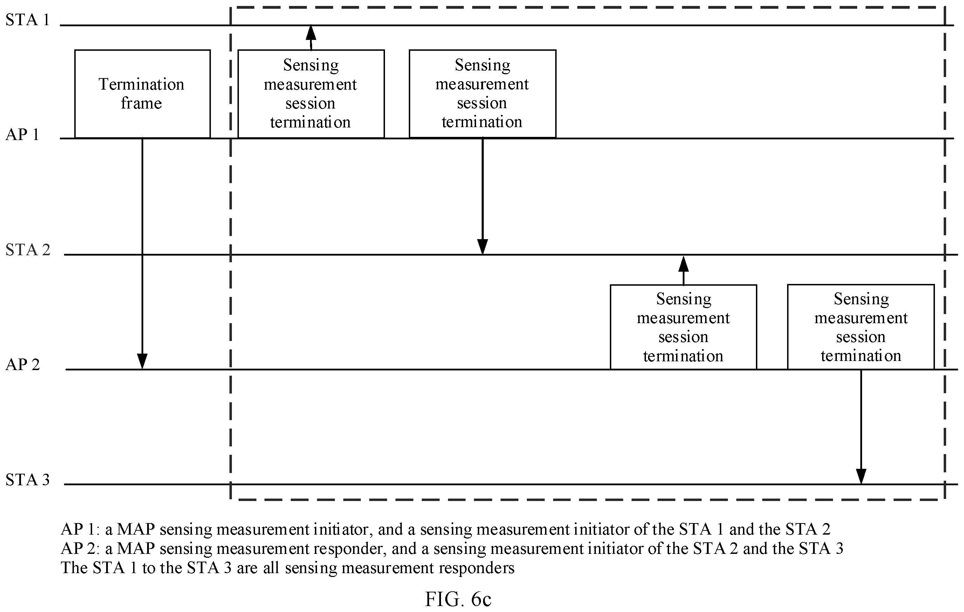

For example, an AP 1 sends a termination frame to an AP 2. FIG. 6c is a diagram of a procedure for terminating a MAP sensing measurement session according to an embodiment of this application. For descriptions of the APs and the STAs in FIG. 6c, refer to FIG. 4a. Details are not described herein again.

As shown in FIG. 6c, the AP 1 sends the termination frame to the AP 2. After receiving the termination frame, the AP 2 may parse the termination frame. For example, the AP 2 may learn, by parsing the MAP measurement session termination control field and the MAP measurement session ID indication field in the termination frame, that the AP 2 needs to terminate a MAP sensing measurement session (for example, a MAP sensing measurement session identified by the MAP measurement session ID field) between the AP 2 and the AP 1, or terminate all MAP sensing measurement sessions between the AP 2 and the AP 1. When the AP 1 further needs to terminate a MAP sensing measurement session between the AP 1 and another coordinating AP, the AP 1 may further send a termination frame to the another coordinating AP.

For example, after sending the termination frame, the AP 1 may terminate a sensing measurement session with a STA corresponding to the AP 1. After parsing the termination frame, the AP 2 may terminate a sensing measurement session with a STA corresponding to the AP 2. A sequence of sending the sensing measurement session termination frames by the AP 1 and the AP 2 shown in FIG. 6c is merely an example, and should not be construed as a limitation on embodiments of this application.

In this embodiment of this application, the AP that sends the termination frame may explicitly indicate, by using the termination frame, the AP that receives the termination frame to terminate a MAP sensing measurement session or all MAP sensing measurement sessions between the two communication parties, thereby effectively improving the procedure for terminating a MAP sensing measurement session.

**Still some other embodiments of this application provide a method for establishing a multi-AP sensing by proxy (multi-AP sensing by proxy, MAP SBP) procedure.**

For related descriptions of a first AP, a second AP, and the like in the method, refer to FIG. 3. Details are not described herein again. The method for establishing a MAP SBP procedure is shown as follows:

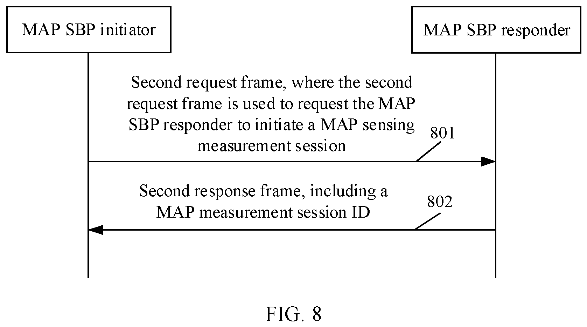

FIG. 8 is a diagram of a method for establishing a MAP SBP procedure according to an embodiment of this application. As shown in FIG. 8, the method includes the following steps.

801: A MAP SBP initiator sends a second request frame to a MAP SBP responder, and correspondingly, the MAP SBP responder receives the second request frame. The second request frame is used to request the MAP SBP responder to initiate a MAP sensing measurement session.

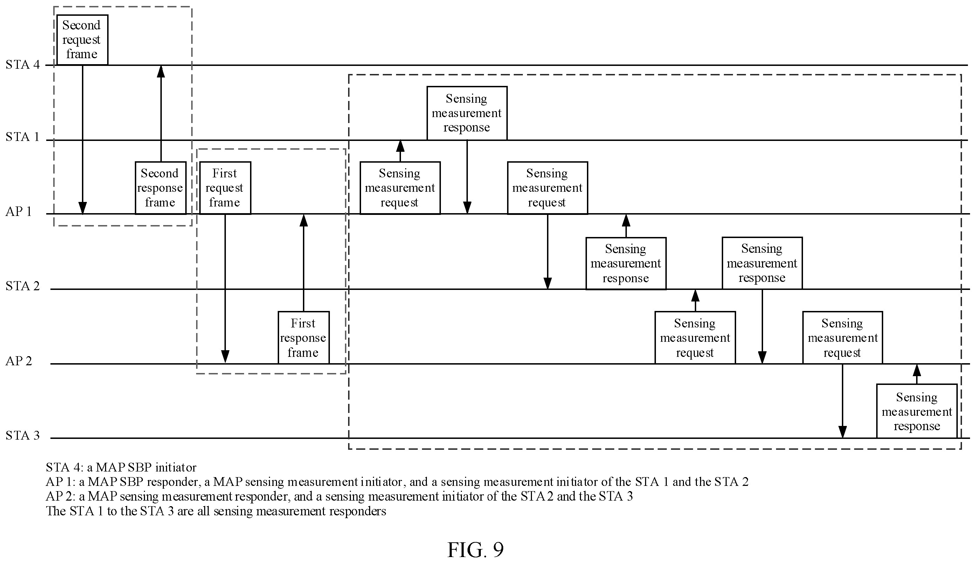

Because the MAP SBP initiator requests, by using the second request frame, the MAP SBP responder to initiate the MAP sensing measurement session, when the MAP SBP responder participates in the MAP sensing measurement session, the MAP SBP responder may also be a MAP sensing measurement initiator. As shown in FIG. 9, a STA 4 may send a second request frame to an AP 1 as a MAP SBP initiator, to request the AP 1 to initiate a MAP sensing measurement session. The AP 1 serves as a MAP SBP responder. After receiving the second request frame, the AP 1 may reply with a second response frame to the STA 4 (as shown in step 802 below). For example, the AP 1 may serve as an initiator of the MAP sensing measurement session, to initiate a MAP sensing measurement procedure. During specific implementation, the STA 4 may also send a second request frame to an AP 2 as the MAP SBP initiator, to request the AP 2 to initiate a MAP sensing measurement session. The AP 2 serves as a MAP SBP responder. After receiving the second request frame, the AP 2 may reply with a second response frame to the STA 4. Because the STA 4 separately sends second request frames to the AP 1 and the AP 2, a MAP SBP procedure initiated by the STA 4 to the AP 1 and a MAP SBP procedure initiated by the STA 4 to the AP 2 may be considered as different MAP SBP procedures. For ease of description, in the following, when a specific example is involved, an example in which the STA 4 sends the second request frame to the AP 1 is used for description.

A specific manner of the MAP sensing measurement procedure initiated by the AP 1 (or the AP 2) is not limited in embodiments of this application. For example, for a specific manner in which the AP 1 (or the AP 2) initiates the MAP sensing measurement procedure, refer to the related descriptions in FIG. 3. Details are not described herein again. For other descriptions of FIG. 9, refer to FIG. 4a and the like above. Details are not described herein again.

For example, the second request frame may be referred to as a MAP SBP request (MAP SBP request) frame or another frame having a similar function/role.

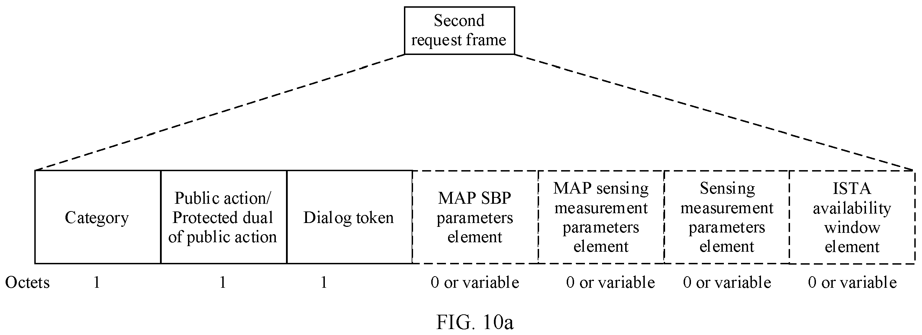

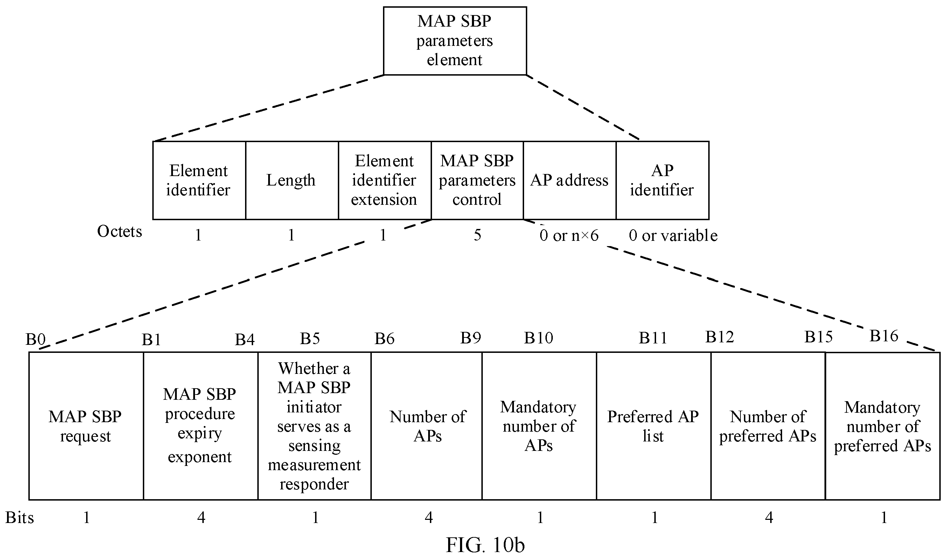

FIG. 10a is a diagram of a format of a second request frame according to an embodiment of this application. As shown in FIG. 10a, the second request frame may include a category (category), a public action/protected dual of public action (public action/protected dual of public action) (or referred to as a public function/protected dual of public function), and a dialog token (dialog token). Further, the second request frame may further include at least one of the following: a MAP SBP parameters element (MAP SBP parameters element), a MAP sensing measurement parameters element (MAP sensing measurement parameters element), a sensing measurement parameters element, and an initiating STA (initiating STA, ISTA) availability window element (ISTA availability window element). The MAP SBP parameters element in the second request frame may carry a related parameter that is for a MAP sensing measurement session corresponding to a MAP SBP procedure initiated by the MAP sensing measurement initiator and that is recommended by the MAP SBP initiator. For example, the MAP SBP parameters element may be used to carry a number of APs participating in the MAP sensing measurement session, addresses of the APs, identifiers of the APs, and the like. The MAP sensing measurement parameters element in the second request frame may carry a related parameter that is for a sensing measurement session (a sensing measurement session corresponding to a MAP sensing measurement session corresponding to the MAP SBP procedure), that may be recommended by the MAP sensing measurement initiator to the MAP sensing measurement responder, and that is recommended by the MAP SBP initiator. The sensing measurement parameters element may carry a sensing parameter that is for a sensing measurement session, that may be recommended by the MAP sensing measurement initiator to the MAP sensing measurement responder, and that is recommended by the MAP SBP initiator.
(1) The ISTA availability window element is used by the MAP SBP initiator to notify the MAP SBP responder of a time period in which the MAP SBP initiator is idle, and the MAP SBP responder may allocate a time and a period of the MAP SBP in the idle time.
(2) For related descriptions of the MAP sensing measurement parameters element, refer to the related descriptions of FIG. 5b in the first request frame. Details are not described herein again. For example, FIG. 9 is used as an example. The MAP sensing measurement parameters element may be used to carry a related parameter that is used to establish a sensing measurement session corresponding to the MAP sensing measurement session and that is recommended or required by the MAP SBP initiator to the MAP SBP responder, for example, a number of sensing responders that need to participate in establishing the sensing measurement session by the AP 2 participating in the MAP sensing measurement session.
(3) For related descriptions of the sensing measurement parameters element, refer to the related descriptions in the first request frame. Details are not described herein again.
(4) The MAP SBP parameters element is described as follows:
   The MAP SBP parameters element may carry a related parameter that is of the MAP SBP initiator for the MAP SBP responder. For example, the MAP SBP parameters element may carry a related parameter that needs to be notified by the STA 4 to the AP 1. For example, FIG. 10b is a diagram of a format of a MAP SBP parameters element according to an embodiment of this application. As shown in FIG. 10b, the MAP SBP parameters element may include at least one of the following: an element identifier (element ID), a length (length), an element identifier extension (element ID extension), MAP SBP parameters control (MAP SBP parameters control), an AP address, and an AP identifier.

1) The element identifier field and the element identifier extension field may jointly indicate a type and a use scenario of a corresponding element (for example, the MAP SBP parameters element). For example, the element identifier extension field may indicate that the MAP SBP parameters element carries a related parameter of the MAP SBP procedure. Specific values of the element identifier field and the element identifier extension field of the MAP SBP parameters element are not limited in embodiments of this application.
2) For content carried in the MAP SBP parameters control field, refer to FIG. 10b. As shown in FIG. 10b, the MAP SBP parameters control field may include at least one of the following: a MAP SBP request (MAP SBP request) (or referred to as a joint SBP request, Co-SBP request), a MAP SBP procedure expiry exponent (MAP SBP procedure expiry exponent), whether a MAP SBP initiator serves as a sensing measurement responder, a number of APs (number of AP), a mandatory number of APs (mandatory number of AP), a preferred AP list (preferred AP list), whether a preferred AP list is mandatory (not shown in FIG. 10b), a number of preferred APs (number of preferred AP), different sensing elements of preferred AP (different sensing element of preferred AP) (not shown in FIG. 10b), a mandatory number of preferred APs, and whether a MAP SBP responder serves as a MAP sensing measurement initiator (not shown in FIG. 10b). The following illustrates the foregoing fields.
   (a) The MAP SBP request field may indicate a frame in which the MAP SBP parameters element is carried. For example, the MAP SBP request field is set to "1", to indicate that the MAP SBP parameters element is carried in a MAP SBP request frame (for example, the second request frame) initiated by a STA (for example, the STA 4). The MAP SBP request field is set to "0", to indicate that the MAP SBP parameters element is carried in a MAP SBP response frame (for example, the second response frame) initiated by a STA. Generally, the category field or the public action/protected dual of public action field in the second request frame may also indicate that the second request frame is a request frame of a MAP SBP procedure initiated by the STA. Therefore, the MAP SBP request field may be an optional field.
   (b) The MAP SBP procedure expiry exponent field is used by the MAP SBP responder to determine whether to terminate the MAP SBP procedure. For example, after the MAP SBP procedure is established completely, a timer starts counting. If there is a new frame exchange between the STA 4 and the AP 1 in the MAP SBP procedure, the timer is refreshed. If there is no new frame exchange, the timer keeps counting. When the timer ends, the MAP SBP procedure ends.
   (c) The field indicating whether a MAP SBP initiator serves as a sensing measurement responder indicates whether the MAP SBP initiator serves as a sensing measurement responder to participate in a sensing measurement session. For example, when the field indicating whether a MAP SBP initiator serves as a sensing measurement responder is "0", it represents that the STA 4 does not need to participate in the sensing measurement session; or when the field indicating whether a MAP SBP initiator serves as a sensing measurement responder is "1", it represents that the STA 4 needs to participate in the MAP sensing measurement session.
   (d) The number of APs field indicates a number of APs that need to be included in a MAP sensing measurement session procedure. For example, the STA 4 may indicate, by using the number of APs field, a number of APs included in a MAP sensing measurement session established by the MAP sensing measurement initiator (for example, the AP 1).
   (e) The mandatory number of APs field indicates whether the number of APs indicated in the number of APs field is mandatory. For example, when the mandatory number of APs field is "0", it represents that the number of APs indicated in the number of APs field is optional. In this case, the number of APs indicated in the number of APs field is a reference quantity, and needs to be met as much as possible. When the mandatory number of APs field is "1", it represents that the number of APs indicated in the number of APs field is mandatory.
   (f) The preferred AP list field indicates whether to provide a preferred AP list for the MAP SBP responder. For example, when the preferred AP list field is "1", it represents that a preferred AP list is provided for the MAP SBP responder, and at least one of a preferred AP address field and an AP identifier field is carried in the MAP SBP parameters element in the second request frame. The MAP SBP responder needs to search the preferred AP list for an AP to initiate a request frame (for example, the first request frame shown above) for a MAP sensing measurement session. When the preferred AP list field is "0", it represents that no preferred AP list is provided for the MAP SBP responder. The MAP SBP responder searches all APs participating in multi-AP coordination for a proper AP to initiate a request frame of a MAP sensing measurement session. For example, a number of AP address fields may be the same as a number of APs in the preferred AP list field. For example, a number of AP identifier fields may be the same as a number of APs in the preferred AP list field. The AP address field shown in FIG. 10b may be used to carry a MAC address of a preferred AP. The AP identifier field shown in FIG. 10b may be used to carry an ID of a preferred AP, an AID or a BSSID of a preferred AP, or other identification information identifying an AP. This is not limited in embodiments of this application. For example, when the MAP SBP responder does not serve as the MAP sensing measurement initiator, the MAP sensing measurement initiator may be determined based on a predetermined AP address field (a 1^{st} AP address field shown in FIG. 10b) in the second request frame, or may be determined based on a predetermined AP identifier field (a 1^{st} AP identifier field shown in FIG. 10b) in the second request frame. How to indicate a MAP sensing measurement initiator is not limited in embodiments of this application.
   (g) The number of preferred APs field indicates a number of preferred APs provided for the MAP SBP responder. For example, if the number of preferred APs field is "1", the number of preferred APs field indicates a number of MAP sensing measurement parameters elements included in the MAP SBP parameters element field, and each MAP sensing measurement parameters element may correspond to one preferred AP. If the number of preferred APs field is "0", the field is reserved.
   (h) The mandatory number of preferred APs field indicates whether a number of preferred APs indicated in the number of preferred APs field is mandatory.
   (i) The different sensing elements of preferred AP field indicates whether to provide different sensing parameters (for example, the MAP sensing measurement parameters element shown in FIG. 10a) for a preferred AP. The different sensing elements of preferred AP field may be meaningful when the preferred AP list is "1". For example, when the different sensing elements of preferred AP field is "1", it represents that different parameters are allocated to the preferred AP; and when the different sensing elements of preferred AP field is "0", it represents that preferred APs uses a same parameter. In this case, the second request frame includes one MAP sensing measurement parameters element. If the different sensing elements of preferred AP field is "0", when the MAP SBP responder needs to send the first request frame to the A2 in the preferred AP, the MAP SBP responder may generate the first request frame based on information obtained from the second request frame. For example, a frame structure of the first request frame is shown in FIG. 5b. In this case, related information in the MAP parameters control field in the MAP sensing measurement parameters element of the first request frame may be determined based on the second request frame.

802: The MAP SBP responder sends a second response frame to the MAP SBP initiator, and correspondingly, the MAP SBP initiator receives the second response frame. The second response frame includes a MAP measurement session ID.

The second response frame is for responding to the second request frame. The MAP measurement session ID in the second response frame may be the same as a MAP measurement session ID in the first request frame. If the MAP SBP responder may serve as a MAP sensing measurement initiator to initiate the MAP sensing measurement session, an identifier of the MAP sensing measurement session is the same as an identifier carried in the MAP measurement session ID indication field in the second response frame replied with by the MAP SBP responder to the MAP SBP initiator.

For example, the second response frame may be referred to as a MAP SBP response (MAP SBP response) frame or another frame having a similar function/role.

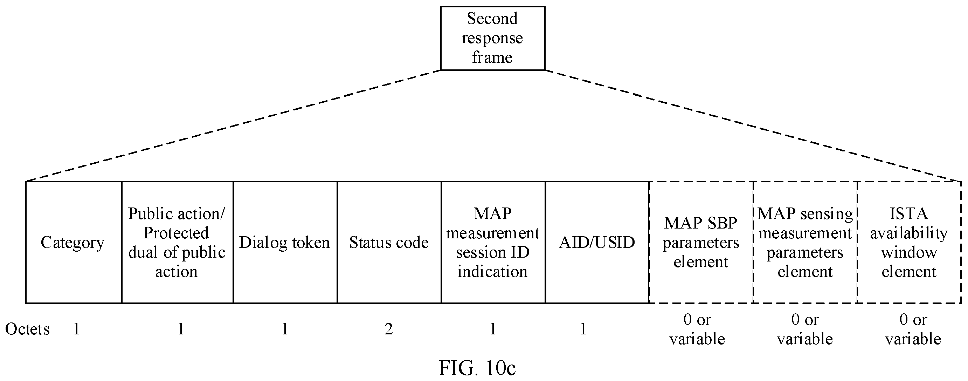

FIG. 10c is a diagram of a format of a second response frame according to an embodiment of this application. As shown in FIG. 10c, the second response frame may include at least one of the following: a category (category), a public action/protected dual of public action (public action/protected dual of public action), a dialog token (dialog token), a status code (status code), a MAP measurement session ID indication, and an associated ID/unassociated station ID (associated ID/unassociated STA ID, AID/USID). Further, the second response frame may further include at least one of the following: a MAP SBP parameters element, a MAP sensing measurement parameters element, an ISTA availability window element, and a decline duration indication (not shown in FIG. 10c). A frame structure of the second response frame is basically the same as that of the second request frame. The following describes in detail fields that carry different information and that are carried in the second response frame and the second request frame.
(1) The category field or the public action/protected dual of public action field may indicate that the second response frame is a response frame for responding to the MAP SBP procedure initiated by the MAP SBP initiator. Specific values of the category field and the public action/protected dual of public action field are not limited in embodiments of this application.
(2) The status code field may indicate whether the MAP SBP responder accepts a request of the second request frame. For example, the status code field may include at least one of the following fields: success, rejected_with_suggested_changes, and request_declined. For example, when the status code field carries the rejected_with_suggested_changes field, the second response frame further includes at least one of the following: a MAP SBP parameters element, a MAP sensing measurement parameters element, and a sensing measurement parameters element. For related descriptions of the status code field, refer to the description of the status code in the first response frame. Details are not described herein again.
(3) The MAP measurement session ID indication field may identify a MAP sensing measurement session. For related descriptions of the MAP measurement session ID indication field, refer to FIG. 5a and the like. Details are not described herein again.
(4) If the MAP SBP initiator (for example, the STA 4) is associated with the MAP SBP responder (for example, the AP 1), the AID/USID field may carry an AID of the MAP SBP initiator. If the MAP SBP initiator is unassociated with the MAP SBP responder, the AID/UDIS field may carry a USID of the MAP SBP initiator. For example, the USID may be allocated by the MAP SBP responder to the MAP SBP initiator.

For example, if the status code field is "success" and the MAP SBP initiator is associated with the MAP SBP responder, the AID/USID field may be set to an AID of the MAP SBP initiator. If the status code field is "success" and the MAP SBP initiator is unassociated with the MAP SBP responder, the AID/USID field may be set to a USID of the MAP SBP initiator.

(5) The decline duration indication field may be used by the MAP SBP responder to indicate the MAP SBP initiator not to initiate a MAP SBP procedure (or not to send a request frame of a MAP SBP procedure) within duration indicated by the decline duration indication field. In this embodiment of this application, when the status code field carries the request_declined field, the second response frame may further include the decline duration field. The MAP SBP initiator may learn, based on the decline duration field, that the MAP SBP responder does not want to receive the request frame (for example, the second request frame) of the MAP SBP procedure again within the duration indicated by the field, thereby improving efficiency of interaction between the MAP SBP initiator and the MAP SBP responder.

For related descriptions of the MAP SBP parameters element, the MAP sensing measurement parameters element, and the ISTA availability window element in the second response frame, refer to the second request frame. Details are not described herein again. The foregoing elements in the second response frame are related parameters recommended by the MAP SBP responder.

In this embodiment of this application, the MAP SBP responder includes the MAP measurement session ID in the second response frame, so that the MAP SBP initiator can effectively learn of an identifier of a MAP sensing measurement session corresponding to a MAP SBP procedure initiated by the MAP SBP responder based on the second request frame, and the MAP SBP initiator can effectively identify the MAP SBP procedure initiated by the MAP SBP responder.

**Still some other embodiments of this application provide a method for terminating a MAP SBP procedure.**

The method for terminating a MAP SBP procedure may be shown as follows:
In a possible scenario, when the MAP SBP initiator (for example, the STA 4 shown in FIG. 9) or the MAP SBP responder (for example, the AP 1 shown in FIG. 9) cannot continue the MAP SBP procedure due to some reasons, or the MAP SBP procedure is no longer required, the MAP SBP initiator or the MAP SBP responder may terminate the MAP SBP procedure by sending a termination frame.

In another possible scenario, after agreeing to the second request frame (for example, setting the status code field in the MAP SBP response frame (for example, the second response frame) sent to the MAP SBP initiator to "success"), the MAP SBP responder finds that the MAP sensing measurement session cannot be established as required. In this case, the MAP SBP responder may send the termination frame to terminate the MAP SBP procedure established between the MAP SBP responder and the MAP SBP initiator.

Terminating a MAP SBP procedure shown in embodiments of this application may also be referred to as closing a MAP SBP procedure. The termination frame may also be referred to as a MAP SBP termination (MAP SBP termination) frame or another frame having a similar function/role. Examples are not enumerated herein.

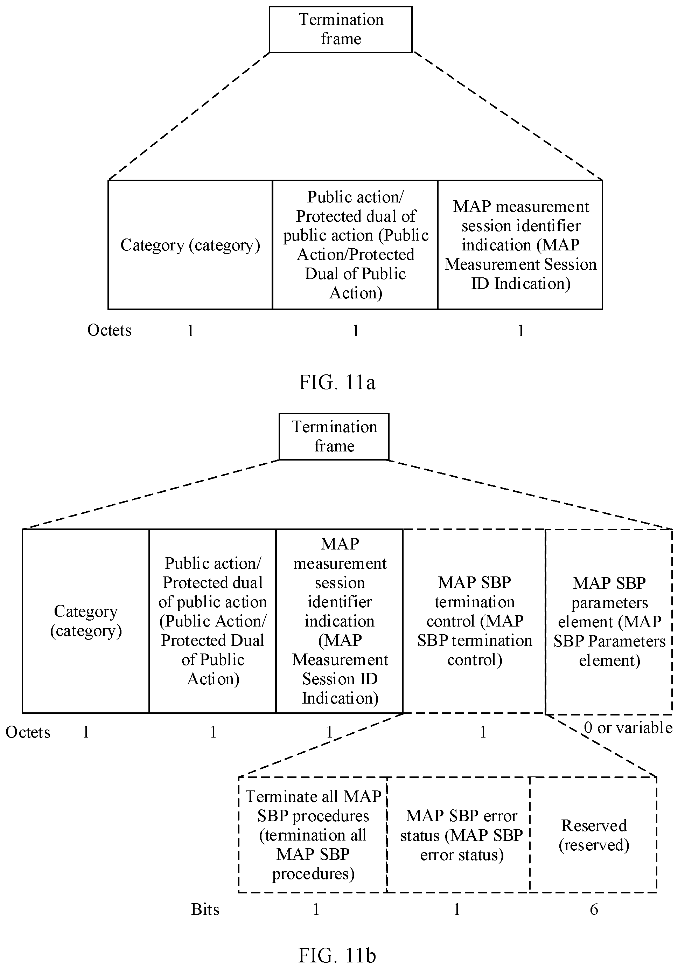

FIG. 11a is a diagram of a format of a termination frame according to an embodiment of this application. The termination frame may include at least one of the following: a category (category), a public action/protected dual of public action, and a MAP measurement session identifier indication. The MAP measurement session identifier indication field may identify a MAP sensing measurement session. A receive end of the termination frame terminates, by using the MAP measurement session ID indication field, the MAP sensing measurement session indicated by the MAP sensing session identifier indication field. For related descriptions of the MAP measurement session ID indication field, refer to FIG. 5a, FIG. 5b, and the like. Details are not described herein again.

For the termination frame shown in FIG. 11a, the termination frame may be used to terminate a MAP SBP procedure that corresponds to a MAP sensing measurement session identified by the MAP measurement session ID indication field and that is between two communication parties. The termination frame may include one or more MAP measurement session ID indication fields, and each MAP measurement session ID indication field may identify one MAP sensing measurement session. FIG. 11a illustrates one MAP measurement session ID indication field. This should not be construed as a limitation on embodiments of this application. The two communication parties shown in embodiments of this application may be a communication apparatus that sends a termination frame and a communication apparatus that receives the termination frame. For example, the two communication parties may be a MAP SBP initiator and a MAP SBP responder.

In this embodiment of this application, the termination frame indicates a MAP SBP procedure corresponding to a terminated MAP sensing measurement session by including one or more MAP measurement session ID indication fields, so that the communication apparatus that receives the termination frame can clearly learn of a MAP SBP procedure corresponding to a MAP sensing measurement session that is between the communication apparatus and the communication apparatus that sends the termination frame and that needs to be terminated, and flexibility of indicating the MAP SBP procedure corresponding to the terminated MAP sensing measurement session is higher.

Further, as shown in FIG. 11b, the termination frame may further include at least one of the following: MAP SBP termination control (MAP SBP termination control) and a MAP SBP parameters element. For example, the MAP SBP termination control field may include at least one of the following: terminate all MAP SBP procedures (termination all MAP SBP procedures) and a MAP BSP error status (MAP SBP error status). The following describes the foregoing fields in detail.
(1) The terminate all MAP SBP procedures field may indicate whether to terminate all MAP SBP procedures between two communication parties.

In an example, when a value of the terminate all MAP SBP procedures field is a first value, it indicates to terminate all MAP SBP procedures between the MAP SBP initiator (for example, the STA 4) and the MAP SBP responder (for example, the AP 1). In this case, the MAP measurement session ID indication field may be set to reserved. Generally, one or more MAP SBP procedures may be established between the MAP SBP initiator and the MAP SBP responder. When the value of the terminate all MAP SBP procedures field in the termination frame is the first value, it may indicate to terminate all MAP SBP procedures that have been established between the STA 4 and the AP 1. All the MAP SBP procedures shown in embodiments of this application include a MAP SBP procedure that has been established completely by the AP 1, and a MAP SBP procedure that has not been established completely and that the AP 1 has been agreed with the STA 4.

In another example, when the value of the terminate all MAP SBP procedures field is a second value, it indicates to terminate a MAP SBP procedure corresponding to a MAP sensing measurement session that is identified by a MAP measurement session ID field and that is initiated by the MAP SBP initiator.

For example, the terminate all MAP SBP procedures field may occupy 1 bit. For example, the first value may be 1, and the second value may be 0. Certainly, the terminate all MAP SBP procedures field may further occupy more bits. Examples are not enumerated herein.

In this embodiment of this application, in an example, the termination frame may terminate a MAP SBP procedure. After the MAP SBP procedure is terminated, a MAP sensing measurement session corresponding to the MAP SBP procedure may also be terminated accordingly. In this case, the MAP SBP responder may send a termination frame to the AP participating in the multi-AP coordination, to terminate, by using the termination frame, the MAP sensing measurement session corresponding to the MAP SBP procedure. For example, the MAP SBP responder may send a termination frame to each AP participating in the multi-AP coordination. In another example, the termination frame may be used to terminate the MAP SBP procedure, or may be used to terminate the MAP sensing measurement session corresponding to the MAP SBP procedure. For example, after receiving the termination frame, the MAP SBP responder needs to terminate both the MAP SBP procedure and the MAP sensing measurement session corresponding to the MAP SBP procedure.

(2) The MAP SBP error status (MAP SBP error status) field may indicate a reason for terminating a MAP SBP procedure. For example, when the MAP SBP error status field is 1, it represents that the reason for terminating a MAP SBP procedure is that a corresponding MAP sensing measurement session (the MAP sensing measurement session is initiated based on the second request frame) cannot be established as required. In this case, the termination frame may carry at least one of the following: a MAP SBP parameters element (MAP SBP parameters element) (carrying a recommended parameter), a MAP sensing measurement parameters element, and a sensing measurement parameters element. When the terminate all MAP SBP procedures field is 1, the MAP SBP error status field may be 0. The MAP SBP error status field may also be referred to as a MAP SBP error code (MAP SBP error code) field. A name of the field is not limited in embodiments of this application.

In this embodiment of this application, a MAP SBP termination control field and the MAP measurement session ID indication field are used to indicate to terminate one MAP SBP procedure or all MAP SBP procedures between the two communication parties, thereby effectively reducing signaling overheads.

In a possible implementation, the termination frame may alternatively include one or more MAP measurement session ID indication fields and the MAP SBP termination control field. In this case, a MAP SBP procedure corresponding to one MAP sensing measurement session between the two communication parties, or a MAP SBP procedure corresponding to each of a plurality of MAP sensing measurement sessions, or a MAP SBP procedure corresponding to each of all MAP sensing measurement sessions may be terminated by using the termination frame. For this implementation, details are not described herein again.

In this embodiment of this application, the communication apparatus that sends the termination frame may explicitly indicate, by using the termination frame, the communication apparatus that receives the termination frame to terminate the MAP SBP procedure corresponding to the MAP sensing measurement session between the two communication parties or the MAP SBP procedure corresponding to all the MAP sensing measurement sessions, thereby effectively improving the procedure for terminating a MAP SBP procedure.

**Still some other embodiments of this application provide a method for establishing a sensing measurement session.**

The method for establishing a sensing measurement session is shown as follows:

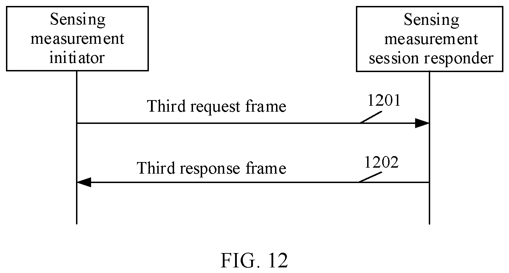

FIG. 12 is a diagram of a method for establishing a sensing measurement session according to an embodiment of this application. As shown in FIG. 12, the method includes the following steps.

1201: A sensing measurement initiator sends a third request frame to a sensing measurement responder, and correspondingly, the sensing measurement responder receives the third request frame.

The third request frame is used to request to establish a sensing measurement session. In a sensing measurement session process, the sensing measurement initiator and the sensing measurement responder may establish a sensing measurement session by using the third request frame and a third response frame that responds to the third request frame.

In a possible implementation, after the MAP sensing measurement initiator and the MAP sensing measurement responder exchange the first request frame and the first response frame, the MAP sensing measurement initiator may serve as a sensing measurement initiator to establish a sensing measurement session with a STA corresponding to the sensing measurement initiator, and the MAP sensing measurement responder may also serve as a sensing measurement initiator to establish a sensing measurement session with a STA corresponding to the sensing measurement initiator. Alternatively, the MAP sensing initiator may not serve as a sensing measurement initiator, and does not participate in a sensing measurement session. For related descriptions of the first request frame and the first response frame, refer to FIG. 3, FIG. 5a, FIG. 5b, FIG. 5c, and the like.

In another possible implementation, after the MAP SBP initiator and the MAP SBP responder exchange the second request frame and the second response frame, the MAP SBP responder may serve as a MAP sensing measurement initiator to establish a MAP sensing measurement session with a MAP sensing measurement responder; or the MAP SBP responder may not serve as a MAP sensing measurement initiator, and does not participate in a MAP sensing measurement session. The MAP sensing measurement initiator may serve as a sensing measurement initiator to establish a sensing measurement session with a STA corresponding to the sensing measurement initiator, and the MAP sensing measurement responder may also serve as a sensing measurement initiator to establish a sensing measurement session with a STA corresponding to the sensing measurement initiator. The STA participating in the sensing measurement session may include a MAP SBP initiator, or may not include a MAP SBP initiator. For related descriptions of the second request frame and the second response frame, refer to FIG. 8, FIG. 10a, FIG. 10b, FIG. 10c, and the like.

The foregoing enumerated manners in which the sensing measurement initiator initiates the sensing measurement session are merely examples. A specific manner in which the sensing measurement initiator initiates the sensing measurement session is not limited in embodiments of this application.

For example, the third request frame may be referred to as a sensing measurement request frame, a protected sensing measurement request frame, or another frame having a similar function/role.

The following shows three third request frames in different frame formats, which are respectively shown as follows:

### Implementation 1

The third request frame includes an AID or a USID of the MAP SBP initiator. For example, the AID or the USID of the MAP SBP initiator may be carried in a sensing measurement parameters element in the third request frame. For example, the sensing measurement session element may include a sensing subelement, and the sensing subelement may include a MAP SBP specific subelement (MAP SBP specific subelement).

Table 1 shows sensing subelement IDs for sensing parameters (sensing subelement IDs for sensing parameters). In this embodiment of this application, the MAP SBP specific subelement is newly added to the third request frame. The MAP SBP specific subelement may carry the AID or the USID of the MAP SBP initiator. A specific value of a subelement ID of the MAP SBP specific subelement and a specific value of a subelement ID of a MAP sensing specific subelement shown in Table 1 are not limited in embodiments of this application.

**Table 1**

| Subelement ID (subelement ID) | Name (name) | Extensible (extensible) |
|---|---|---|
| 0 | non-TB sensing specific subelement (non-TB sensing specific subelement) | Yes (yes) |
| 1 | TB sensing specific subelement (TB sensing specific subelement) | Yes (yes) |
| 2 | SBP specific subelement (SBP specific subelement) | Yes (yes) |
| 3 | MAP SBP specific subelement (MAP SBP specific subelement) | Yes (yes) |
| 4 | MAP sensing specific subelement (MAP sensing specific subelement) | Yes (yes) |
| 5-255 | Reserved (reserved) | |

For example, the AID may include an AID 12. The USID may include a USID 12.

In this embodiment of this application, the MAP SBP specific subelement newly added to the third request frame may have a similar structure to the SBP specific subelement, and content included in the two elements is different. The MAP SBP specific subelement includes the AID or the USID of the MAP SBP initiator. The SBP specific subelement includes an AID or a USID of a SBP initiator. With the progress of the standard, the MAP SBP specific subelement and the SBP specific subelement may be combined into one subelement. This is not limited in embodiments of this application. When the MAP SBP specific subelement and the SBP specific subelement are combined into one subelement, a combined subelement may include the AID or the USID of the MAP SBP initiator and the AID or the USID of the SBP initiator.

In this embodiment of this application, the third request frame includes the AID or the USID of the MAP SBP initiator, so that after receiving the third request frame, the sensing responder can effectively learn that the sensing measurement session established between the sensing measurement initiator and the sensing measurement responder is a sensing measurement session initiated (or referred to as triggered) by MAP SBP, and learn of the AID or the USID of the MAP SBP initiator.

### Implementation 2

The third request frame includes a MAP measurement session ID.

The MAP measurement session ID may identify a MAP sensing measurement session. The third request frame carries the MAP measurement session ID, so that the sensing measurement responder can effectively learn whether third request frames sent by different APs belong to a same MAP sensing measurement session. FIG. 4a is used as an example. The STA 2 may receive a third request frame from the AP 1, and receive a third request frame from the AP 2. The STA 2 may learn, based on MAP measurement session IDs in the third request frames respectively sent by the two APs, that a MAP sensing measurement session corresponding to a sensing measurement session initiated by the AP 1 is the same as a MAP sensing measurement session corresponding to a sensing measurement session initiated by the AP 2. Therefore, the STA 2 may learn that there is a coordination relationship between the two APs, or the STA 2 may learn that there is an interference avoidance mechanism between the two APs. In addition, the MAP measurement session ID can improve flexibility of management.

Further, the third request frame may further include a MAC address of the MAP sensing measurement initiator. For example, the MAC address of the MAP sensing measurement initiator is included, so that the STA 2 may further learn that an initiator of the MAP sensing measurement session corresponding to the sensing measurement session initiated by the AP 1 and an initiator of the MAP sensing measurement session corresponding to the sensing measurement session initiated by the AP 2 are a same initiator. The MAC address shown herein is merely an example. For example, the third request frame may alternatively include an ID of the MAP sensing measurement initiator, or other identification information identifying the MAP sensing measurement initiator. This is not limited in embodiments of this application. A length of the identification information identifying the MAP sensing measurement initiator may be adaptively adjusted with different identification information. This is not limited in embodiments of this application.

FIG. 4a is still used as an example. The third request frame sent by the AP 1 may include the MAP measurement session ID and a MAC address of the AP 1, and the third request frame sent by the AP 2 may also include the MAP measurement session ID and the MAC address of the AP 1. Therefore, the STA 2 may learn, based on the third request frames respectively sent by the AP 1 and the AP 2, that the third request frames from the AP 1 and the AP 2 actually belong to a same MAP sensing measurement session. The MAP sensing measurement session is identified by using <MAP sensing measurement initiator, MAP measurement session ID>. Therefore, <MAP sensing measurement initiator, MAP measurement session ID> in the third request frame sent by the MAP sensing measurement initiator to the STA corresponding to the MAP sensing measurement initiator is the same as <MAP sensing measurement initiator, MAP measurement session ID> in the third request frame sent by the MAP sensing responder to the STA corresponding to the MAP sensing responder.

Table 1 is reused. In this embodiment of this application, a MAP sensing specific subelement (MAP sensing specific subelement) is newly added to the sensing subelement in the third request frame. The MAP sensing specific subelement may include the MAC address of the MAP sensing measurement initiator and the MAP measurement session ID.

The MAP sensing specific subelement may be carried in a sensing subelement (sensing subelement) in a sensing measurement parameters element (sensing measurement parameters element) in the third request frame.

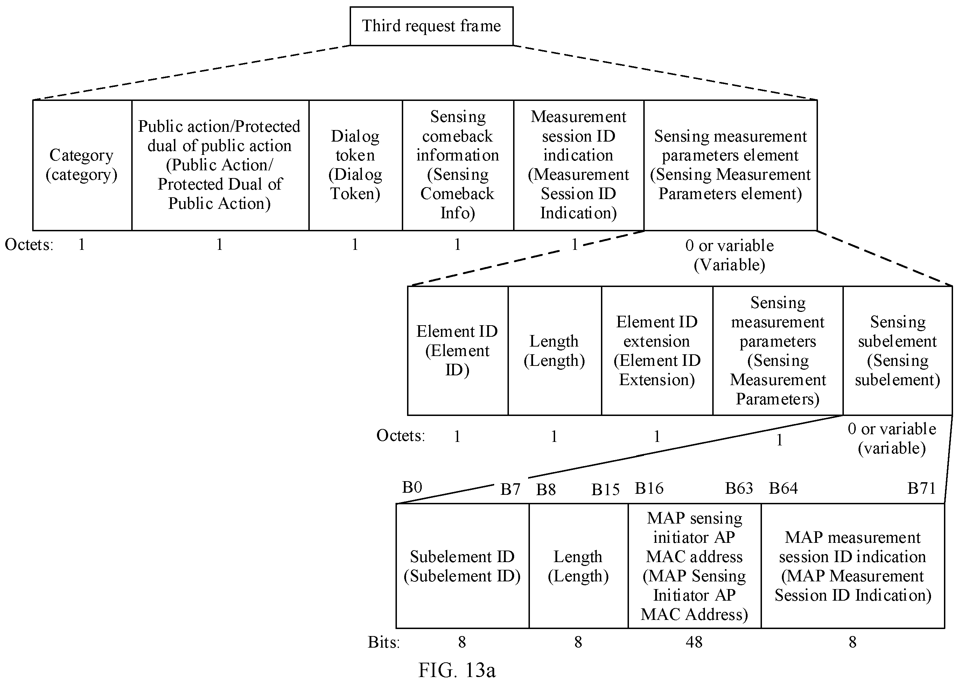

FIG. 13a is a diagram of a format of a third request frame according to an embodiment of this application. FIG. 13a is shown by using an example in which the MAC address of the MAP sensing measurement initiator and the MAP measurement session ID are carried in a same MAP sensing specific subelement. During specific implementation, the two fields may be respectively carried in different subelements. This is not limited in embodiments of this application.

Other descriptions of FIG. 13a are not described herein again.

Generally, a MAP sensing measurement session is established between APs, and the MAP measurement session ID is also exchanged between APs. When the APs establish sensing measurement sessions with the respective STAs, the APs may notify the respective STAs that the sensing measurement sessions are sensing measurement sessions in one MAP sensing measurement session. In this embodiment of this application, the third request frame includes the MAP measurement session ID (or the MAP measurement session ID and the MAC address of the MAP sensing measurement initiator), so that the sensing responder can effectively learn that sensing measurement sessions initiated by a plurality of APs actually belong to a same MAP sensing measurement session.

### Implementation 3

The third request frame includes a number of APs participating in a MAP sensing measurement session, a MAC address of each AP participating in the MAP sensing measurement session, and a measurement session ID of a sensing measurement session initiated by a sensing measurement initiator. The number of APs is consistent with a number of MAC addresses.

Similar to the foregoing implementation 2, in this implementation, a MAP sensing specific subelement may be newly added to the sensing subelement in the third request frame. The MAP sensing specific subelement may include the number of APs participating in the MAP sensing measurement session, the MAC address of each AP participating in the MAP sensing measurement session, and the measurement session ID of the sensing measurement session initiated by the sensing measurement initiator. The MAC address shown herein is merely an example. For example, the third request frame may alternatively include an ID of each AP participating in the MAP sensing measurement session, or other identification information identifying the AP. This is not limited in embodiments of this application.

FIG. 4a is still used as an example. The third request frame sent by the AP 1 may include a number of APs (for example, the number of APs is 2) participating in the MAP sensing measurement session, MAC addresses of the APs (for example, the AP 1 and the AP 2) participating in the MAP sensing measurement session, and an ID of a sensing measurement session initiated by the AP 1. The third request frame sent by the AP 2 may include a number of APs (for example, the number of APs is 2) in the MAP sensing measurement session, MAC addresses of the APs (for example, the AP 1 and the AP 2) participating in the MAP sensing measurement session, and an ID of a sensing measurement session initiated by the AP 2. <Number of APs participating in the MAP sensing measurement session, MAC address of each AP participating in the MAP sensing measurement session> in the third request frame sent by the AP 1 are the same as <number of APs participating in the MAP sensing measurement session, MAC address of each AP participating in the MAP sensing measurement session> in the third request frame sent by the AP 2. The ID of the sensing measurement session initiated by the AP 1 may be different from or the same as the ID of the sensing measurement session initiated by the AP 2. This is not limited in embodiments of this application.

For example, to clearly notify each STA of an AP serving as an initiator of the MAP sensing measurement session, the MAC address of the MAP sensing measurement initiator in the third request frame may be located in a predetermined field in the MAC address of each AP participating in the MAP sensing measurement session. FIG. 4a is still used as an example. A MAC address of the AP 1 may be located in the 1^{st} MAP address field in two MAC address fields (for example, the MAC address of the AP 1 is ranked first in the two MAC addresses).

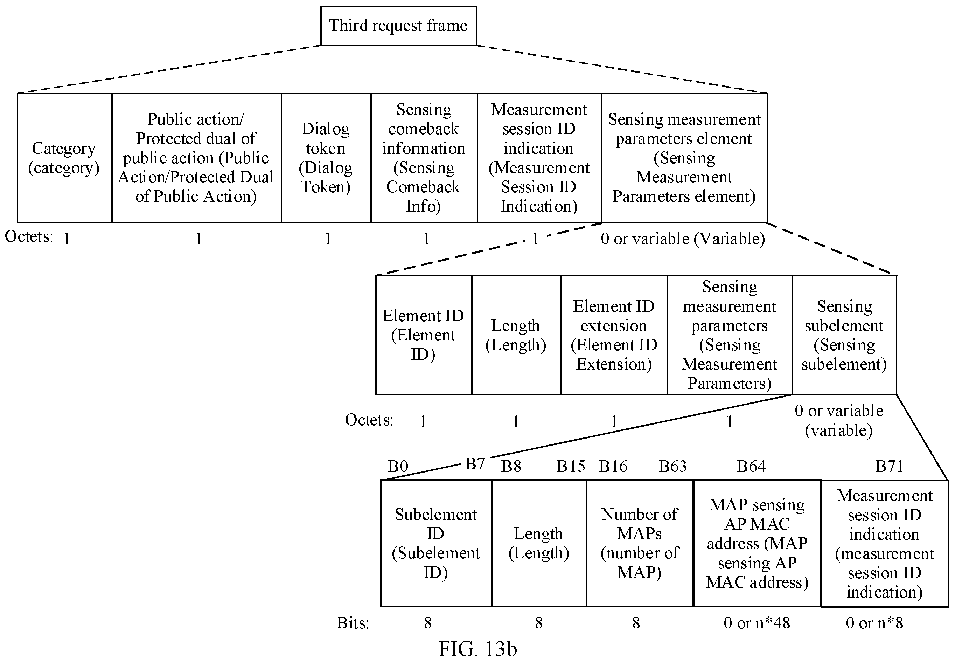

FIG. 13b is a diagram of a format of a third request frame according to an embodiment of this application. A number of MAPs field in FIG. 13b may be used to carry a number of APs participating in a MAP sensing measurement session, or a number of APs participating in a MAP sensing measurement session plus 1, or a number of APs participating in a MAP sensing measurement session minus 1. A MAP sensing AP MAC address field in FIG. 13b may be used to carry a MAC address of each AP participating in the MAP sensing measurement session. A measurement session ID indication field in FIG. 13b may be used by an AP to carry a measurement session ID of a sensing measurement session initiated by the AP. The MAC address shown in FIG. 13b is merely an example, and should not be construed as a limitation on embodiments of this application.

In this embodiment of this application, the sensing responder can effectively learn of, by parsing the third request frame, a number of APs that participate in the MAP sensing measurement session, MAC addresses of these APs, and measurement session IDs of sensing measurement sessions that are initiated by APs and that belong to a same MAP sensing session. The sensing responder can associate the sensing measurement sessions between the AP and the respective STAs with the same MAP sensing measurement session without introducing the MAP measurement session ID into the third request frame. Therefore, the STA 2 may learn that there is a coordination relationship between the two APs, or the STA 2 may learn that there is an interference avoidance mechanism between the two APs.

The implementation 1 may be combined with the implementation 2 or the implementation 3. For example, the third request frame may include the MAP SBP specific subelement shown in the implementation 1, and may also include the MAP sensing specific subelement shown in the implementation 2. For another example, the third request frame may include the MAP SBP specific subelement shown in the implementation 1, and may also include the MAP sensing specific subelement shown in the implementation 3. Specific descriptions of the combination are not described herein again.

1202: The sensing measurement responder sends a third response frame, and correspondingly, the sensing measurement initiator receives the third response frame.

For example, the third response frame may include information identifying the MAP sensing measurement session in the third request frame. For example, the third response frame may include the AID or the USID of the MAP SBP initiator. For another example, the third response frame may include the MAP measurement session ID. For another example, the third response frame may include the number of APs participating in the MAP sensing measurement session, the MAC address of each AP participating in the MAP sensing measurement session, and the measurement session ID of the sensing measurement session initiated by the sensing measurement initiator. For related descriptions of the third response frame, refer to the foregoing implementations 1 to 3. Details are not described herein again.

For example, the third response frame may be referred to as a sensing measurement response frame, a protected sensing measurement response frame, or the like.

In this embodiment of this application, the third request frame includes the MAP SBP specific subelement or the MAP sensing specific subelement, so that the sensing responder can effectively learn of sensing measurement sessions that belong to a same MAP SBP procedure or a same MAP sensing measurement session.

**Still some other embodiments of this application provide a method for terminating a sensing measurement session.**

After an AP and a STA establish a sensing measurement session, sensing measurement is to be performed. When the sensing measurement session is no longer required, the sensing measurement session may be terminated by using a termination frame. When the termination frame is used for termination, the two communication parties may choose to terminate the sensing measurement session between the AP and the STA, or terminate a MAP sensing measurement session corresponding to the sensing measurement session between the AP and the STA. The termination frame may be sent by a sensing measurement initiator to a sensing measurement responder, or may be sent by a sensing measurement responder to a sensing measurement initiator. This is not limited in embodiments of this application. The two communication parties shown in embodiments of this application may be a communication apparatus that sends a termination frame and a communication apparatus that receives the termination frame. For example, the two communication parties may be a sensing measurement initiator and a sensing measurement responder, or the two communication parties may be two sensing measurement responders.

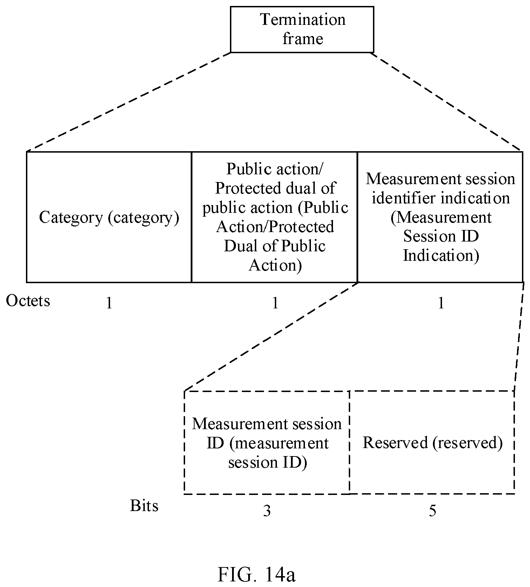

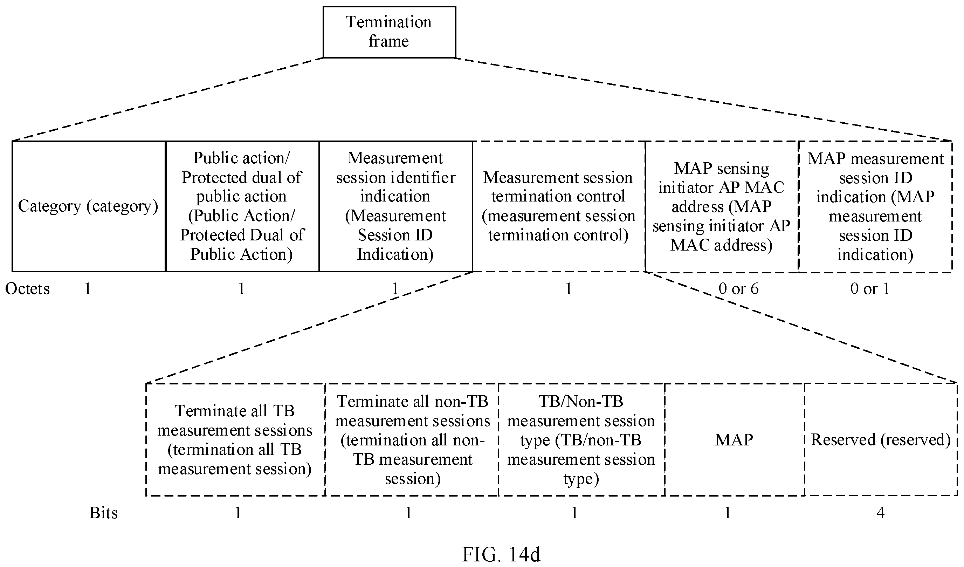

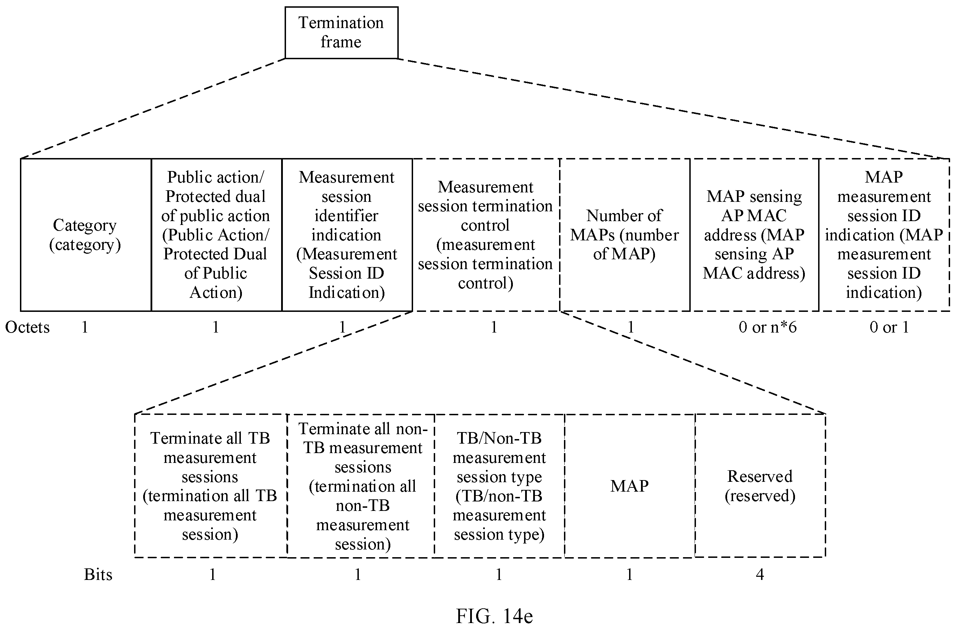

For example, termination frames shown in FIG. 14a to FIG. 14c below are applicable to Implementation 2 and Implementation 3. The third request frames shown above are combined with the termination frames shown below. In this case, after the sensing measurement session is established completely (for example, the sensing measurement session is established based on the third request frame and the third response frame), the AP or the STA may terminate the sensing measurement session or the MAP sensing measurement session by using the termination frame. A termination frame shown in FIG. 14d below is applicable to Implementation 2. The third request frame shown in Implementation 2 above may be combined with the termination frame shown in FIG. 14d below. A termination frame shown in FIG. 14e below is applicable to Implementation 3. The third request frame shown in Implementation 3 above may be combined with the termination frame shown in FIG. 14e below.

### Example 1

FIG. 14a is a diagram of a format of a termination frame according to an embodiment of this application. The termination frame may include at least one of the following: a category (category), a public action/protected dual of public action, and a measurement session identifier indication (measurement session ID indication). The measurement session identifier indication field may identify a sensing measurement session. A receive end of the termination frame may terminate, by using the measurement session ID indication field, the sensing measurement session indicated by the measurement session identifier indication field. The measurement session ID indication field may include a measurement session ID field. For a format of the measurement session identifier indication field, refer to the foregoing description. Details are not described herein again.

The termination frame may be used to terminate the sensing measurement session that is identified by the measurement session ID indication field and that is between the two communication parties. The termination frame may include one or more measurement session ID indication fields, and each measurement session ID indication field may identify one sensing measurement session. FIG. 14a illustrates one MAP measurement session ID indication field. This should not be construed as a limitation on embodiments of this application.

In this embodiment of this application, the termination frame indicates a terminated sensing measurement session by including one or more measurement session ID indication fields, so that a communication apparatus that receives the termination frame can clearly learn of a sensing measurement session that is between the communication apparatus and a communication apparatus that sends the termination frame and that needs to be terminated, and flexibility of indicating the terminated sensing measurement session is higher.

### Example 2

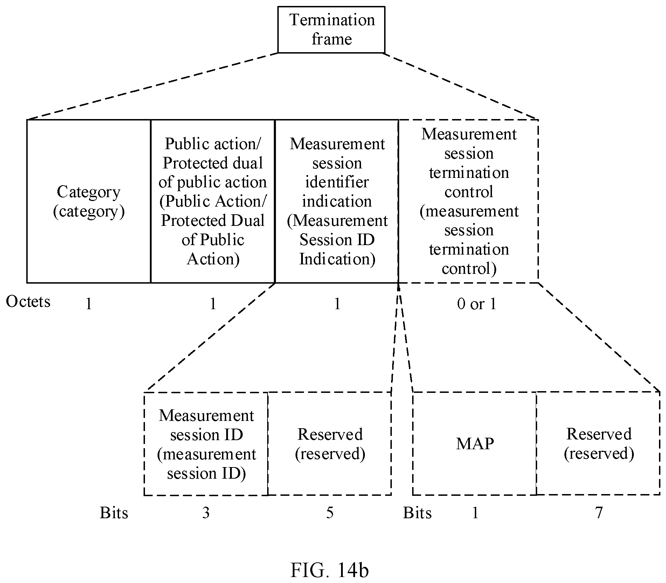

FIG. 14b is a diagram of a format of another termination frame according to an embodiment of this application. Compared with the termination frame shown in FIG. 14a, the termination frame may further include a measurement session termination control (measurement session termination control) field. The measurement session termination control field may include a MAP field. For descriptions of other fields in the termination frame, refer to FIG. 14a. Details are not described herein again.

The measurement session ID field and the MAP field in the termination frame may be combined to represent whether one or more sensing measurement sessions between the AP and the STA are to be terminated, or a MAP sensing measurement session corresponding to a sensing measurement session between the AP and the STA is to be terminated.

In an example, when a value of the MAP field is a first value, it may indicate to terminate a MAP sensing measurement session corresponding to a sensing measurement session identified by the measurement session ID field.

FIG. 4a is used as an example. For example, the AP 1 sends a termination frame to the STA 2. If a value of a MAP field in the termination frame is a first value, it represents to terminate a MAP sensing measurement session corresponding to a sensing measurement session that is identified by the measurement session ID field and that is between the AP 1 and the STA 2, or represents to terminate a sensing measurement session in which the STA 2 participates in a MAP sensing measurement session corresponding to a sensing measurement session identified by the measurement session ID field. The termination frame may be used to terminate a sensing measurement session between the AP 1 and the STA 2 and a sensing measurement session between the AP 2 and the STA 2. In this case, a sensing measurement session between the AP 1 and the STA 1 still continues to be performed, and the sensing measurement session between the AP 2 and the STA 3 still continues to be performed.

FIG. 4a is used as an example. For example, the AP 2 sends a termination frame to the STA 2. If a value of a MAP field in the termination frame is a first value, it represents to terminate a MAP sensing measurement session corresponding to a sensing measurement session that is identified by the measurement session ID field and that is between the AP 2 and the STA 2, or represents to terminate a sensing measurement session in which the STA 2 participates in a MAP sensing measurement session corresponding to a sensing measurement session identified by the measurement session ID field. The termination frame may be used to terminate a sensing measurement session between the AP 2 and the STA 2 and a sensing measurement session between the AP 1 and the STA 2.

FIG. 4a is used as an example. For example, the STA 1 sends a termination frame to the AP 1. If a value of a MAP field in the termination frame is a first value, it represents to terminate a MAP sensing measurement session corresponding to a sensing measurement session that is identified by the measurement session ID field and that is between the STA 1 and the AP 1, or represents to terminate a sensing measurement session in which the STA 1 participates in a MAP sensing measurement session corresponding to a sensing measurement session identified by the measurement session ID field. The termination frame may be used to terminate the sensing measurement session between the AP 1 and the STA 1. In this case, a sensing measurement session between the AP 1 and the STA 2 still continues to be performed, and sensing measurement sessions between the AP 2, and the STA 2 and the STA 3 still continue to be performed.

In another example, when the value of the MAP is a second value, it may indicate to terminate the sensing measurement session identified by the measurement session ID field.

FIG. 4a is used as an example. If the AP 1 sends a termination frame to the STA 2, and a value of a MAP field in the termination frame is a second value, it represents to terminate the sensing measurement session that is identified by the measurement session ID field and that is between the AP 1 and the STA 2. In this case, a sensing measurement session between the AP 1 and the STA 1 may continue to be performed. In this example, if a sensing measurement session between the AP 2 and the STA 2 also needs to be terminated, the AP 2 needs to send a termination frame to the STA 2, and a value of a MAP field in the termination frame is the second value.

In this embodiment of this application, one or more measurement session ID fields may be used in the termination frame. For example, a plurality of sensing measurement sessions are established between the AP 1 and the STA 1. If a value of the MAP field in the termination frame is the second value, and the termination frame includes two measurement session ID fields, it represents to terminate two sensing measurement sessions that are identified by the two measurement session ID fields and that are between the AP 1 and the STA 1.

For example, the MAP field may occupy 1 bit. For example, the first value may be 1, and the second value may be 0. Certainly, the MAP field may further occupy more bits. Examples are not enumerated herein.

In this embodiment of this application, the MAP field is combined with the measurement session ID field, to effectively indicate to terminate a MAP sensing measurement session and a sensing measurement session corresponding to the MAP sensing measurement session, and efficiency of terminating the sensing measurement session is higher.

### Example 3

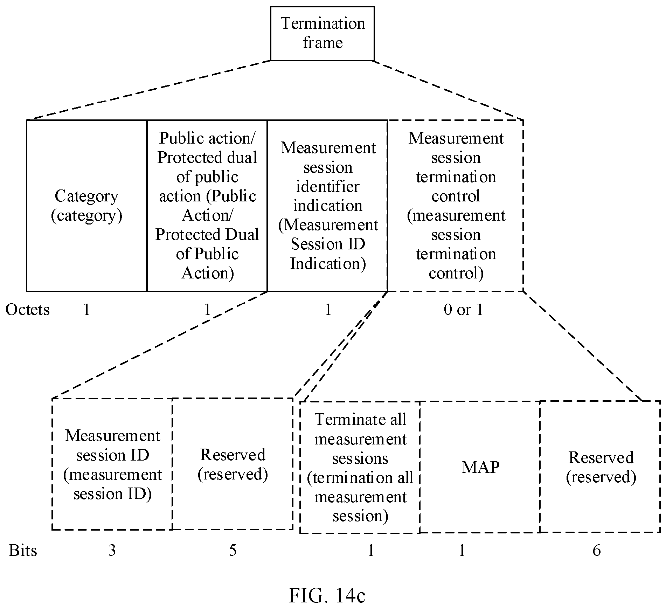

FIG. 14c is a diagram of a format of still another termination frame according to an embodiment of this application. As shown in FIG. 14c, a measurement session termination control field in the termination frame may include a terminate all measurement sessions (termination all measurement session) field and a MAP field.

In an example, when a value of the terminate all measurement sessions field is a first value and a value of the MAP field is a first value, it may indicate to terminate a MAP sensing measurement session corresponding to a sensing measurement session between two communication parties.

When the value of the terminate all measurement sessions field is the first value, a measurement session ID field is set to reserved. Therefore, when the value of the terminate all measurement sessions field is the first value and the value of the MAP field is the first value, all MAP sensing measurement sessions between the two communication parties are terminated by using the termination frame.

FIG. 4a is used as an example. If a value of a terminate all measurement sessions field in a termination frame sent by the AP 1 to the STA 2 is a first value and a value of a MAP field is a first value, it represents to terminate all MAP sensing measurement sessions corresponding to a sensing measurement session between the AP 1 and the STA 2, or represents to terminate all MAP sensing measurement sessions corresponding to a sensing measurement session in which the STA 2 participates. In this case, a sensing measurement session between the AP 2 and the STA 2 is also to be terminated. For example, a plurality of sensing measurement sessions are established between the AP 1 and the STA 2. When a value of a terminate all measurement sessions field in a termination frame sent by the AP 1 to the STA 2 is a first value and a value of a MAP field is a first value, it represents to terminate all MAP sensing measurement sessions corresponding to the plurality of sensing measurement sessions between the AP 1 and the STA 2.

In another example, when the value of the terminate all measurement sessions field is the first value and the value of the MAP field is a second value, it may indicate to terminate all sensing measurement sessions between the two communication parties.

FIG. 4a is used as an example. If a value of a terminate all measurement sessions field in a termination frame sent by the AP 1 to the STA 2 is the first value and a value of a MAP field is the second value, it represents to terminate all sensing measurement sessions between the AP 1 and the STA 2. In this case, the sensing measurement session between the AP 1 and the STA 2 is to be terminated, but a sensing measurement session between the AP 1 and the STA 1 still continues to be performed, and sensing measurement sessions between the AP 2 and the STA 2 and the STA 3 still continue to be performed.

In still another example, when the value of the terminate all measurement sessions field is a second value and the value of the MAP field is the first value, it may indicate to terminate a MAP sensing measurement session corresponding to a sensing measurement session that is identified by the measurement session ID field and that is between the two communication parties.

When the value of the terminate all measurement sessions field is the second value, the measurement session ID field carries the measurement session ID. Therefore, when the value of the terminate all measurement sessions field in the termination frame is the second value and the value of the MAP field is the first value, it may represent to terminate the MAP sensing measurement session corresponding to the sensing measurement session that is identified by the measurement session ID field and that is between the two communication parties.

For example, a plurality of sensing measurement sessions are established between the AP 1 and the STA 2. When a value of a terminate all measurement sessions field in a termination frame sent by the AP 1 to the STA 2 is the second value and a value of a MAP field is the first value, it represents to terminate a MAP sensing measurement session corresponding to a sensing measurement session that is identified by the measurement session ID field and that is between the AP 1 and the STA 2. In this case, when the AP 2 also participates in the MAP sensing measurement session, and a sensing measurement session is established between the AP 2 and the STA 2, the sensing measurement session that belongs to the MAP sensing measurement session and that is between the AP 2 and the STA 2 is to be terminated.

In still another example, when the value of the terminate all measurement sessions field is the second value and the value of the MAP field is the second value, it may indicate to terminate a sensing measurement session that is identified by the measurement session ID field and that is between the two communication parties.

When the value of the terminate all measurement sessions field is the second value, the measurement session ID field carries the measurement session ID. Therefore, when the value of the terminate all measurement sessions field in the termination frame is the second value and the value of the MAP field is the second value, it may represent to terminate the sensing measurement session that is identified by the measurement session ID (measurement session ID, MSID) field and that is between the two communication parties.

For example, the terminate all measurement sessions field may occupy 1 bit. For example, the first value may be 1, and the second value may be 0. Certainly, the terminate all measurement sessions field may further occupy more bits. Examples are not enumerated herein.

For the foregoing examples 1 to 3, in a possible implementation, the termination frame may further include at least one of the following: a MAC address of a MAP sensing measurement initiator and a MAP measurement session ID indication. In another possible implementation, the termination frame may further include at least one of the following: a number of APs participating in a MAP sensing measurement session, a MAC address of each AP participating in the MAP sensing measurement session, and a MAP measurement session ID indication.

FIG. 14d is a diagram of a format of still another termination frame according to an embodiment of this application. As shown in FIG. 14d, a measurement session termination control field in the termination frame may include terminate all TB measurement sessions (termination all TB measurement session), terminate all non-TB measurement sessions (termination all non-TB measurement session), a TB/non-TB measurement session type (TB/non-TB measurement session type), and MAP. For example, the termination frame may further include a MAP sensing initiator AP MAC address field and a MAP measurement session ID indication field. The MAP sensing initiator AP MAC address field may be used to carry a MAC address of a MAP sensing measurement initiator.

As shown in the foregoing implementation 2, the MAP sensing measurement session may be identified by <MAC address of the MAP sensing measurement initiator, MAP measurement session ID>. Therefore, when a frame format of the third request frame is the frame format shown in the foregoing implementation 2, because in a process of establishing a sensing measurement session, an association is established between a sensing measurement session between an AP and a respective STA and a MAP sensing measurement session, both the MAP sensing initiator AP MAC address field and the MAP measurement session ID indication field in the termination frame are optional.

FIG. 14e is a diagram of a format of still another termination frame according to an embodiment of this application. As shown in FIG. 14e, a measurement session termination control field in the termination frame may include terminate all TB measurement sessions (termination all TB measurement session), terminate all non-TB measurement sessions (termination all non-TB measurement session), a TB/non-TB measurement session type (TB/non-TB measurement session type), and MAP. For example, the termination frame may further include a number of MAPs field, a MAP sensing AP MAC address field, and a MAP measurement session ID indication field. The MAP sensing AP MAC address field may be used to carry a MAC address of each AP participating in a MAP sensing measurement session.

As shown in the foregoing implementation 3, the MAP sensing measurement session may be identified by <number of APs participating in the MAP sensing measurement session, MAC address of each AP participating in the MAP sensing measurement session>. Therefore, when a frame format of the third request frame is the frame format shown in the foregoing implementation 3, because in a process of establishing a sensing measurement session, an association is established between a sensing measurement session between an AP and a respective STA and a MAP sensing measurement session, the number of MAPs field, the MAP sensing AP MAC address field, and the MAP measurement session ID indication field in the termination frame are all optional.

In this embodiment of this application, the sensing measurement session or the MAP sensing measurement session can be effectively terminated by using the termination frame, thereby improving flexibility of termination.

**Still some other embodiments of this application further provide a control frame.**

The control frame may be applied to a procedure of a sensing measurement exchange between an AP and a STA. Generally, after a sensing measurement session is established between the AP and the STA, a sensing initiator may initiate one or more sensing measurement exchanges (sensing measurement exchanges). The sensing measurement exchanges may be classified into a trigger-based (trigger based, TB) sensing measurement exchange (TB sensing measurement instance) and a non-trigger-based (non-trigger based, Non-TB) sensing measurement exchange (Non-TB sensing measurement instance). For example, the TB sensing measurement exchange may include at least one of the following phases: a polling (polling) phase, an NDPA sounding (sounding) phase, a trigger frame (trigger frame, TF) sounding (TF sounding) phase, and a reporting (reporting) phase. The control frame shown in embodiments of this application may be a frame in a sensing measurement exchange process, for example, may include a frame sent by the AP in the sensing measurement exchange process. For example, the control frame may be at least one of the following: a sensing polling trigger frame, a sensing null data packet announcement (null data packet announcement, NDPA) frame (sensing NDP announcement frame), a sensing responder to sensing initiator (sensing responder to sensing initiator, SR2SI) sounding trigger frame (SR2SI sounding trigger frame), a sensing SR2SR sounding trigger frame (sensing SR2SR sounding trigger frame), a sensing report trigger frame (sensing report trigger frame), a clear to send (clean to send, CTS) to self (CTS-to-self, CST2SELT) frame, and a sensing measurement report frame.

For example, if a number of APs participating in a MAP sensing measurement session is n, sensing measurement sessions corresponding to a part of the n APs may be terminated by using the control frame. In this case, other APs that are not terminated may still continue to perform sensing measurement with STAs corresponding to the other APs.

FIG. 4b is used as an example. APs participating in the MAP sensing measurement session initiated by the AP 1 are the AP 1, the AP 2, and the AP 3. The AP 1 may indicate, to the STA, to terminate a sensing measurement session with the AP 2 in the MAP sensing measurement session initiated by the AP 1, and does not terminate the entire MAP sensing measurement session initiated by the AP 1. In this case, the AP 1 may continue to perform measurement with the STA corresponding to the AP 1, and the AP 3 continues to perform measurement with the STA corresponding to the AP 3. For example, the AP 1 may send a control frame to the STA 2, and indicate, by using the control frame, that a sensing measurement session that corresponds to the MAP sensing measurement session initiated by the AP 1 and that is between the STA 2 and the AP 2 is to be terminated.

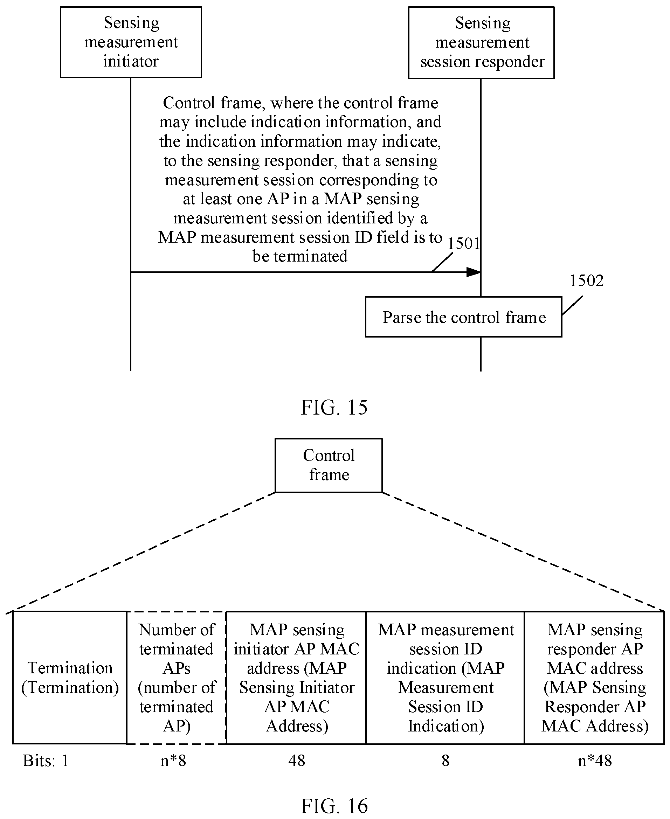

FIG. 15 is a schematic flowchart of a sensing communication method according to an embodiment of this application. As shown in FIG. 15, the method includes the following steps.

1501: A sensing measurement initiator sends a control frame to a sensing measurement responder, and correspondingly, the sensing measurement responder receives the control frame. The control frame may include indication information, and the indication information may indicate, to the sensing responder, that a sensing measurement session corresponding to at least one AP in a MAP sensing measurement session identified by a MAP measurement session ID field is to be terminated.

FIG. 16 is a diagram of a format of a control frame according to an embodiment of this application. FIG. 16 merely illustrates some fields in the control frame. Other fields in the control frame are not limited in embodiments of this application. The indication information may be information carried in at least one field shown in FIG. 16. As shown in FIG. 16, the control frame includes a termination (termination) field, a MAP sensing initiator AP address (MAP sensing initiator AP address), a MAP measurement session ID indication (MAP measurement session ID indication), a MAP sensing responder AP address (MAP sensing responder address), a MAP sensing initiator AP identifier, and a MAP sensing responder AP identifier.

The MAP sensing initiator AP address field may be used to carry an address of an initiator of a MAP sensing measurement session. For example, the MAP sensing initiator AP address field may be used to carry a MAC address of an initiator of a MAP sensing measurement session. The MAP measurement session ID indication field may be used to carry an identifier of a MAP sensing measurement session. The MAP sensing responder AP address may be used to carry an address of a responder of a MAP sensing measurement session. For example, the MAP sensing responder AP address may be used to carry a MAC address of a responder of a MAP sensing measurement session. The MAP sensing initiator AP identifier field may be used to carry identification information (for example, an AID or a BSSID) of an initiator of a MAP sensing measurement session. The MAP sensing responder AP identifier field may be used to carry identification information of a responder of a MAP sensing measurement session. FIG. 16 illustrates a responder of a MAP sensing measurement session. This should not be construed as a limitation on embodiments of this application. For example, during specific implementation, the control frame may alternatively include a plurality of MAP sensing responder AP address fields (or a plurality of MAP sensing responder identifier fields), and each MAP sensing responder AP address field may be used to carry an address of a responder of a MAP sensing measurement session.

The termination field may indicate whether to terminate. For example, when a value of the termination field is a first value, it may indicate to terminate a sensing measurement session that is of a responder indicated by the MAP sensing responder AP MAC address field, that is in the MAP sensing measurement session identified by the MAP measurement session ID field, and that is initiated by an initiator indicated by the MAP sensing initiator AP MAC address field.

For example, the control frame may further include a number of terminated APs (number of terminated AP) field, and the number of terminated APs field may indicate a number of APs in a terminated sensing measurement session in a MAP sensing measurement session identified by <MAP sensing measurement initiator identified by the MAP sensing initiator AP MAC address field, MAP sensing measurement session identified by the MAP measurement session ID field>. n in FIG. 16 represents a number of terminated APs.

The control frame may be sent by the sensing measurement initiator to the sensing measurement responder in a process in which the sensing measurement initiator performs sensing measurement exchange with the sensing measurement responder. For example, the control frame may be any one of the following: a sensing polling trigger frame (sensing polling trigger frame), a sensing NDPA frame (sensing NDPA frame), a sensing SR2SI sounding trigger frame (sensing SR2SI sounding trigger frame), a sensing SR2SR sounding trigger frame (sensing SR2SR sounding trigger frame), a sensing reporting trigger frame (sensing reporting trigger frame), and a sensing threshold-based reporting trigger frame (sensing threshold-based reporting trigger frame).

In an example, the fields shown in FIG. 16 may be carried in a trigger-dependent common information field (trigger dependent common info field) in any one of the following frames: the sensing polling trigger frame, the sensing SR2SI sounding trigger frame, the sensing reporting trigger frame, the sensing threshold-based reporting trigger frame, and the sensing SR2SR sounding trigger frame. In this case, all of one or more sensing measurement responders that receive the control frame may learn that the sensing measurement session participated by the at least one AP is to be terminated.

FIG. 4b is used as an example. The AP 1 sends a control frame to the STA 2. In a trigger-dependent common information field in the control frame, a MAP sensing initiator AP MAC address field carries a MAC address of the AP 1, a MAP measurement session ID indication field carries an ID (for example, an ID 1) of a MAP sensing measurement session, and a MAP sensing responder AP MAC address field carries a MAC address of the AP 2. A value of the termination field is a first value (for example, 1). In this case, the STA 2 can effectively learn, based on the control frame, that a sensing measurement session initiated by (or established by, or corresponding to) the AP 2 in the MAP sensing measurement session whose ID is 1 and that is initiated by the AP 1 is to be terminated (or it may be considered that the AP 2 needs to exit the MAP sensing measurement session whose ID is 1). A sensing measurement session that corresponds to the MAP sensing measurement session with the ID 1 and that is between the AP 2 and the STA 2 is to be terminated, and a sensing measurement session that corresponds to the MAP sensing measurement session with the ID 1 and that is between the AP 2 and the STA 3 is also to be terminated. In this case, sensing measurement sessions that correspond to the MAP sensing measurement session whose ID is 1 and that are between the AP 1 and the STA 1 and the STA 2 still continue to be performed. A sensing measurement session that corresponds to the MAP sensing measurement session whose ID is 1 and that is between the AP 3 and the STA 4 still continues to be performed. For example, the AP 1 may send the control frame to the STA 2 because the AP 2 has indicated, by using the termination frame, the AP 1 that the AP 2 terminates the MAP sensing measurement session.

FIG. 4b is used as an example. The AP 1 sends a control frame to the STA 2. A MAP sensing initiator AP MAC address field in the control frame carries a MAC address of the AP 1, a MAP measurement session ID indication field carries an ID (for example, an ID 1) of a MAP sensing measurement session, a 1^{st} MAP sensing responder AP MAC address field carries a MAC address of the AP 2, and a 2^{nd} MAP sensing responder AP MAC address field carries a MAC address of the AP 3. In this case, the STA 2 can effectively learn, based on the control frame, that sensing measurement sessions initiated by the AP 2 and the AP 3 in the MAP sensing measurement session whose ID is 1 and that is initiated by the AP are to be terminated. Sensing measurement sessions that correspond to the MAP sensing measurement session with the ID 1 and that are between the AP 2, and the STA 3 and the STA 2 are to be terminated, and a sensing measurement session that corresponds to the MAP sensing measurement session with the ID 1 and that is between the AP 3 and the STA 4 is to be terminated. In this case, sensing measurement sessions that correspond to the MAP sensing measurement session whose ID is 1 and that are between the AP 1 and the STA 1 and the STA 2 still continue to be performed. For example, the AP 1 may send the control frame to the STA 2 because the AP 2 has indicated, by using the termination frame, the AP 1 that the AP 2 terminates the MAP sensing measurement session, and the AP 3 has also indicated, by using the termination frame, the AP 1 that the AP 3 terminates the MAP sensing measurement session.

In another example, the fields shown in FIG. 16 may be carried in a user information field (user info field) in any one of the following frames: the sensing polling trigger frame, the sensing SR2SI sounding trigger frame, the sensing reporting trigger frame, the sensing threshold-based reporting trigger frame, and the sensing SR2SR sounding trigger frame. In this case, a sensing measurement responder that receives the control frame may learn that the sensing measurement session participated by the at least one AP is to be terminated.

FIG. 4b is used as an example. The AP 1 sends a control frame to the STA 2. In a user information field in the control frame, a MAP sensing initiator AP MAC address field carries a MAC address of the AP 1, a MAP measurement session ID indication field carries an ID (for example, an ID 1) of a MAP sensing measurement session, and a MAP sensing responder AP MAC address field carries a MAC address of the AP 2. In this case, the STA 2 can effectively learn, based on the control frame, that, in a MAP sensing measurement session whose ID is 1 initiated by the AP 1, a sensing measurement session that corresponds to the MAP sensing measurement session with the ID 1 and that is between the AP 2 and the STA 2 is to be terminated, and a sensing measurement session that corresponds to the MAP sensing measurement session with the ID 1 and that is between the AP 2 and the STA 3 is also to be terminated. In this case, sensing measurement sessions that correspond to the MAP sensing measurement session whose ID is 1 and that are between the AP 1 and the STA 1 and the STA 2 still continue to be performed. A sensing measurement session that corresponds to the MAP sensing measurement session whose ID is 1 and that is between the AP 3 and the STA 4 still continues to be performed.

In still another example, the fields shown in FIG. 16 may be carried in STA info of one or more specific AIDs in the sensing NDPA frame. For example, a value of the specific AID is greater than or equal to 2008. In still another example, the fields shown in FIG. 16 may be carried in a STA Info field corresponding to a STA. For example, an AID of the STA may be less than 2008.

1502: The sensing measurement responder parses the control frame.

The sensing measurement responder can effectively learn, by parsing the control frame, whether a MAP sensing measurement session with another AP corresponding to the sensing measurement responder is terminated.

In this embodiment of this application, the sensing measurement initiator indicates, to the sensing measurement responder by using the control frame, APs of which sensing measurement sessions are terminated. Therefore, the sensing measurement responder can release resources in a timely manner based on the control frame, thereby saving resources.

In still some other embodiments of this application, a concept of a MAP measurement session ID may not be introduced. The MAP sensing measurement session ID indication field shown above may also be replaced with a sensing measurement session ID indication (sensing measurement session ID indication) field, and the sensing measurement session ID indication field may be used to carry an ID of a sensing measurement session.

For example, in a process of establishing a MAP sensing measurement session, APs first exchange measurement session IDs, and the measurement session IDs may identify a sensing measurement session between an AP participating in the MAP sensing measurement session and a respective STA. When each AP participating in the MAP sensing measurement session establishes a sensing measurement session with a respective STA, measurement session IDs in third request frames sent by the APs are the same, and the measurement session IDs are measurement session IDs indicated by the sensing measurement session ID indication fields.

FIG. 4a is used as an example. The AP 1 and the AP 2 may exchange measurement session IDs by using a first request frame and a first response frame. Both the first request frame and the first response frame include a sensing measurement session ID indication field, and the field may indicate an ID of a sensing measurement session. Then, the measurement session ID indication fields in the third request frames separately sent by the AP 1 to the STA 1 and the STA 2 may be used to carry the ID of the sensing measurement session, and the measurement session ID indication fields in the third request frames separately sent by the AP 2 to the STA 2 and the STA 3 may also be used to carry the ID of the sensing measurement session.

In this case, the third request frame shown in FIG. 13a is used as an example. The third request frame may not include the MAP measurement session ID indication field. In this case, the third request frame may carry at least one of address information of a MAP sensing measurement initiator and identification information of the MAP sensing measurement initiator. Therefore, the STA may distinguish different MAP sensing measurement sessions based on the foregoing address information or identification information.

The following describes communication apparatuses provided in embodiments of this application.

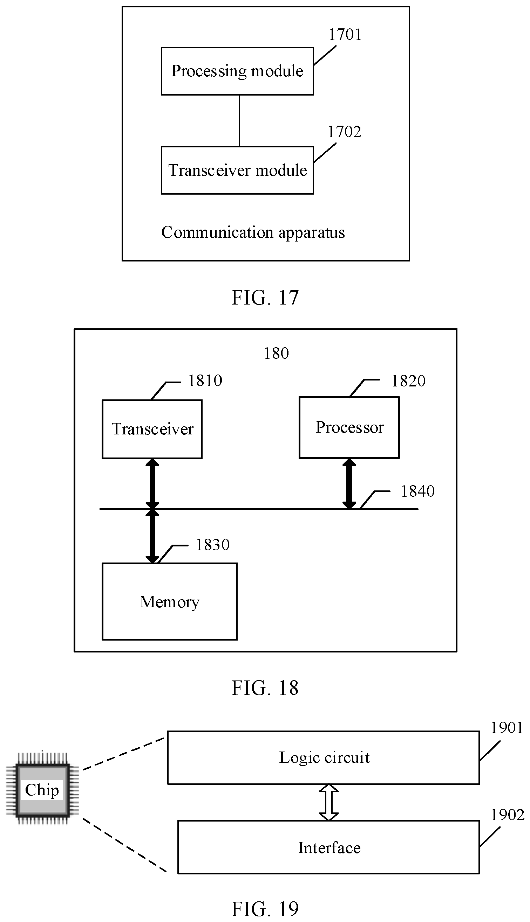

In this application, the communication apparatus may be divided into functional modules based on the foregoing method embodiments. For example, functional modules may be obtained through division based on corresponding functions, or two or more functions may be integrated into one processing module. The integrated module may be implemented in a form of hardware, or may be implemented in a form of a software functional module. It should be noted that, in this application, division into the modules is an example, and is merely logical function division. During actual implementation, another division manner may be used. The following describes in detail the communication apparatuses in embodiments of this application with reference to FIG. 17 to FIG. 19.

FIG. 17 is a diagram of a structure of a communication apparatus according to an embodiment of this application. As shown in FIG. 17, the communication apparatus includes a processing module 1701 and a transceiver module 1702. The transceiver module 1702 may implement a corresponding communication function, and the processing module 1701 is configured to process data. For example, the transceiver module 1702 may also be referred to as an interface, a communication interface, a communication module, or the like.

Still refer to FIG. 17. In some embodiments 1 of this application, the communication apparatus may be configured to perform an action performed by the MAP sensing measurement initiator in the foregoing method embodiments. In this case, the communication apparatus may be a sensing device or a component (for example, a chip, a system, or a functional module) that can be configured in the sensing device. The transceiver module 1702 is configured to perform a receiving and sending-related operation of the MAP sensing measurement initiator in the foregoing method embodiments, and the processing module 1701 is configured to perform a processing-related operation of the MAP sensing measurement initiator in the foregoing method embodiments.

For example, the transceiver module 1702 is configured to send or output a first request frame, where the first request frame includes a MAP measurement session identifier, and the MAP measurement session ID identifies a MAP sensing measurement session initiated by the MAP sensing measurement initiator. The transceiver module 1702 is further configured to receive or input a first response frame of the first request frame, where the first response frame includes the MAP measurement session identifier.

In this embodiment of this application, the processing module 1701 may be configured to generate the first request frame. The processing module 1701 is further configured to parse the first response frame.

Still refer to FIG. 17. In some other embodiments 2 of this application, the communication apparatus may be configured to perform an action performed by the MAP sensing measurement responder in the foregoing method embodiments. In this case, the communication apparatus may be a sensing device or a component (for example, a chip, a system, or a functional module) that can be configured in the sensing device. The transceiver module 1702 is configured to perform a receiving and sending-related operation of the MAP sensing measurement responder in the foregoing method embodiments, and the processing module 1701 is configured to perform a processing-related operation of the MAP sensing measurement responder in the foregoing method embodiments.

For example, the transceiver module 1702 is configured to receive or input a first request frame, where the first request frame includes a MAP measurement session identifier, and the MAP measurement session ID identifies a MAP sensing measurement session initiated by a MAP sensing measurement initiator. The transceiver module 1702 is further configured to send or output a first response frame of the first request frame, where the first response frame includes the MAP measurement session identifier.

For the embodiments 1 and embodiments 2, in a possible implementation, the first request frame further includes a parameter that is used by the MAP sensing measurement responder for a sensing measurement session corresponding to the MAP sensing measurement session and that is recommended by the MAP sensing measurement initiator.

For the embodiments 1 and embodiments 2, in a possible implementation, the parameter that is used by the MAP sensing measurement responder for the sensing measurement session corresponding to the MAP sensing measurement and that is recommended by the MAP sensing measurement initiator is carried in at least one of the following: a MAP sensing measurement parameters element, a sensing measurement parameters element, and an availability window element.

For the embodiments 1 and embodiments 2, in a possible implementation, the MAP sensing measurement parameters element includes at least one of the following: an element identifier, a length, an element identifier extension, sensing responder addresses, sensing responder identifiers, a MAP request, a MAP procedure expiry exponent, a multi-AP transmission model, a sounding phase model, a number of sensing responders, a mandatory number of sensing responders, a preferred responder list, a number of preferred responders, a mandatory number of preferred responders, and a sensing responder to sensing responder sounding request.

For the embodiments 1 and embodiments 2, in a possible implementation, the sensing measurement parameters element may include at least one of the following: a BW, a maximum TX SS and maximum RX SS, a maximum transmit STS and maximum receive STS, a number of receive antennas, a number of receive links, a number of transmit antennas, and a number of transmit links.

For the embodiments 1 and embodiments 2, in a possible implementation, the first response frame further includes a status code field, and the status code field includes at least one of the following fields: success, rejected_with_suggested_changes, and request_declined.

For the embodiments 1 and embodiments 2, in a possible implementation, when the status code field carries the rejected_with_suggested_changes field, the first response frame further includes at least one of the MAP sensing measurement parameters element and the sensing measurement parameters element.

For the embodiments 1 and embodiments 2, in a possible implementation, the first response frame further includes a decline duration field, and the decline duration field is used by the MAP sensing measurement responder to indicate the MAP sensing measurement initiator not to initiate a MAP sensing measurement session (or not to send a request frame of a MAP sensing measurement session) within duration indicated by the decline duration field.

Still refer to FIG. 17. In some embodiments 3 of this application, the communication apparatus may be configured to perform an action performed by the first communication apparatus in the foregoing method embodiments. In this case, the communication apparatus may be a sensing device or a component (for example, a chip, a system, or a functional module) that can be configured in the sensing device. The transceiver module 1702 is configured to perform a receiving and sending-related operation of the first communication apparatus in the foregoing method embodiments, and the processing module 1701 is configured to perform a processing-related operation of the first communication apparatus in the foregoing method embodiments. The first communication apparatus may include a MAP sensing measurement initiator or a MAP sensing measurement responder. For example, the first communication apparatus in the embodiments 3 may include a MAP sensing measurement initiator, and a second communication apparatus in the following embodiments 4 may include a MAP sensing measurement responder. For another example, the first communication apparatus in the embodiments 3 may include a MAP sensing measurement responder, and a second communication apparatus in the following embodiments 4 may include a MAP sensing measurement initiator.

For example, the processing module 1701 is configured to generate a termination frame. The transceiver module 1702 is configured to send or output the termination frame. The termination frame includes one or more MAP measurement session IDs.

Still refer to FIG. 17. In some embodiments 4 of this application, the communication apparatus may be configured to perform an action performed by the second communication apparatus in the foregoing method embodiments. In this case, the communication apparatus may be a sensing device or a component (for example, a chip, a system, or a functional module) that can be configured in the sensing device. The transceiver module 1702 is configured to perform a receiving and sending-related operation of the second communication apparatus in the foregoing method embodiments, and the processing module 1701 is configured to perform a processing-related operation of the second communication apparatus in the foregoing method embodiments. The second communication apparatus may include a MAP sensing measurement responder or a MAP sensing measurement initiator. For specific descriptions of the second communication apparatus and the first communication apparatus, refer to the foregoing embodiments 3. Details are not described herein again.

For example, the transceiver module 1702 is configured to receive or input a termination frame. The processing module 1701 is configured to parse the termination frame. The termination frame includes one or more MAP measurement session IDs.

For the embodiments 3 and embodiments 4, in a possible implementation, the termination frame further includes a terminate all MAP measurement sessions field, a value of the terminate all MAP measurement sessions field being a first value indicates to terminate all MAP sensing measurement sessions between the first communication apparatus and the second communication apparatus, and the value of the terminate all MAP measurement sessions field being a second value indicates to terminate a MAP sensing measurement session that is identified by the MAP measurement session ID and that is between the first communication apparatus and the second communication apparatus.

For the embodiments 3 and embodiments 4, in a possible implementation, the termination frame further includes a MAP measurement session error status (MAP measurement session error status) field, and the MAP measurement session error status field indicates a reason for terminating the MAP sensing measurement session.

For the embodiments 3 and embodiments 4, in a possible implementation, when a value of the MAP measurement session error status field is a first value, the termination frame further includes at least one of a MAP sensing measurement parameters element and a sensing measurement parameters element.

For example, the first value may be 1.

The sensing communication methods shown in the third aspect and the fourth aspect may also be referred to as a method for terminating a MAP sensing measurement session or a termination method for a MAP sensing measurement session.

Still refer to FIG. 17. In some embodiments 5 of this application, the communication apparatus may be configured to perform an action performed by the MAP SBP initiator in the foregoing method embodiments. In this case, the communication apparatus may be a sensing device or a component (for example, a chip, a system, or a functional module) that can be configured in the sensing device. The transceiver module 1702 is configured to perform a receiving and sending-related operation of the MAP SBP initiator in the foregoing method embodiments, and the processing module 1701 is configured to perform a processing-related operation of the MAP SBP initiator in the foregoing method embodiments.

For example, the transceiver module 1702 is configured to send or output a second request frame, where the second request frame is used to request a MAP SBP responder to initiate a MAP sensing measurement session. The transceiver module 1702 is further configured to receive or input a second response frame of the second request frame, where the second response frame includes a MAP measurement session ID of the MAP sensing measurement session.

For example, the processing module 1701 is configured to generate the second request frame. The processing module 1701 is further configured to parse the second response frame.

Still refer to FIG. 17. In some embodiments 6 of this application, the communication apparatus may be configured to perform an action performed by the MAP SBP responder in the foregoing method embodiments. In this case, the communication apparatus may be a sensing device or a component (for example, a chip, a system, or a functional module) that can be configured in the sensing device. The transceiver module 1702 is configured to perform a receiving and sending-related operation of the MAP SBP responder in the foregoing method embodiments, and the processing module 1701 is configured to perform a processing-related operation of the MAP SBP responder in the foregoing method embodiments.

For example, the transceiver module 1702 is configured to receive or input a second request frame, where the second request frame is used to request the MAP SBP responder to initiate a MAP sensing measurement session. The transceiver module 1702 is configured to send or output a second response frame of the second request frame, where the second response frame includes a MAP measurement session ID of the MAP sensing measurement session.

For example, when the MAP SBP responder serves as a MAP sensing measurement initiator, the transceiver module 1702 is further configured to send or output a first request frame, where the first request frame includes a MAP measurement session ID. The transceiver module 1702 is further configured to receive a first response frame of the first request frame, where the first response frame includes the MAP measurement session ID.

For the embodiments 5 and embodiments 6, in a possible implementation, the second request frame includes at least one of the following: a MAP SBP parameters element, one or more MAP sensing measurement parameters elements, and a sensing measurement parameters element.

For the embodiments 5 and embodiments 6, in a possible implementation, the MAP SBP parameters element includes at least one of the following: a MAP SBP request, a MAP SBP procedure expiry exponent, a MAP sensing responder, a number of APs, a mandatory number of APs, a preferred AP list, a number of preferred APs, and a mandatory number of preferred APs.

For the embodiments 5 and embodiments 6, in a possible implementation, the second response frame further includes a status code field, and the status code field includes at least one of the following fields: success, rejected_with_suggested_changes, and request_declined.

For the embodiments 5 and embodiments 6, in a possible implementation, when the status code field carries the rejected_with_suggested_changes field, the second response frame further includes at least one of the following: at least one of a MAP SBP parameters element, a MAP sensing measurement parameters element, and a sensing measurement parameters element.

For the embodiments 5 and embodiments 6, in a possible implementation, the second response frame further includes a decline duration field, and the decline duration field is used by the MAP SBP responder to indicate the MAP SBP initiator not to initiate a MAP SBP procedure (or not to send a request frame of a MAP SBP procedure) within duration indicated by the decline duration field.

Still refer to FIG. 17. In some embodiments 7 of this application, the communication apparatus may be configured to perform an action performed by the third communication apparatus in the foregoing method embodiments. In this case, the communication apparatus may be a sensing device or a component (for example, a chip, a system, or a functional module) that can be configured in the sensing device. The transceiver module 1702 is configured to perform a receiving and sending-related operation of the third communication apparatus in the foregoing method embodiments, and the processing module 1701 is configured to perform a processing-related operation of the third communication apparatus in the foregoing method embodiments. The third communication apparatus may include a MAP SBP initiator or a MAP SBP responder. For example, the third communication apparatus in the embodiments 7 may include a MAP SBP initiator, and a fourth communication apparatus in the following embodiments 8 may include a MAP SBP responder. For another example, the third communication apparatus in the embodiments 7 may include a MAP SBP responder, and a fourth communication apparatus in the following embodiments 8 may include a MAP SBP initiator.

For example, the processing module 1701 is configured to generate a termination frame. The transceiver module 1701 is configured to send or output the termination frame. The termination frame includes one or more MAP measurement session IDs.

Still refer to FIG. 17. In some embodiments 8 of this application, the communication apparatus may be configured to perform an action performed by the fourth communication apparatus in the foregoing method embodiments. In this case, the communication apparatus may be a sensing device or a component (for example, a chip, a system, or a functional module) that can be configured in the sensing device. The transceiver module 1702 is configured to perform a receiving and sending-related operation of the fourth communication apparatus in the foregoing method embodiments, and the processing module 1701 is configured to perform a processing-related operation of the fourth communication apparatus in the foregoing method embodiments. The fourth communication apparatus may include a MAP SBP responder or a MAP SBP initiator. For specific descriptions of the fourth communication apparatus and the third communication apparatus, refer to the foregoing embodiments 7. Details are not described herein again.

For example, the transceiver module 1702 is configured to receive or input a termination frame. The processing module 1701 is configured to parse the termination frame. The termination frame includes one or more MAP measurement session IDs.

For the embodiments 7 and embodiments 8, in a possible implementation, the termination frame further includes a terminate all MAP sensing by proxy SBP procedures field, a value of the terminate all MAP SBP procedures field being a first value indicates to terminate all MAP SBP procedures between the third communication apparatus and the fourth communication apparatus, and the value of the terminate all MAP SBP procedures field being a second value indicates to terminate a MAP SBP procedure corresponding to a MAP sensing measurement session identified by the MAP measurement session ID.

For the embodiments 7 and embodiments 8, in a possible implementation, the termination frame further includes a MAP SBP error status (MAP SBP error status) field, and the MAP SBP error status field indicates a reason for terminating the MAP SBP procedure.

For the embodiments 7 and embodiments 8, in a possible implementation, when a value of the MAP SBP error status field is a first value, the termination frame further includes at least one of a MAP SBP parameters element, a MAP sensing measurement parameters element, and a sensing measurement parameters element.

For example, the first value may be 1.

Still refer to FIG. 17. In some embodiments 9 of this application, the communication apparatus may be configured to perform an action performed by the sensing measurement initiator in the foregoing method embodiments. In this case, the communication apparatus may be a sensing device or a component (for example, a chip, a system, or a functional module) that can be configured in the sensing device. The transceiver module 1702 is configured to perform a receiving and sending-related operation of the sensing measurement initiator in the foregoing method embodiments, and the processing module 1701 is configured to perform a processing-related operation of the sensing measurement initiator in the foregoing method embodiments.

For example, the transceiver module 1702 is configured to send or output a third request frame. The transceiver module 1702 is further configured to receive a third response frame of the third request frame, where the third request frame is used to request to establish a sensing measurement session. The third request frame includes an AID or a USID of a MAP SBP initiator; or the third request frame includes a measurement session ID of the sensing measurement session and a medium access control MAC address of a MAP sensing measurement initiator of a MAP sensing measurement session corresponding to the sensing measurement session; or the third request frame includes a number of APs participating in a MAP sensing measurement session corresponding to the sensing measurement session, a MAC address of each AP participating in the MAP sensing measurement session, and a measurement session ID of the sensing measurement session initiated by the sensing measurement initiator.

For example, the processing module 1701 is configured to generate the third request frame. The processing module 1701 is further configured to parse the third response frame.

Still refer to FIG. 17. In some other embodiments 10 of this application, the communication apparatus may be configured to perform an action performed by the sensing measurement responder in the foregoing method embodiments. In this case, the communication apparatus may be a sensing device or a component (for example, a chip, a system, or a functional module) that can be configured in the sensing device. The transceiver module 1702 is configured to perform a receiving and sending-related operation of the sensing measurement responder in the foregoing method embodiments, and the processing module 1701 is configured to perform a processing-related operation of the sensing measurement responder in the foregoing method embodiments.

For example, the transceiver module 1702 is configured to: receive or input a third request frame, and send or output a third response frame of the third request frame, where the third request frame is used to request to establish a sensing measurement session. The third request frame includes an AID or a USID of a MAP SBP initiator; or the third request frame includes a measurement session ID of the sensing measurement session and a medium access control MAC address of a MAP sensing measurement initiator of a MAP sensing measurement session corresponding to the sensing measurement session; or the third request frame includes a number of APs participating in a MAP sensing measurement session corresponding to the sensing measurement session, a MAC address of each AP participating in the MAP sensing measurement session, and a measurement session ID of a sensing measurement session initiated by a sensing measurement initiator.

For the embodiments 9 and embodiments 10, in a possible implementation, when the MAP sensing measurement initiator serves as the sensing measurement initiator to participate in the sensing measurement session, the MAC address of the MAP sensing measurement initiator is located in a predetermined field in the MAC address of each AP participating in the MAP sensing measurement session.

Still refer to FIG. 17. In some embodiments 11 of this application, the communication apparatus may be configured to perform an action performed by the fifth communication apparatus in the foregoing method embodiments. In this case, the communication apparatus may be a sensing device or a component (for example, a chip, a system, or a functional module) that can be configured in the sensing device. The transceiver module 1702 is configured to perform a receiving and sending-related operation of the fifth communication apparatus in the foregoing method embodiments, and the processing module 1701 is configured to perform a processing-related operation of the fifth communication apparatus in the foregoing method embodiments. The fifth communication apparatus may include a sensing measurement initiator or a sensing measurement responder. For example, the fifth communication apparatus in the embodiments 11 may include a sensing measurement initiator, and a sixth communication apparatus in the following embodiments 12 may include a sensing measurement responder. For another example, the fifth communication apparatus in the embodiments 11 may include a sensing measurement responder, and a sixth communication apparatus in the following embodiments 12 may include a sensing measurement initiator.

For example, the processing module 1701 is configured to generate a termination frame. The transceiver module 1702 is configured to send or output the termination frame. The termination frame includes a measurement session ID field and a MAP field, a value of the MAP field being a first value indicates to terminate a MAP sensing measurement session corresponding to a sensing measurement session identified by the measurement session ID field, and the value of the MAP field being a second value indicates to terminate the sensing measurement session identified by the measurement session ID field. Alternatively, the termination frame includes a terminate all measurement sessions field and a MAP field, a value of the terminate all measurement sessions field being a first value and a value of the MAP field being a first value indicate to terminate a MAP sensing measurement session corresponding to all sensing measurement sessions between a MAP sensing measurement initiator and the sensing measurement responder, and the value of the terminate all measurement sessions field being the first value and the value of the MAP field being a second value indicate to terminate all the sensing measurement sessions between the MAP sensing measurement initiator and the sensing measurement responder.

Still refer to FIG. 17. In some embodiments 12 of this application, the communication apparatus may be configured to perform an action performed by the sixth communication apparatus in the foregoing method embodiments. In this case, the communication apparatus may be a sensing device or a component (for example, a chip, a system, or a functional module) that can be configured in the sensing device. The transceiver module 1702 is configured to perform a receiving and sending-related operation of the sixth communication apparatus in the foregoing method embodiments, and the processing module 1701 is configured to perform a processing-related operation of the sixth communication apparatus in the foregoing method embodiments. The sixth communication apparatus may include a sensing measurement responder or a sensing measurement initiator. For specific descriptions of the sixth communication apparatus and the fifth communication apparatus, refer to the foregoing embodiments 11. Details are not described herein again.

For example, the processing module 1701 is configured to generate a termination frame. The transceiver module 1702 is configured to send or output the termination frame. The termination frame includes a measurement session ID field and a MAP field, a value of the MAP field being a first value indicates to terminate a MAP sensing measurement session corresponding to a sensing measurement session identified by the measurement session ID field, and the value of the MAP field being a second value indicates to terminate the sensing measurement session identified by the measurement session ID field. Alternatively, the termination frame includes a terminate all measurement sessions field and a MAP field, a value of the terminate all measurement sessions field being a first value and a value of the MAP field being a first value indicate to terminate a MAP sensing measurement session corresponding to all sensing measurement sessions between a MAP sensing measurement initiator and the sensing measurement responder, and the value of the terminate all measurement sessions field being the first value and the value of the MAP field being a second value indicate to terminate all the sensing measurement sessions between the MAP sensing measurement initiator and the sensing measurement responder.

Still refer to FIG. 17. In some embodiments 13 of this application, the communication apparatus may be configured to perform an action performed by the fifth communication apparatus in the foregoing method embodiments. In this case, the communication apparatus may be a sensing device or a component (for example, a chip, a system, or a functional module) that can be configured in the sensing device. The transceiver module 1702 is configured to perform a receiving and sending-related operation of the fifth communication apparatus in the foregoing method embodiments, and the processing module 1701 is configured to perform a processing-related operation of the fifth communication apparatus in the foregoing method embodiments. The fifth communication apparatus may include a sensing measurement initiator or a sensing measurement responder. For example, the fifth communication apparatus in the embodiments 13 may include a sensing measurement initiator, and a sixth communication apparatus in the following embodiments 14 may include a sensing measurement responder. For another example, the fifth communication apparatus in the embodiments 13 may include a sensing measurement responder, and a sixth communication apparatus in the following embodiments 14 may include a sensing measurement initiator.

The processing module 1701 is configured to generate a control frame. The transceiver module 1702 is configured to send or output the control frame. The control frame includes a MAC address of a MAP sensing measurement initiator of a MAP sensing measurement session corresponding to a sensing measurement session between the fifth communication apparatus and the sixth communication apparatus, a termination field, a MAP measurement session ID field, and a MAC address of a MAP sensing measurement responder of the MAP sensing measurement session, and a value of the termination field being a first value indicates to terminate a sensing measurement session that is of the MAP sensing measurement responder and that is in a MAP sensing measurement session identified by the MAP measurement session ID field and initiated by the MAP sensing measurement initiator.

Still refer to FIG. 17. In some embodiments 14 of this application, the communication apparatus may be configured to perform an action performed by the sixth communication apparatus in the foregoing method embodiments. In this case, the communication apparatus may be a sensing device or a component (for example, a chip, a system, or a functional module) that can be configured in the sensing device. The transceiver module 1702 is configured to perform a receiving and sending-related operation of the sixth communication apparatus in the foregoing method embodiments, and the processing module 1701 is configured to perform a processing-related operation of the sixth communication apparatus in the foregoing method embodiments. The sixth communication apparatus may include a sensing measurement responder or a sensing measurement initiator. For specific descriptions of the sixth communication apparatus and the fifth communication apparatus, refer to the foregoing embodiments 13. Details are not described herein again.

The transceiver module 1702 is configured to receive or input a control frame. The processing module 1701 is configured to parse the control frame. The control frame includes a MAC address of a MAP sensing measurement initiator of a MAP sensing measurement session corresponding to a sensing measurement session between the fifth communication apparatus and the sixth communication apparatus, a termination field, a MAP measurement session ID field, and a MAC address of a MAP sensing measurement responder of the MAP sensing measurement session, and a value of the termination field being a first value indicates to terminate a sensing measurement session that is of the MAP sensing measurement responder and that is in a MAP sensing measurement session identified by the MAP measurement session ID field and initiated by the MAP sensing measurement initiator.

In the foregoing embodiments, for specific descriptions of terms, steps, or the like, refer to the descriptions in the foregoing method embodiments. Details are not described herein again.

Specific descriptions of the transceiver module and the processing module shown in the foregoing embodiments are merely examples. For specific functions, performed steps, or the like of the transceiver module and the processing module, refer to the foregoing method embodiments. Details are not described herein again.

The foregoing describes the communication apparatuses in embodiments of this application. The following describes possible product forms of the communication apparatuses. A product in any form that has a function of the communication apparatus in FIG. 17 falls within the protection scope of embodiments of this application. The following descriptions are merely examples, and a product form of the communication apparatus in embodiments of this application is not limited thereto.

In a possible implementation, in the communication apparatus shown in FIG. 17, the processing module 1701 may be one or more processors, and the transceiver module 1702 may be a transceiver. Alternatively, the transceiver module 1702 may be a sending module and a receiving module. The sending module may be a transmitter, and the receiving module may be a receiver. The sending module and the receiving module are integrated into one component, for example, a transceiver. In embodiments of this application, the processor and the transceiver may be coupled or the like. A manner of connection between the processor and the transceiver is not limited in embodiments of this application. In a process of performing the foregoing method, a process of sending information in the foregoing method may be a process of outputting the information by the processor. When outputting the information, the processor outputs the information to the transceiver, so that the transceiver transmits the information. After the information is output by the processor, other processing may further need to be performed on the information before the information arrives at the transceiver. Similarly, a process of receiving information in the foregoing method may be a process of receiving the input information by the processor. When the processor receives the input information, the transceiver receives the information, and inputs the information into the processor. Further, after the transceiver receives the information, other processing may need to be performed on the information before the information is input into the processor.

As shown in FIG. 18, a communication apparatus 180 includes one or more processors 1820 and a transceiver 1810. For example, the transceiver 1810 is configured to perform a function or a step implemented by the transceiver module 1702 shown in FIG. 17, and the processor 1820 is configured to perform a function or a step implemented by the processing module 1701 shown in FIG. 17. For specific descriptions of the processor 1820 and the transceiver 1810, refer to FIG. 17 or the method embodiments shown above. Details are not described herein again.

In the foregoing embodiments, for specific descriptions of terms, steps, or the like, refer to the descriptions in the foregoing method embodiments. Details are not described herein again.

In various implementations of the communication apparatus shown in FIG. 18, the transceiver may include a receiver and a transmitter. The receiver is configured to perform a receiving function (or operation), and the transmitter is configured to perform a transmitting function (or operation). In addition, the transceiver is configured to communicate with another device/apparatus through a transmission medium.

Optionally, the communication apparatus 180 may further include one or more memories 1830, configured to store program instructions and/or data. The memory 1830 is coupled to the processor 1820. Couplings in embodiments of this application are indirect couplings or communication connections between apparatuses, units, or modules, may be in an electrical form, a mechanical form, or another form, and are used for information exchange between the apparatuses, the units, or the modules. The processor 1820 may cooperate with the memory 1830. The processor 1820 may execute the program instructions stored in the memory 1830. Optionally, at least one of the one or more memories may be included in the processor.

A specific connection medium between the transceiver 1810, the processor 1820, and the memory 1830 is not limited in embodiments of this application. In this embodiment of this application, the memory 1830, the processor 1820, and the transceiver 1810 are connected to each other through a bus 1840 in FIG. 18. The bus is represented by a bold line in FIG. 18. A manner of connection between other components is merely an example for illustrative description, but is not limited thereto. The bus may be classified into an address bus, a data bus, a control bus, and the like. For ease of representation, only one bold line is for representing the bus in FIG. 18, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, a discrete hardware component, or the like, and can implement or perform the methods, the steps, and the logical block diagrams disclosed in embodiments of this application. The general-purpose processor may be a microprocessor, any conventional processor, or the like. The steps of the methods disclosed in combination with embodiments of this application may be directly implemented by a hardware processor, or may be implemented by using a combination of hardware and software modules in the processor, or the like.

In embodiments of this application, the memory may include but is not limited to a non-volatile memory like a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a portable read-only memory (Compact Disc Read-Only Memory, CD-ROM). The memory is any storage medium that can be used to carry or store program code in a form of an instruction or a data structure and that can be read and/or written by a computer (for example, the communication apparatus shown in this application), but is not limited thereto. The memory in embodiments of this application may alternatively be a circuit or any other apparatus that can implement a storage function, and is configured to store the program instructions and/or the data.

The processor 1820 is mainly configured to: process a communication protocol and communication data, control the entire communication apparatus, execute a software program, and process data of the software program. The memory 1830 is mainly configured to store the software program and the data. The transceiver 1810 may include a control circuit and an antenna. The control circuit is mainly configured to: perform conversion between a baseband signal and a radio frequency signal, and process the radio frequency signal. The antenna is mainly configured to receive/send a radio frequency signal in a form of an electromagnetic wave. An input/output apparatus like a touchscreen, a display, or a keyboard is mainly configured to: receive data input by a user and output data to the user.

After the communication apparatus is powered on, the processor 1820 may read the software program from the memory 1830, interpret and execute instructions of the software program, and process the data of the software program. When data needs to be sent wirelessly, the processor 1820 performs baseband processing on the to-be-sent data, and then outputs a baseband signal to a radio frequency circuit. The radio frequency circuit performs radio frequency processing on the baseband signal, and then sends, through the antenna, a radio frequency signal in a form of an electromagnetic wave. When data is sent to the communication apparatus, the radio frequency circuit receives a radio frequency signal through the antenna, converts the radio frequency signal into a baseband signal, and outputs the baseband signal to the processor 1820. The processor 1820 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

The communication apparatus shown in this embodiment of this application may alternatively have more components and the like than those in FIG. 18. This is not limited in embodiments of this application. The methods performed by the processor and the transceiver shown above are merely examples. For specific steps performed by the processor and the transceiver, refer to the methods described above.

In another possible implementation, in the communication apparatus shown in FIG. 17, the processing module 1701 may be one or more logic circuits, and the transceiver module 1702 may be an input/output interface, or may be referred to as a communication interface, an interface circuit, an interface, or the like. Alternatively, the transceiver module 1702 may be a sending module and a receiving module. The sending module may be an output interface, and the receiving module may be an input interface. The sending module and the receiving module are integrated into one module, for example, an input/output interface. As shown in FIG. 19, a communication apparatus shown in FIG. 19 includes a logic circuit 1901 and an interface 1902. The processing module 1701 may be implemented by using the logic circuit 1901, and the transceiver module 1702 may be implemented by using the interface 1902. The logic circuit 1901 may be a chip, a processing circuit, an integrated circuit, a system on chip (system on chip, SoC) chip, or the like. The interface 1902 may be a communication interface, an input/output interface, a pin, or the like. For example, FIG. 19 shows an example in which the communication apparatus is a chip. The chip includes the logic circuit 1901 and the interface 1902. For example, the chip may also include a memory.

In embodiments of this application, the logic circuit and the interface may be coupled to each other. A specific manner of connection between the logic circuit and the interface is not limited in embodiments of this application. For example, the logic circuit 1901 may be configured to perform a function or a step implemented by the processing module 1701 shown in FIG. 17, and the interface 1902 may be configured to perform a function or a step implemented by the transceiver module 1702 shown in FIG. 17. For specific descriptions of the logic circuit 1901 and the interface 1902, refer to FIG. 17 or the method embodiments shown above. Details are not described herein again.

The communication apparatus shown in embodiments of this application may implement the methods provided in embodiments of this application in a form of hardware, or may implement the methods provided in embodiments of this application in a form of software. This is not limited in embodiments of this application.

In the foregoing embodiments, for specific descriptions of terms, steps, or the like, refer to the descriptions in the foregoing method embodiments. Details are not described herein again. For specific implementations of embodiments shown in FIG. 19, refer to the foregoing embodiments. Details are not described herein again.

An embodiment of this application further provides a communication system. The communication system includes a first communication apparatus and a second communication apparatus. The first communication apparatus and the second communication apparatus may be configured to perform the method in any one of the foregoing embodiments.

An embodiment of this application provides a communication system. The communication system includes a MAP sensing measurement initiator and a MAP sensing measurement responder. The MAP sensing measurement initiator and the MAP sensing measurement responder may be configured to perform the methods in the foregoing related embodiments.

An embodiment of this application provides a communication system. The communication system includes a first communication apparatus and a second communication apparatus. The first communication apparatus and the second communication apparatus are configured to perform the methods in the foregoing related embodiments.

An embodiment of this application provides a communication system. The communication system includes a MAP SBP initiator and a MAP SBP responder. The MAP SBP initiator and the MAP SBP responder are configured to perform the methods in the foregoing related embodiments.

An embodiment of this application provides a communication system. The communication system includes a third communication apparatus and a fourth communication apparatus. The third communication apparatus and the fourth communication apparatus are configured to perform the methods in the foregoing related embodiments.

An embodiment of this application provides a communication system. The communication system includes a sensing measurement initiator and a sensing measurement responder. The sensing measurement initiator and the sensing measurement responder are configured to perform the methods in the foregoing related embodiments.

An embodiment of this application provides a communication system. The communication system includes a fifth communication apparatus and a sixth communication apparatus. The fifth communication apparatus and the sixth communication apparatus are configured to perform the methods in the foregoing related embodiments.

In addition, this application further provides a computer program. The computer program is used to implement operations and/or processing performed by any communication apparatus device in the methods provided in this application.

This application further provides a computer-readable storage medium. The computer-readable storage medium stores computer code. When the computer code is run on a computer, the computer is enabled to perform operations and/or processing performed by any communication apparatus device in the methods provided in this application.

This application further provides a computer program product. The computer program product includes computer code or a computer program. When the computer code or the computer program is run on a computer, operations and/or processing performed by any communication apparatus device in the methods provided in this application are/is performed.

In the several embodiments provided in this application, it should be understood that the disclosed systems, apparatuses, and methods may be implemented in other manners. For example, the described apparatus embodiments are merely examples. For example, division into the modules is merely logical function division. During actual implementation, there may be another division manner. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The modules described as separate parts may or may not be physically separate, and parts displayed as modules may or may not be physical modules, and may be located in one position, or may be distributed on a plurality of network modules. A part or all of the modules may be selected based on an actual requirement to achieve technical effect of the solutions provided in embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

When the integrated module is implemented in the form of a software functional module and sold or used as an independent product, the integrated module may be stored in a computer-readable storage medium. Based on such an understanding, the technical solutions of this application essentially, or the part contributing to the conventional technologies, or all or a part of the technical solutions may be implemented in a form of a software product. The computer software product is stored in a readable storage medium and includes several instructions for instructing a computer device (which may be a personal computer, a server, a network device, or the like) to perform all or a part of the steps of the methods described in embodiments of this application. The foregoing readable storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A sensing communication method, wherein the method comprises:
sending, by a multi-access point MAP sensing measurement initiator, a first request frame to a MAP sensing measurement responder, wherein the first request frame is used to request to initiate a MAP sensing measurement session, the first request frame comprises a multi-access point MAP measurement session identifier ID, and the MAP measurement session ID identifies the MAP sensing measurement session initiated by the MAP sensing measurement initiator; and
receiving, by the MAP sensing measurement initiator, a first response frame that responds to the first request frame, wherein the first response frame comprises the MAP measurement session ID.

2. The method according to claim 1, wherein the first response frame further comprises a decline duration field, and the decline duration field is used by the MAP sensing measurement responder to indicate the MAP sensing measurement initiator not to initiate a MAP sensing measurement session within duration indicated by the decline duration field.

3. The method according to claim 1 or 2, wherein the first request frame further comprises a parameter that is for the MAP sensing measurement responder to perform a sensing measurement session of the MAP sensing measurement session and that is recommended by the MAP sensing measurement initiator.

4. The method according to any one of claims 1 to 3, wherein before sending, by the MAP sensing measurement initiator, the first request frame to the MAP sensing measurement responder, the method further comprises:
receiving, by the MAP sensing measurement initiator, a second request frame from a MAP sensing by proxy SBP initiator, wherein the second request frame is used to request the MAP sensing measurement initiator to initiate the MAP sensing measurement session; and
sending, by the MAP sensing measurement initiator, a second response frame that responds to the second request frame, wherein the second response frame comprises the MAP measurement session ID.

5. The method according to any one of claims 1 to 4, wherein the method further comprises:
sending, by the MAP sensing measurement initiator, a third request frame to a sensing measurement responder, wherein the third request frame comprises the MAP measurement session ID and a medium access control MAC address of the MAP sensing measurement initiator; and
receiving, by the MAP sensing measurement initiator, a third response frame that responds to the third request frame.

6. The method according to any one of claims 1 to 4, wherein the method further comprises:
sending, by the MAP sensing measurement initiator, a third request frame to a sensing measurement responder, wherein the third request frame comprises a number of APs participating in the MAP sensing measurement session, a MAC address of each AP participating in the MAP sensing measurement session, and a measurement session ID of a sensing measurement session initiated by the MAP sensing measurement initiator; and
receiving, by the MAP sensing measurement initiator, a third response frame that responds to the third request frame.

7. The method according to claim 6, wherein a MAC address of the MAP sensing measurement initiator is located in a predetermined field in the MAC address of each AP participating in the MAP sensing measurement session.

8. The method according to any one of claims 1 to 7, wherein the method further comprises:
sending, by the MAP sensing measurement initiator, a termination frame to the MAP sensing measurement responder, or receiving, by the MAP sensing measurement initiator, a termination frame from the MAP sensing measurement responder, wherein
the termination frame comprises a terminate all MAP measurement sessions field and a MAP measurement session ID field, a value of the terminate all MAP measurement sessions field being a first value indicates to terminate all MAP sensing measurement sessions between the MAP sensing measurement initiator and the MAP sensing measurement responder, and the value of the terminate all MAP measurement sessions field being a second value indicates to terminate a MAP sensing measurement session that is identified by the MAP measurement session ID field and that is between the MAP sensing measurement initiator and the MAP sensing measurement responder.

9. The method according to any one of claims 1 to 8, wherein the method further comprises:
sending, by the MAP sensing measurement initiator, a termination frame to the MAP SBP initiator, or receiving, by the MAP sensing measurement initiator, a termination frame from the MAP SBP initiator, wherein
the termination frame comprises a terminate all MAP sensing by proxy SBP procedures field and a MAP measurement session ID field, a value of the terminate all MAP SBP procedures field being a first value indicates to terminate all MAP SBP procedures between the MAP sensing measurement initiator and the MAP SBP initiator, and the value of the terminate all MAP SBP procedures field being a second value indicates to terminate a MAP SBP procedure corresponding to a MAP sensing measurement session that is identified by the MAP measurement session ID field and that is initiated by the MAP SBP initiator.

10. The method according to any one of claims 1 to 9, wherein the method further comprises:
sending, by the MAP sensing measurement initiator, a termination frame to the sensing measurement responder, or receiving, by the MAP sensing measurement initiator, a termination frame from the sensing measurement responder, wherein
the termination frame comprises a measurement session ID field and a MAP field, a value of the MAP field being a first value indicates to terminate a MAP sensing measurement session corresponding to a sensing measurement session identified by the measurement session ID field, and the value of the MAP field being a second value indicates to terminate the sensing measurement session identified by the measurement session ID field; or
the termination frame comprises a terminate all measurement sessions field and a MAP field, a value of the terminate all measurement sessions field being a first value and a value of the MAP field being a first value indicate to terminate a MAP sensing measurement session corresponding to all sensing measurement sessions between the MAP sensing measurement initiator and the sensing measurement responder, and the value of the terminate all measurement sessions field being the first value and the value of the MAP field being a second value indicate to terminate all the sensing measurement sessions between the MAP sensing measurement initiator and the sensing measurement responder.

11. The method according to claim 10, wherein the termination frame further comprises at least one of the following: the MAC address of the MAP sensing measurement initiator and the MAP measurement session ID.

12. The method according to any one of claims 1 to 11, wherein the method further comprises:
sending, by the MAP sensing measurement initiator, a control frame, wherein
the control frame comprises the MAC address of the MAP sensing measurement initiator, a termination field, the MAP measurement session ID field, and a MAC address of the MAP sensing measurement responder, and a value of the termination field being a first value indicates to terminate a sensing measurement session that is of the MAP sensing measurement responder and that is in a MAP sensing measurement session identified by the MAP measurement session ID field and initiated by the MAP sensing measurement initiator.

13. A sensing communication method, wherein the method comprises:
receiving, by a multi-access point MAP sensing measurement responder, a first request frame from a MAP sensing measurement initiator, wherein the first request frame is used to request to initiate a MAP sensing measurement session, the first request frame comprises a multi-access point MAP measurement session identifier ID, and the MAP measurement session ID identifies the MAP sensing measurement session initiated by the MAP sensing measurement initiator; and
sending, by the MAP sensing measurement responder, a first response frame that responds to the first request frame, wherein the first response frame comprises the MAP measurement session ID.

14. The method according to claim 13, wherein the first response frame further comprises a decline duration field, and the decline duration field is used by the MAP sensing measurement responder to indicate the MAP sensing measurement initiator not to initiate a MAP sensing measurement session within duration indicated by the decline duration field.

15. The method according to claim 13 or 14, wherein the first request frame further comprises a parameter that is for the MAP sensing measurement responder to perform a sensing measurement session of the MAP sensing measurement session and that is recommended by the MAP sensing measurement initiator.

16. The method according to any one of claims 13 to 15, wherein the method further comprises:
sending, by the MAP sensing measurement responder, a third request frame to a sensing measurement responder, wherein the third request frame comprises the MAP measurement session ID and a medium access control MAC address of the MAP sensing measurement initiator; and
receiving, by the MAP sensing measurement responder, a third response frame that responds to the third request frame.

17. The method according to any one of claims 13 to 15, wherein the method further comprises:
sending, by the MAP sensing measurement responder, a third request frame to a sensing measurement responder, wherein the third request frame comprises a number of APs participating in the MAP sensing measurement session, a MAC address of each AP participating in the MAP sensing measurement session, and a measurement session ID of a sensing measurement session initiated by the MAP sensing measurement responder; and
receiving, by the MAP sensing measurement responder, a third response frame that responds to the third request frame.

18. The method according to claim 17, wherein a MAC address of the MAP sensing measurement initiator is located in a predetermined field in the MAC address of each AP participating in the MAP sensing measurement session.

19. The method according to any one of claims 13 to 18, wherein the method further comprises:
receiving, by the MAP sensing measurement responder, a termination frame from the MAP sensing measurement initiator, or sending, by the MAP sensing measurement responder, the termination frame to the MAP sensing measurement initiator, wherein
the termination frame comprises a terminate all MAP measurement sessions field and a MAP measurement session ID field, a value of the terminate all MAP measurement sessions field being a first value indicates to terminate all MAP sensing measurement sessions between the MAP sensing measurement initiator and the MAP sensing measurement responder, and the value of the terminate all MAP measurement sessions field being a second value indicates to terminate a MAP sensing measurement session that is identified by the MAP measurement session ID field and that is between the MAP sensing measurement initiator and the MAP sensing measurement responder.

20. The method according to any one of claims 13 to 19, wherein the method further comprises:
receiving, by the MAP sensing measurement responder, a termination frame from the sensing measurement responder, or sending, by the MAP sensing measurement responder, the termination frame to the sensing measurement responder, wherein
the termination frame comprises a measurement session ID field and a MAP field, a value of the MAP field being a first value indicates to terminate a MAP sensing measurement session corresponding to a sensing measurement session identified by the measurement session ID field, and the value of the MAP field being a second value indicates to terminate the sensing measurement session identified by the measurement session ID field; or
the termination frame comprises a terminate all measurement sessions field and a MAP field, a value of the terminate all measurement sessions field being a first value and a value of the MAP field being a first value indicate to terminate a MAP sensing measurement session corresponding to all sensing measurement sessions between the MAP sensing measurement responder and the sensing measurement responder, and the value of the terminate all measurement sessions field being the first value and the value of the MAP field being a second value indicate to terminate all the sensing measurement sessions between the MAP sensing measurement responder and the sensing measurement responder.

21. The method according to claim 20, wherein the termination frame further comprises at least one of the following: the MAC address of the MAP sensing measurement initiator and the MAP measurement session ID.

22. The method according to any one of claims 13 to 21, wherein the method further comprises:
sending, by the MAP sensing measurement responder, a control frame, wherein
the control frame comprises the MAC address of the MAP sensing measurement initiator, a termination field, the MAP measurement session ID field, and a MAC address of the MAP sensing measurement responder, and a value of the termination field being a first value indicates to terminate a sensing measurement session that is of the MAP sensing measurement responder and that is in a MAP sensing measurement session identified by the MAP measurement session ID field and initiated by the MAP sensing measurement initiator.

23. A sensing communication method, wherein the method comprises:
sending, by a multi-access point MAP sensing by proxy SBP initiator, a second request frame to a MAP SBP responder, wherein the second request frame is used to request the MAP SBP responder to initiate a multi-access point MAP sensing measurement session; and
receiving, by the MAP SBP responder, a second response frame that responds to the second request frame, wherein the second response frame comprises a MAP measurement session identifier ID of the MAP sensing measurement session, and the MAP measurement session ID identifies the MAP sensing measurement session initiated by the MAP SBP responder.

24. A sensing communication method, wherein the method comprises:
receiving, by a multi-access point MAP sensing by proxy SBP responder, a second request frame from a MAP SBP initiator, wherein the second request frame is used to request the MAP SBP responder to initiate a multi-access point MAP sensing measurement session; and
sending, by the MAP SBP responder, a second response frame that responds to the second request frame, wherein the second response frame comprises a MAP measurement session identifier ID of the MAP sensing measurement session, and the MAP measurement session ID identifies the MAP sensing measurement session initiated by the MAP SBP responder.

25. The method according to claim 24, wherein the method further comprises:
sending, by the MAP SBP responder, a first request frame to a MAP sensing measurement responder, wherein the first request frame is used to request to initiate the MAP sensing measurement session, and the first request frame comprises the MAP measurement session ID; and
receiving, by the MAP SBP responder, a first response frame of the first request frame, wherein the first response frame comprises the MAP measurement session ID.

26. A sensing communication method, wherein the method comprises:
receiving, by a sensing measurement responder, a third request frame from a sensing measurement initiator, wherein the third request frame comprises a multi-access point MAP measurement session identifier ID and a medium access control MAC address of a MAP sensing measurement initiator, and the MAP measurement session ID identifies a MAP sensing measurement session; and
sending, by the sensing measurement responder, a third response frame that responds to the third request frame to the sensing measurement initiator.

27. The method according to claim 26, wherein the sensing measurement initiator is the MAP sensing measurement initiator, or the sensing measurement initiator is a MAP sensing measurement responder.

28. The method according to claim 26 or 27, wherein the third response frame comprises the MAP measurement session ID.

29. A sensing communication method, wherein the method comprises:
receiving, by a sensing measurement responder, a third request frame from a sensing measurement initiator, wherein the third request frame comprises a number of APs participating in a multi-access point MAP sensing measurement session, a medium access control MAC address of each AP participating in the MAP sensing measurement session, and a measurement session ID of a sensing measurement session initiated by the sensing measurement initiator; and
sending, by the sensing measurement responder, a third response frame that responds to the third request frame to the sensing measurement initiator.

30. The method according to claim 29, wherein the sensing measurement initiator is the MAP sensing measurement initiator, or the sensing measurement initiator is a MAP sensing measurement responder.

31. The method according to claim 29 or 30, wherein the third response frame comprises the number of APs participating in the MAP sensing measurement session, the medium access control MAC address of each AP participating in the MAP sensing measurement session, and the measurement session ID of the sensing measurement session initiated by the sensing measurement initiator.

32. A communication apparatus, comprising a module configured to perform the method according to any one of claims 1 to 31.

33. A communication apparatus, comprising a processor, wherein the processor is configured to perform the method according to any one of claims 1 to 31.

34. The communication apparatus according to claim 33, wherein the communication apparatus further comprises a transceiver, and the transceiver is configured to receive a signal or send a signal.

35. The communication apparatus according to claim 33, wherein the communication apparatus comprises a chip.

36. The communication apparatus according to claim 34, wherein the communication apparatus comprises a sensing device.

37. A communication apparatus, comprising a logic circuit and an interface, wherein the logic circuit is coupled to the interface; and
the interface is configured to input and/or output information, and the logic circuit is configured to perform the method according to any one of claims 1 to 31.

38. A computer-readable storage medium, wherein the computer-readable storage medium is configured to store a computer program, and when the computer program is executed, the method according to any one of claims 1 to 31 is performed.

39. A computer program product, wherein the computer program product comprises a computer program, and when the computer program is executed, the method according to any one of claims 1 to 31 is performed.

40. A communication system, comprising a MAP sensing measurement initiator and a MAP sensing measurement responder, wherein the MAP sensing measurement initiator is configured to perform the method according to any one of claims 1 to 12, and the MAP sensing measurement responder is configured to perform the method according to any one of claims 13 to 22.

41. A communication system, comprising a MAP SBP initiator and a MAP SBP responder, wherein the MAP SBP initiator is configured to perform the method according to claim 23, and the MAP SBP responder is configured to perform the method according to claim 24 or 25.
